(19) Europäisches Patentamt

European Patent Office

Office européen des brevets

(11) **EP 1 232 480 B1**

(12) **EUROPEAN PATENT SPECIFICATION**

(45) Date of publication and mention
of the grant of the patent:
**17.05.2006 Bulletin 2006/20**

(21) Application number: **00977711.1**

(22) Date of filing: **23.11.2000**

(51) Int Cl.:
**G06T 7/00** (2006.01)

(86) International application number:
**PCT/GB2000/004469**

(87) International publication number:
**WO 2001/039124 (31.05.2001 Gazette 2001/22)**

(54) **IMAGE PROCESSING APPARATUS**

BILDVERARBEITUNGSGERÄT

APPAREIL DE TRAITEMENT D'IMAGE

(84) Designated Contracting States:
**DE FR GB**

(30) Priority: **23.11.1999 GB 9927678**
**25.05.2000 GB 0012812**

(43) Date of publication of application:
**21.08.2002 Bulletin 2002/34**

(73) Proprietor: **CANON KABUSHIKI KAISHA**
**Tokyo (JP)**

(72) Inventors:
• **TAYLOR, Richard Ian,**
**Canon Res. Centre Europe Ltd**
**Berkshire RG12 2XH (GB)**
• **KIRK, Richard Antony**
**Redbourn,**
**Herts AL3 7NL (GB)**
• **BAUMBERG, Adam Michael,**
**Canon Res. Ctr Europe Ltd**
**Bracknell,**
**Berkshire RG12 2XH (GB)**
• **LYONS, Alexander Ralph,**
**Canon Res. Ctr Europe Ltd**
**Bracknell,**
**Berkshire RG12 2XH (GB)**
• **DAVISON, Allan Joseph,**
**Canon Res. Ctr Europe Ltd**
**Bracknell,**
**Berkshire RG12 2XH (GB)**

(74) Representative: **Kennington, Eric Alasdair et al**
**BERESFORD & Co.**
**16 High Holborn**
**London WC1V 6BX (GB)**

(56) References cited:
**WO-A-98/18117**          **US-A- 5 960 125**

EP 1 232 480 B1

## Description

The present invention relates to the processing of image data to determine the position and orientation at which the images were recorded. More particularly, the present invention relates to computer processing of image data to determine the imaging positions and orientations on the basis of a calibration object's pattern in the images.

A number of applications require the image recording position and orientation of an imaging device to be known. Such applications include the generation of a three-dimensional computer model of an object from images of the object.

In one known method to provide this information, the positions and orientations are calculated after the images of the object have been recorded, by processing the images to match features on the object in the different images, and to calculate the position and orientation of each image in dependence upon the respective positions of the matching features in the image. This approach suffers from the problem, however, that the accuracy of the calculated positions and orientations is highly dependent upon the features being matched correctly in the images. However, in many cases, this cannot be achieved, for example if the object has a number of features which are indistinguishable from each other.

In other known methods, the positions and orientations at which images are to be recorded are determined before any images of the object are actually recorded.

For example, in one known method, multiple cameras are held in fixed, known positions and orientations on a rig. This provides highly accurate position and orientation data, but is both expensive and inflexible, requiring more than one camera together with a calibrated rig, and not allowing the user freedom to choose the imaging positions in dependence upon the size and nature of the object.

To address the problem of inflexibility in the system above, it is known, for example from "Calibrating and 3D Modelling with a Multi-Camera System" by Wiles and Davison in 1999 IEEE Workshop on Multi-View Modelling and Analysis of Visual Scenes, ISBN 0769501109, to arrange a number of cameras in desired, but fixed, positions and orientations (for example on tripods). Images of a calibration object having features arranged in a known configuration are then recorded and an image from each camera is processed to calculate the position and orientation of the camera on the basis of the positions in the image of the features on the calibration object. The calibration object is then replaced with the actual object to be imaged. In this way, features on the calibration object do not get confused with features on the actual object when calculating the positions and orientations.

The same method can be used with a single camera by placing the camera in a fixed position, recording an image of the calibration object, recording an image of the actual object, and processing the image of the calibration object to determine the position and orientation of the camera, this being repeated for each new desired position and orientation of the camera.

This method suffers from the problem, however, that at least two images must be recorded for each position and orientation of the camera (one of the calibration object and one of the actual object), and the camera must remain stationary for the recording of these images.

One way to address this problem is to record a single image for each required recording position and orientation showing both a calibration object and the actual object, to process the image to distinguish features representing features on the calibration object from features representing features on the actual object, and to calculate the position and orientation at which the image was recorded using the features representing features on the calibration object.

"Automatic Reconstruction of 3D Objects Using a Mobile Camera" by Niem in Image and Vision Computer 17 (1999) pages 125-134, discloses the simultaneous acquisition in an image of the object and a calibration pattern placed below the object. The calibration pattern is rotationally symmetric, consisting of two concentric circles connected by radial line segments with known dimensions, and position markers in each quadrant. To determine the positions in the image of calibration points on the calibration pattern, first, the calibration pattern is separated from the object and background in the image, and, second, the extracted calibration pattern is processed to find the calibration points. More particularly, the extracted calibration pattern is processed to calculate analytically the positions in the image of the intersection of the projected radial line segments and the two ellipses (resulting from the circles in the calibration pattern). This method suffers from a number of problems, however. In particular, the processing is computationally expensive and/or time consuming, requiring the image data relating to the object to be separated from the image data relating to the calibration pattern and requiring the parameters of the line segments and the two ellipses (which will no longer be concentric in the image) to be estimated. Further, for the method to succeed, an arc of $120°$ of each ellipse must be visible in the image and at least one position marker and its two neighbouring line segments have to be detected.

"The Lumigraph" by Gortler et al in Computer Graphics Proceedings, Annual Conference Series, 1996 ACM-0-89791-746-4/96/008, discloses a method to estimate the pose (a rigid rotation and translation) of a camera by recording an image of the required object on a calibration stage. The stage has two walls fixed together at a right angle, and a base that can be detached from the walls and rotated in $90°$ increments. Markers, each of which consists of several concentric rings, are distributed along the sides and base of the stage. To locate the markers in the image for pose estimation, the image is processed to identify connected components with similar centres of gravity. Then, the ratio of radii in each marker is used to uniquely identify the marker. This method, too, suffers from a number of problems, however. In particular, the identification of markers requires radii of circles to be calculated, which can be inaccurate, especially for oblique camera poses, resulting in mis-identification of markers. Further, the use of a number of circles to make up each marker requires a marker to be large, increasing the chance that at least part of the marker will be obscured by the object and thus preventing the marker from being identified. In addition, each marker provides only one point (the centre of the concentric circles) for use in calculating the camera pose, and the accuracy with which the position of this point can be determined in the image is limited since, as noted "Automatic Reconstruction of 3D Objects Using a Mobile Camera" mentioned above, the circles will not have the same centre in the image due to perspective projection. The accuracy of the calculated camera pose will therefore be reduced.

JP-A-9-170914 discloses a method to calculate image-pickup parameters and to generate a 3D computer model of an object by imaging the object together with a planar calibration object. The calibration object has a pattern of coloured dots, with each dot having a different hue/brightness combination so that each respective dot is unique. The positional relationship between the dots is known, and by identifying the dots in an image showing the object and calibration object, the image-pickup parameters for the image are calculated and a 3D computer model of the object is generated. This method too suffers from a number of problems, however. In particular, it is difficult to distinguish in an image between respective dots on the calibration object due to the large number of dots and the small differences in hue/brightness therebetween. Further, it is often impossible to determine whether a particular feature in an image is a dot on the calibration object or a feature on the object to be modelled because features on the object to be modelled often have the same hue/brightness properties as spots on the calibration object.

WO 98/18117 discloses a machine vision method which analyses a calibration target of the type having two or more regions, each having a "imageable characteristic", e.g., a different colour, contrast, or brightness, from its neighbouring region(s). Each region has at least two edges - referred to as "adjoining edges" - that are linear and that are directed toward and, optionally meet at, a reference point (e.g., the centre of the target or some other location of interest). The method includes generating an image of the target, identifying in the image features corresponding to the adjoining edges, fitting lines to those edges, and determining the orientation and/or position of the target from those lines.

US 5,960,125 discloses a method for determining a calibration relationship between a reference frame of motion of an object and a reference frame of a camera that generates images of the object. The method includes the steps of coupling a target to an object and placing the object at each of plural locations and orientations that are known with respect to the motion reference frame of the object. The location of the target(s) with respect to the object need not be known. An image of the object and target is generated while the object is at each of those locations/orientations. From each those images, the method determines the location/orientation of the target with respect to the reference frame of the camera. The method then calls for determining the calibration relationship between the reference frame of motion of the object and the camera reference frame as a function of the locations/orientations of the object with respect to the motion reference frame of the object and the locations/orientations of the target in the corresponding images with respect to the reference frame of the camera.

According to the present invention, there is provided an image processing apparatus as set out in claim 1.

The present invention also provides an image processing method as set out in claim 19.

The present invention further provides a storage device storing computer program instructions as set out in claim 45.

The present invention further provides a signal conveying computer program instructions as set out in claim 46.

optional features are set out in the other claims.

The present invention aims to address one or more of the problems above.

In an embodiment, there is provided an image processing system or method in which a subject object is imaged at the same time as a calibration object, and each image is processed to determine the position and orientation at which it was recorded. The calibration object has a pattern comprising features, and at least some of the features are grouped into clusters such that the features in a cluster satisfy at least two relationships. In processing data for an image, features in the image representing the features on the calibration object are distinguished from features in the image representing features on the subject object using the different relationships between the features in the clusters.

These elements provide reliable detection of calibration pattern features in the images and enable the positions and orientations of the images to be calculated accurately- The reliability arises because the clustering of the features can be used to distinguish features in an image representing features on the calibration object from other features.

Each feature defines a respective position on the calibration object, and a one-to-one correspondence between each feature in an image and the calibration object is defined. This provides a large number of correspondences with which to calculate the imaging position and orientation, thereby improving accuracy.

To make detection in an image easier, some of the features on the calibration object may be visually substantially identical.

The one-to-one correspondences between features in an image and features on the calibration object may be arbitrarily assigned and tested and these steps repeated a plurality of tunes to determine the correct correspondences. Alternatively, the calibration object may be arranged such that some of the features and/or some of the clusters are visually distinguishable from the others, and the one-to-one correspondences may be assigned by calculation following detection of the distinguishable features/clusters in the image.

When an image is processed, processing may be performed to group features in the image into clusters having the same predetermined number of features in each cluster.

The pattern on the calibration object may be provided such that at least some clusters comprise a predetermined number of features arranged on lines, and this relationship may be used to postulate which features in an image represent features on the calibration object by grouping the detected features in an image into clusters satisfying the relationship. The postulated clusters may then be tested to determine which ones contain features satisfying a second relationship, for example that the features are evenly spaced on the straight line. In this way, clusters in the image corresponding to clusters on the calibration object can be distinguished from other clusters (for example clusters of features on the subject object). Thus, two relationships based on the position of the features are used in this processing, that is, two relationships of the same type are used.

However, two relationships of different types may be used. For example the calibration object may be provided such that at least some clusters comprise a predetermined number of features arranged to provide a first relationship such that the distance between any two features in a given cluster is less than the distance between a feature in the given cluster and a feature in a different cluster (that it a positional relationship), and a second relationship such that the size of each feature in a given cluster is substantially the same (that is, a size relationship). Processing to generate clusters of features in an image based on the first relationship may be performed by determining, for each given feature detected in the image, a predetermined number of features in the image to form a cluster therewith for which the sum of the respective distances between each pair of features in the cluster is less than the sum of the respective distances between each pair of features in a cluster comprising the given feature and the predetermined number of any other features.

The calibration object may take the form of a two-dimensional photographic mat, or may be a three-dimensional object, such as a cube.

Embodiments of the invention will now be described, by way of example only, with reference to the accompanying drawings, in which:

Figure 1 schematically shows the components of a first embodiment of the invention, together with the notional functional processing units into which the processing apparatus component may be thought of as being configured when programmed by programming instructions;

Figure 2 shows the processing operations performed by the processing apparatus in Figure 1 to generate a photographic mat;

Figure 3 shows the pattern on a photographic mat in the first embodiment;

Figure 4a and Figure 4b illustrate the recording of images of an object on the photographic mat;

Figures 5a, 5b, 5c and 5d illustrate images of the object on a photographic mat which are input to the processing apparatus in Figure 1;

Figure 6 shows the processing operations performed by the processing apparatus in Figure 1 to process input data;

Figure 7 shows the processing operations performed at step S14 in Figure 6;

Figure 8 shows the processing operations performed in the first embodiment at step S32 in Figure 7;

Figure 9 shows the processing operations performed in the first embodiment at step S34 in Figure 7;

Figures 10a, 10b, 10c, 10d, 10e and 10f illustrate the processing performed at steps S74 to S82 in Figure 9;

Figure 11 illustrates the processing performed at steps S116 to S120 in Figure 9;

Figure 12 shows the processing operations performed in the first embodiment at step S36 in Figure 7;

Figure 13 shows the processing operations performed at step S140 in Figure 12;

Figures 14a and 14b illustrate the processing performed at steps S164 and S166 in Figure 13;

Figure 15 shows the processing operations performed at step S142 in Figure 12;

Figure 16 shows the processing operations performed at step S146 in Figure 12;

Figure 17 illustrates the processing performed at step S208 and S226 in Figure 16;

Figure 18 shows the processing operations performed in the first embodiment at step S38 in Figure 7;

Figure 19 shows the processing operations performed at step S16 in Figure 6;

Figure 20 shows the pattern on a photographic mat in a second embodiment;

Figure 21 shows the processing operations performed in the second embodiment at step S36 in Figure 7;

Figure 22 shows the processing operations performed at step S406 in Figure 21;

Figure 23 shows the pattern on a photographic mat in a third embodiment;

Figure 24 shows the processing operations performed in the third embodiment at step S32 in Figure 7;

Figure 25 shows the processing operations performed in the third embodiment at step S36 in Figure 7;

Figure 26 shows the processing operations performed at step S536 in Figure 25;

Figure 27 shows the pattern on a photographic mat in a fourth embodiment;

Figure 28 shows the processing operations performed in the fourth embodiment at step S36 in Figure 7;

Figure 29 shows the pattern on a photographic mat in a fifth embodiment;

Figure 30 shows the processing operations performed in the fifth embodiment at step S36 in Figure 7;

Figure 31 shows the pattern on a photographic mat in a sixth embodiment;

Figure 32 shows the processing operations performed in the sixth embodiment at step S34 in Figure 7;

Figure 33a illustrates the processing performed at step S804 in Figure 32;

Figure 33b shows the distances between the centres of features used to calculate the cross-ratio at step S808 in Figure 32;

Figure 34 shows the processing operations performed in the sixth embodiment at step S804 in Figure 32;

Figure 35 shows the processing operations performed in the sixth embodiment at step S36 in Figure 7;

Figure 36 shows the pattern on a photographic mat in a seventh embodiment;

Figure 37 shows the pattern on a photographic mat in an eighth embodiment;

Figure 38 shows the processing operations performed in the eighth embodiment at steps S32 and S34 in Figure 7;

Figure 39 shows the processing operations performed in the eighth embodiment at step S36;

Figure 40 shows the pattern on a photographic mat in a ninth embodiment;

Figure 41 shows the processing operations performed in the ninth embodiment at step S32 and S34 in Figure 7;

Figure 42 shows the processing operations performed in the ninth embodiment at step S36 in Figure 7;

Figure 43 shows the pattern on a photographic mat in a tenth embodiment;

Figure 44 shows the processing operations performed in the tenth embodiment at steps S36 and S38 in Figure 7;

Figure 45 shows the pattern on a photographic mat in an eleventh embodiment;

Figure 46 shows the processing operations performed in the eleventh embodiment at step S34 in Figure 7;

Figures 47a and 47b illustrate the processing performed at steps S1200 and S1202 in Figure 46;

Figure 48 shows the processing operations performed in the eleventh embodiment at step S36 in Figure 7;

Figure 49 shows the pattern on a photographic mat in a first alternative embodiment;

Figure 50 shows the pattern on a photographic mat in a second alternative embodiment;

Figure 51 illustrates how a pattern may be printed on separate sheets which are then assembled to form a photographic mat;

Figures 52a and 52b illustrates how patterns may be printed on separate sheets and assembled on a cube to form a three-dimensional calibration object;

Figure 53 illustrates how clusters of features in a calibration pattern may be printed on different sheets in an embodiment and the sheets arranged at user-selected positions and orientations around a subject object; and

Figure 54 shows the processing operations performed in an embodiment to process images of the subject object and calibration object in an arrangement such as that shown in Figure 53 to calculate the imaging positions and orientations.

First Embodiment

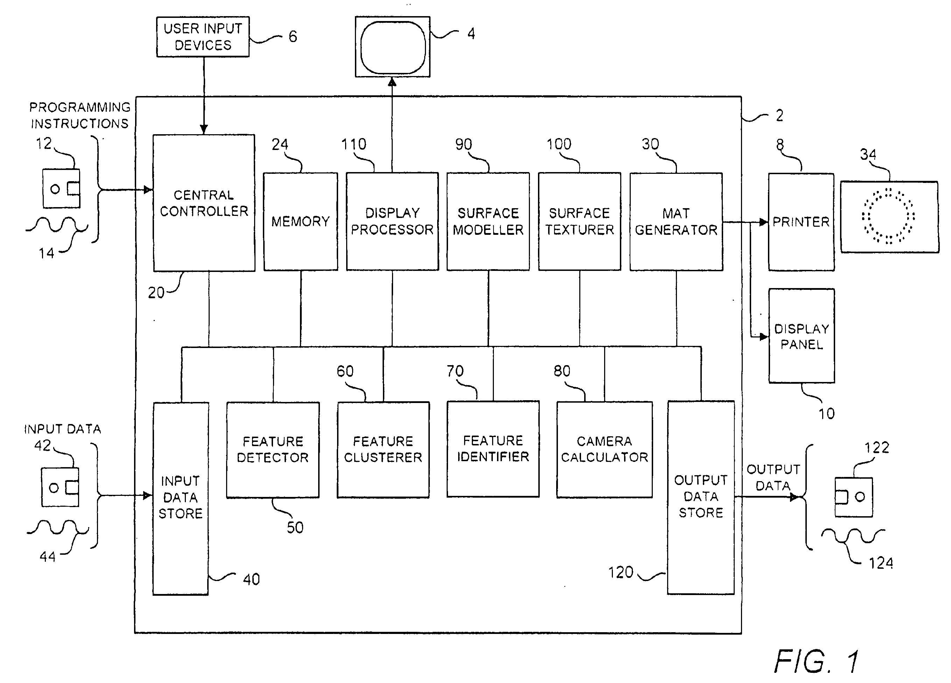

Referring to Figure 1, an embodiment of the invention comprises a processing apparatus 2, such as a personal computer, containing, in a conventional manner, one or more processors, memories, graphics cards etc., together with a display device 4, such as a conventional personal computer monitor, user input devices 6, such as a keyboard, mouse etc., a printer 8, and a display panel 10 comprising a flat panel having controllable pixels, such as the PL400 manufactured by WACOM.

The processing apparatus 2 is programmed to operate in accordance with programming instructions input, for example, as data stored on a data storage medium, such as disk 12, and/or as a signal 14 input to the processing apparatus 2, for example from a remote database, by transmission over a communication network (not shown) such as the Internet or by transmission through the atmosphere, and/or entered by a user via a user input device 6 such as a keyboard. The programming instructions for processing apparatus 2 may be provided as compiled, computer executable code or may be provided in a format (such as source code) for conversion to a compiled format.

As will be described in more detail below, the programming instructions comprise instructions to cause the processing apparatus 2 to become configured to process input data defining a plurality of images recorded at different positions and orientations of a subject object and a calibration object, the calibration object having a special calibration pattern of features thereon. The input data is processed to generate data defining the positions and orientations at which the input images were recorded by detecting and using the positions of the features of the calibration pattern in the images, and to use the calculated positions and orientations to generate data defining a three-dimensional computer model of the subject object. In this embodiment, the calibration object has the form of a two-dimensional photographic mat.

When programmed by the programming instructions, processing apparatus 2 can be thought of as being configured into a number of functional units for performing processing operations. Examples of such functional units and their interconnections are shown in Figure 1. The units and interconnections illustrated in Figure 1 are, however, notional and are shown for illustration purposes only to assist understanding; they do not necessarily represent units and connections into which the processor, memory etc. of the processing apparatus 2 become configured.

Referring to the functional units shown in Figure 1, a central controller 20 processes inputs from the user input devices 6, and also provides control and processing for the other functional units. Memory 24 is provided for use by central controller 20 and the other functional units.

Mat generator 30 generates control signals to control printer 8 or display panel 10 to print a calibration pattern on a recording medium such as a piece of paper to form a photographic mat 34, or to display the calibration pattern on display panel 10 to form a photographic mat. As will be described in more detail below, the photographic mat comprises a calibration pattern of features (in which at least some of the features are spatially grouped into clusters), and the object (s) for which a three-dimensional computer model is to be generated is placed on the printed photographic mat 34 or on the display panel 10 on which the photographic mat is displayed. Images of the object and the photographic mat are then recorded and input to the processing apparatus 2. Mat generator 30 stores data defining the calibration pattern of features printed or displayed on the photographic mat for use by processing apparatus 2 in calculating the positions and orientations at which the input images were recorded. More particularly, mat generator 30 stores data defining the calibration pattern of features together with a coordinate system relative to the pattern of features (which, in effect, defines a reference position and orientation of the photographic mat), and processing apparatus 2 calculates the positions and orientations at which the input images were recorded in the defined coordinate system (and thus relative to the reference position and orientation).

Input data store 40 stores input data input to the processing apparatus 2 for example as data stored on a storage device, such as disk 42, as a signal 44 transmitted to the processing apparatus 2, or using a user input device 6. The input data defines a plurality of images of one or more objects on the printed or displayed photographic mat recorded at different positions and orientations, and an input image showing the background against which the object (s) was imaged together with part of the photographic mat to show the background colour thereof or a different object having the same colour as the background colour of the mat. In addition, in this embodiment, the input data also includes data defining the intrinsic parameters of the camera which recorded the images, that is, the aspect ratio, focal length, principal point (the point at which the optical axis intersects the imaging plane), first order radial distortion coefficient, and skew angle (the angle between the axes on the pixel grid; because the axes may not be exactly orthogonal).

The input data defining the input images may be generated for example by downloading pixel data from a digital camera which recorded the images, or by scanning photographs using a scanner (not shown). The input data defining the intrinsic camera parameters may be input by a user using a user input device 6.

Feature detector 50 processes the input images showing the object to detect the positions in the images of the features on the photographic mat.

Feature clusterer 60 processes the features detected by feature detector 50 to group the features into clusters of features representing the clusters on the photographic mat itself.

Feature identifier 70 processes the features detected by feature detector 50 and clustered by feature clusterer 60 using information stored by mat generator 30 defining the arrangement of features on the photographic mat to identify a one-to-one correspondence between each feature in an image and a feature on the photographic mat. That is, feature identifier 70 labels each feature in an image defining the unique feature on the photographic mat to which the feature in the image corresponds.

Camera calculator 80 uses the correspondences between the features in the images and the features on the photographic mat generated by feature identifier 70 to calculate the position and orientation of the camera when each input image was recorded.

Surface modeller 90 processes the data defining the input images and the data defining the positions and orientations at which the images were recorded to generate data defining a 3D computer model representing the actual surface(s) of the object(s) in the images.

Surface texturer 100 generates texture data from the input image data for rendering onto the surface model produced by surface modeller 90.

Display processor 110, under the control of central controller 20, displays instructions to a user via display device 4. In addition, under the control of central controller 20, display processor 110 also displays images of the 3D computer model of the object from a user-selected viewpoint by processing the surface model data generated by surface modeller 90 and rendering texture data produced by surface texturer 100 onto the surface model.

Output data store 120 stores the camera positions and orientations calculated by camera calculator 80 and also the surface model and texture data therefor generated by surface modeller 90 and surface texturer 100. Central controller 20 controls the output of data from output data store 120, for example as data on a storage device, such as disk 122, or as a signal 124.

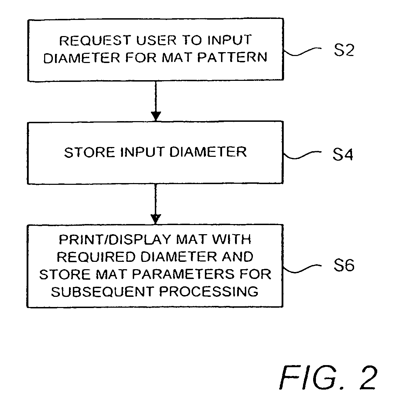

Figure 2 shows the processing operations performed by processing apparatus 2 to print, or display, a photographic mat on which to place and photograph the object(s) for which a 3D computer model is to be generated.

Referring to Figure 2, at step S2, central controller 20 causes display processor 110 to display a message on display device 4 requesting the user to input the diameter of the mat pattern that is to be printed or displayed. More particularly, in this embodiment, the features on the photographic mat are arranged in a circle around a blank central area in which the object is to be placed. Accordingly, at step S2, the user is requested to input a diameter for the blank area on the photographic mat which is larger than the maximum width in any direction of the object to be placed on the mat. In this way, a photographic mat can be printed or displayed on which the features are positioned so that they are visible when the object is placed on the mat.

At step S4, the diameter input by the user in response to the request at step S2 is stored, for example in memory 24.

At step S6, mat generator 30 prints, or displays, a photographic mat in which the mat features are arranged on a circle having the diameter input by the user, and stores data defining the diameter and the position of each feature on the mat for subsequent processing.

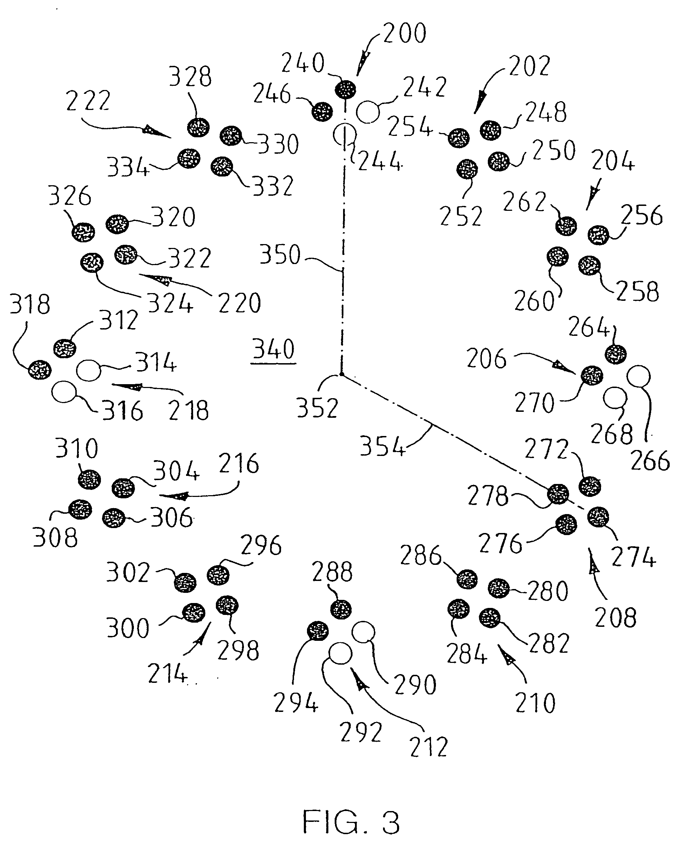

Figure 3 shows the mat pattern which is printed or displayed in this embodiment at step S6.

For the rest of the description, it will be assumed that the pattern is printed by printer 8 on a recording medium (in this embodiment, a sheet of paper) to generate a printed photographic mat 34, although, as mentioned above, the pattern could be displayed instead on display panel 10.

Referring to Figure 3, the pattern is printed on a sheet of paper of size A4 (although a sheet of paper of larger size may be used if the mat diameter stored at step S4 is sufficiently large that the pattern can not be printed on an A4 sheet). If possible, the colour of the sheet of paper on which photographic mat 34 is printed is chosen so that it is not the same as any colour on the object for which a 3D computer model is to be generated.

The pattern comprises a plurality of clusters 200-222, of which there are twelve in this embodiment. Each cluster 200-222 comprises a plurality of features 240-334 of substantially the same size, which, in this embodiment, are circles, which are spatially grouped on the mat so that the distance between the centre of any two features in a cluster is less than the distance between a feature in the cluster and a feature in a different cluster. The positions of the features relative to each other are such that the features are not so close together that they may "blend" together and appear as a single feature in an input image recorded at an oblique camera angle. In this embodiment, each cluster comprises four circles.

In the drawings, the black circles with a white interior represent circles which are actually red on the photographic mat. Thus, circles 242, 244, 266, 268, 290, 292, 314 and 316 are red circles. The solid black circles represent circles which are black on the photographic mat.

In this embodiment, the clusters 200-222 are equally spaced in a circle having the diameter input by the user and stored at step S4 (Figure 2) to surround a central area 340 on which no patterns are printed. Each cluster of circles is orientated so that an imaginary line (that is, a line not actually present on photographic mat 34) through the centre of one pair of circles in the cluster will pass through a predetermined reference point on the mat, which in this embodiment, is the centre 352 of the circle on which the clusters are arranged. More particularly, referring to cluster 200 by way of example, a line 350 through the centres of circles 240 and 244 passes through the centre 352 of the circle on which the clusters 200-222 lie. Similarly, referring to cluster 208, a line 354 through the centre of circles 274 and 278 passes through the centre 352.

The mat parameters stored at step S6 (Figure 2) define the pattern of dots 240-334 and their positions on the photographic mat 34, together with a coordinate system relative to the pattern. More particularly, in this embodiment, a coordinate system is defined in which the origin is at the centre 352 of the circle on which the clusters 220-222 lie, the "x" and "y" axes lie in the plane of the dots 240-334, with the "x" axis passing through the centres of dots 244 and 240 (that is, the "x" axis being in the direction of line 350) and the "y" axis passing through the centres of dots 270 and 266, with the "z" axis perpendicular to the plane of the mat. As will be explained in more detail below, processing apparatus 2 processes each input image to determine the position and orientation at which the input image was recorded within the defined coordinate system. Thus, in effect, the position and orientation at which each input image was recorded is calculated relative to the reference position and orientation of the photographic mat 34 defined by the coordinate system stored at step S6.

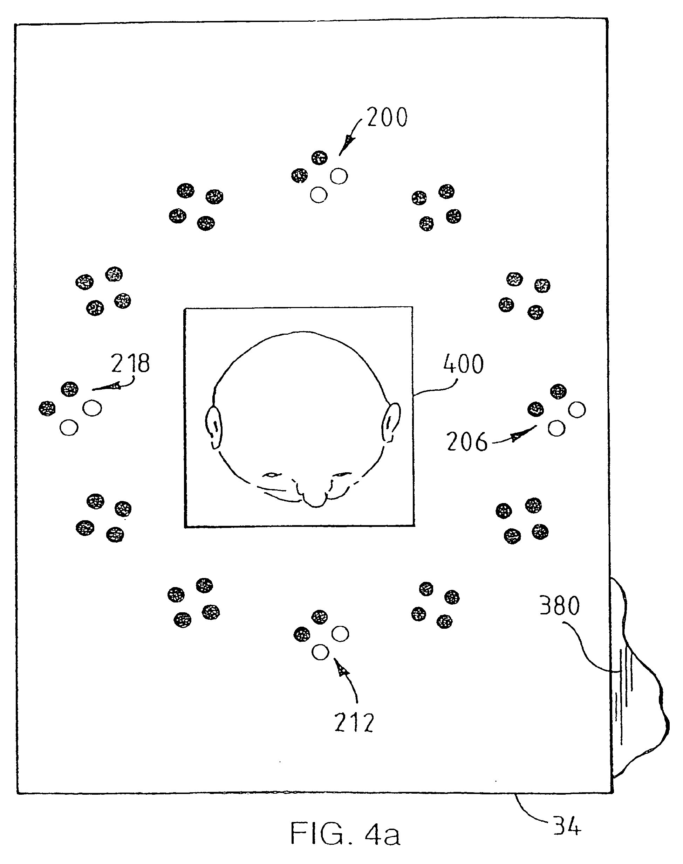

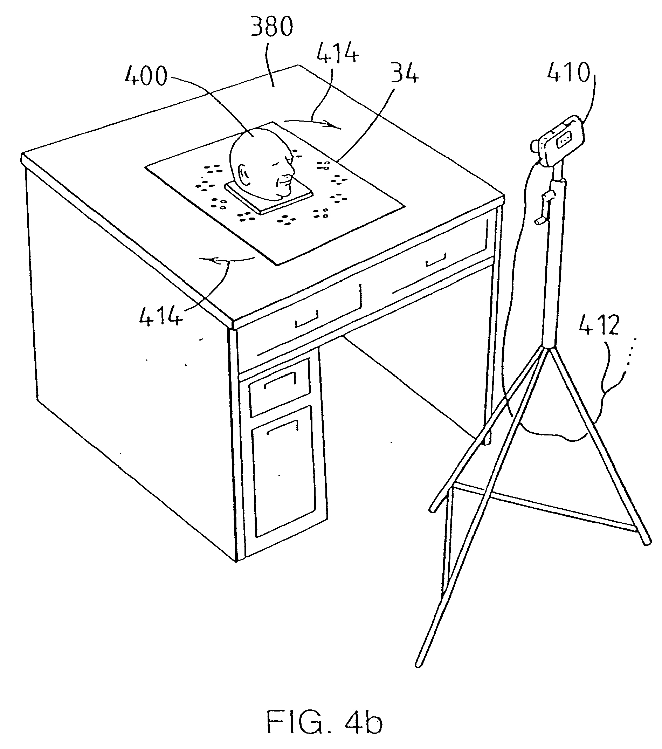

Referring to Figures 4A and 4B, the photographic mat 34 is placed on a surface 380 which is of substantially uniform colour, the colour, if possible being different to any colour of the object 400.

An object 400, for which a 3D computer model is to be generated, is placed in the centre portion 340 of the photographic mat 34, so that the object 400 is surrounded by the clusters 200-222 of circles 240-334 on the mat.

Images of the object 400 and photographic mat 34 are recorded at different positions and orientations to show different parts of object 400 using a digital camera 410. In this embodiment, data defining the images recorded by camera 410 is input to processing apparatus 2 as a signal 44 along wire 412.

More particularly, in this embodiment, camera 410 remains in a fixed position and photographic mat 34 with object 400 thereon is moved (translated) and rotated (for example in the direction of arrows 414) on surface 380, and photographs of the object 400 at different positions and orientations relative to the camera 410 are recorded. During the rotation and translation of the photographic mat 34 on surface 380, the object 400 should not move relative to the mat.

The clusters 200-222 of circles on the photographic mat 34 can be used to determine the amount by which to rotate the photographic mat 34 to ensure that images of each part of the object 400 are recorded. More particularly, photographic mat 34 may be rotated so that each cluster faces the camera 410.

In summary, images of the object 400 and photographic mat 34 at different positions and orientations relative to camera 410 are recorded and input to processing apparatus 2.

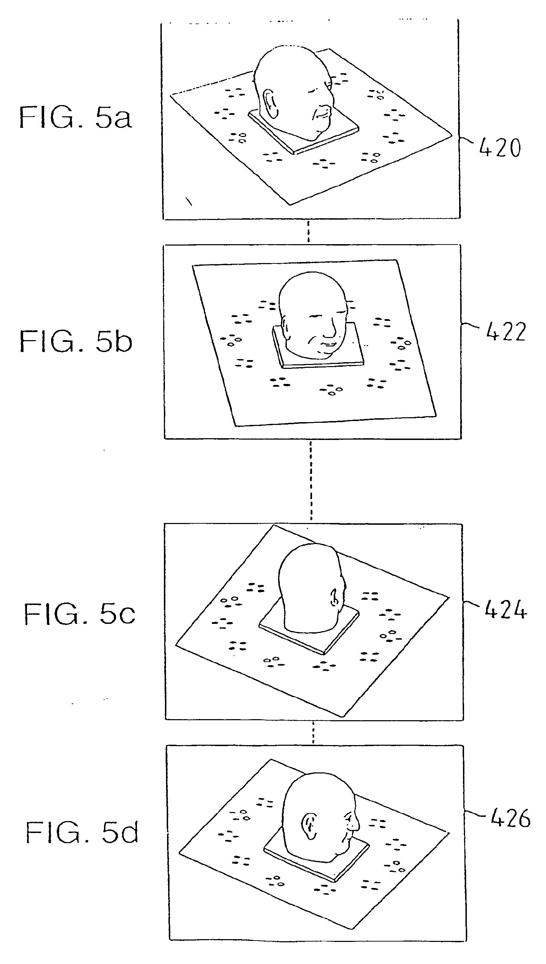

Figures 5A to 5D show examples of input images 420-426 with the object 400 and photographic mat 34 in different positions and orientations relative to camera 410.

In this embodiment, following the recording and input of images of object 400 and photographic mat 34, a further image is recorded and input to processing apparatus 2. This further image comprises a "background image", which is an image of the surface 380 and an object having the same colour as the paper on which photographic mat 34 is printed. Such a background image may be recorded by placing a blank sheet of paper having the same colour as the sheet on which photographic mat 34 is recorded on surface 380, or by turning the photographic mat 34 over on surface 380 so that the pattern of circles is not visible in the image.

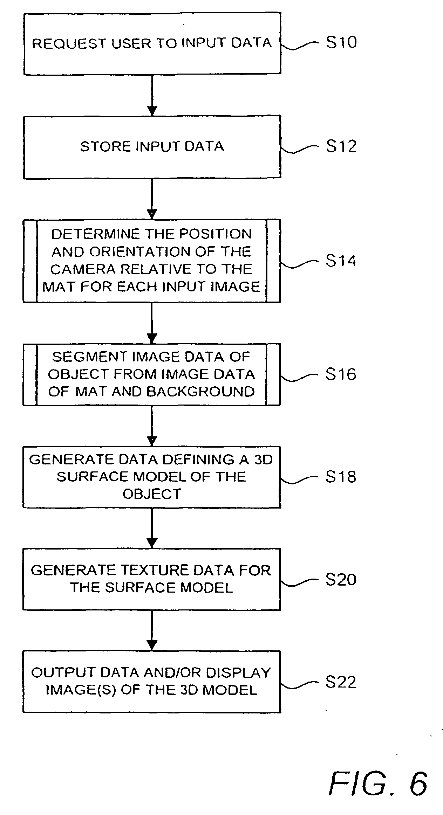

Figure 6 shows the processing operations performed by processing apparatus 2 to process input data in this embodiment.

Referring to Figure 6, at step S10, central controller 20 causes display processor 110 to display a message on display device 4 requesting the user to input data for processing.

At step S12, data input by the user in response to the request at step S10 is stored in the input data store 40. More particularly, in this embodiment, the input data comprises image data defining images of the object 400 and mat 34 recorded at different positions and orientations relative to camera 410, the "background" image showing the surface 380 on which photographic mat 34 was placed to record the input images together with an object having the same colour as the recording material on which the pattern of photographic mat 34 was recorded, and data defining the intrinsic parameters of the camera 410 which recorded the input images, that is the aspect ratio, focal length, principal point (the point at which the optical axis intersects the imaging plane), the first order radial distortion coefficient, and the skew angle (the angle between the axes on the pixel grid).

At step S14, the input data stored at step S12 is processed by processing apparatus 2 to determine the position and orientation of the camera 410 relative to the photographic mat 34 (and hence relative to the object 400) for each input image.

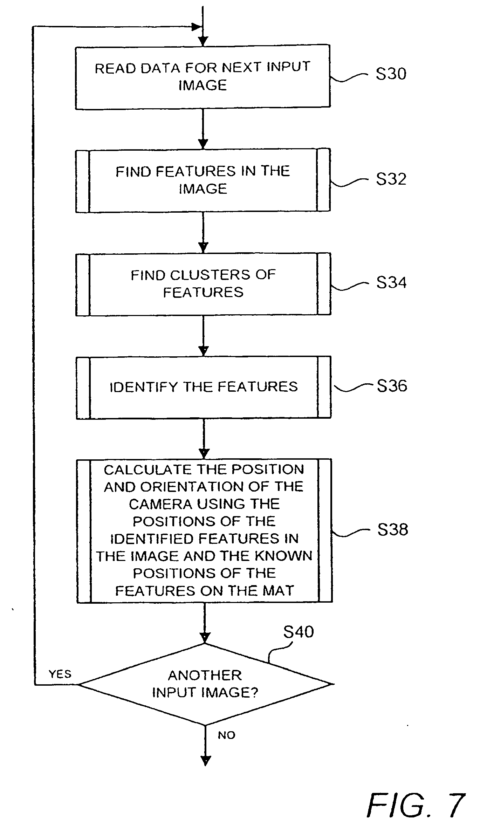

Figure 7 shows the processing operations performed by processing apparatus 2 at step S14.

Referring to Figure 7, at step S30, processing apparatus 2 reads the data for the next input image showing photographic mat 34 and object 400 stored at step S12 (this being the first input image the first time step S30 is performed).

At step S32, feature detector 50 processes the image data read at step S30 to find pixels in the image which may represent the features making up the pattern on the photographic mat 34 (that is, the circles 240-334 in this embodiment).

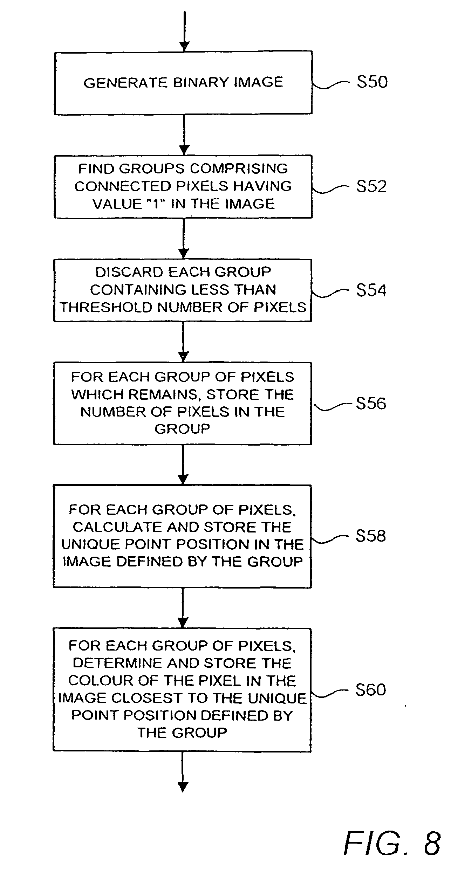

Figure 8 shows the processing operations performed by feature detector 50 at step S32.

Referring to Figure 8, at step S50, feature detector 50 processes the image data to generate a binary image corresponding to the input image, in which each pixel in the input image which has a colour corresponding to the colour of a feature on the photographic mat 34 (that is, black or red in this embodiment) is set to 1, and pixels having other colours are set to 0.

More particularly, in this embodiment, for each pixel in the input image, feature detector 50 reads the green colour value, G, and the blue colour value, B, (each of which has values from 0 to 255 in this embodiment) and sets the value of the pixel to 1 or 0 as follows:

$$\text{If}\quad G < 128\ and\ B < 128\ set\ pixel\ value\ to\ 1$$
$$\text{else}\quad set\ pixel\ value\ to\ 0 \quad\quad\quad\quad ....(1)$$

By performing processing in this way, feature detector 50 generates a binary image in which each pixel having the value 1 represents a red or black feature in the input image.

At step S52, feature detector 50 processes the binary image data generated at step S50 to find groups comprising pixels having the value 1 which are connected in the binary image, so as to identify spatially isolated groups of pixels having the value 1. More particularly, in this embodiment, feature detector 50 performs processing in a conventional manner, for example as described in "Digital Image Processing and Computer Vision" by R.J. Schalkoff, John Wiley and Sons, ISBN 047150536-6, page 276.

At step S54, feature detector 50 discards each group found at step S52 which contains less than a threshold number of pixels, which, in this embodiment, is 25 pixels. In this way, groups of pixels which are too small to represent a feature on the photographic mat 34 and pixels which have been erroneously set to 1 when the binary image was generated at step S50 are eliminated from further processing.

At step S56, feature detector 50 processes the groups of pixels which remain after step S54 has been performed to store the data defining the number of pixels in each group.

At step S58, feature detector 50 calculates and stores the respective unique point position in the binary image defined by each group of pixels remaining after step S54 has been performed. In this embodiment, the features on the photographic mat 34 comprise circles 240-334 and the unique point position for each feature is the centre of the circle. Accordingly, at step S58, feature detector 50 calculates and stores the centre of each group of pixels. The centre of each group of pixels is calculated at step S58 by determining the centre of gravity of the group of pixels in a conventional manner.

At step S60, for each group of pixels in the binary image, feature detector 50 determines and stores the colour of the pixel in the original input image which is closest to the unique point position for the group calculated at step S58. More particularly, feature detector 50 determines the colour from the R, G, B values of the pixel in the original input image (that is, the input image processed to generate the binary image of step S50) in a conventional manner.

After performing the processing described above with reference to Figure 8, feature detector 50 has identified features in the input image which are greater than a threshold size and which have the same colour (that is, black or red) as a feature on the photographic mat 34. However, as well as identifying features in the input image which correspond to the features on photographic mat 34, features on object 400 may also have been identified during this processing.

Accordingly, referring again to Figure 7, at step S34, feature clusterer 60 processes the features found by feature detector 50 at step S32 to find candidate clusters of features in the input image and to test the candidate clusters to find clusters which correspond to the clusters of 200-222 on the photographic mat 34.

By arranging at least some of the features on photographic mat 34 in clusters 200-222, and by detecting and testing the clusters of features in the input image, it is possible to distinguish between a feature in the input image which corresponds to a feature on the photographic mat 34 and a feature in the input image which corresponds to a feature on the object 400 having approximately the same size and colour as a feature on the photographic mat 34. More particularly, features on the photographic mat 34 can be distinguished in this embodiment because they are part of a cluster in which all of the features have substantially the same size, whereas features on object 400 are likely to be of different sizes so that, in any cluster containing one or more features from object 400, the features will not be of uniform size.

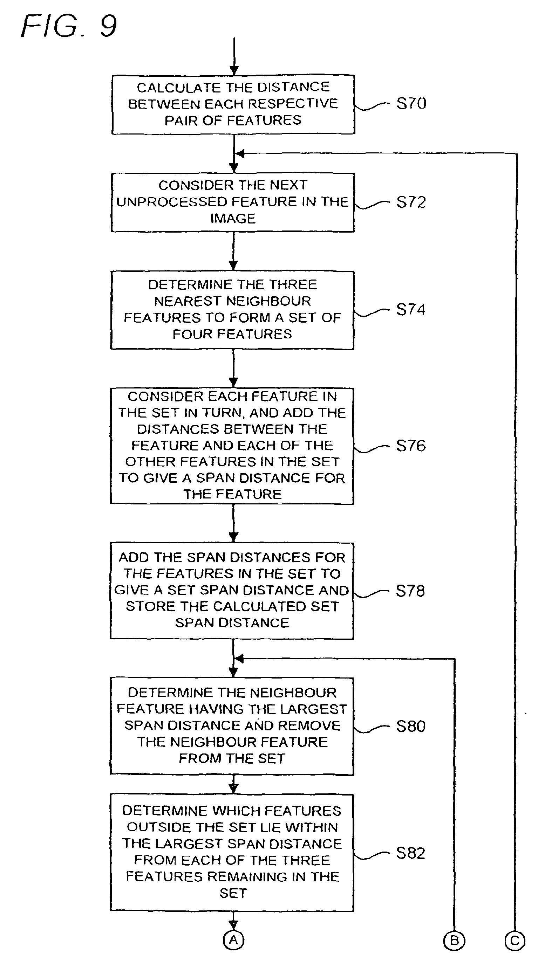

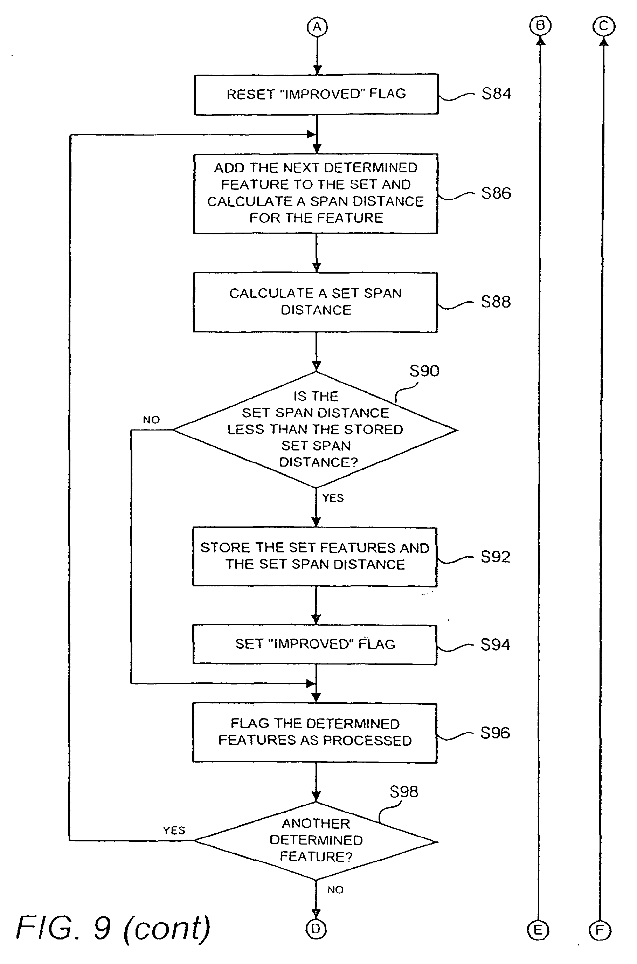

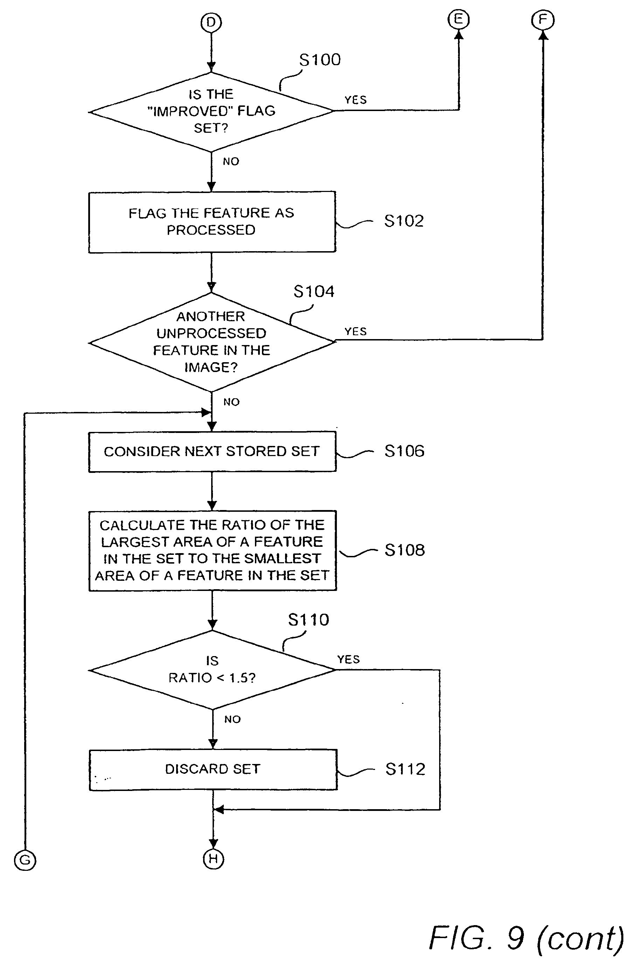

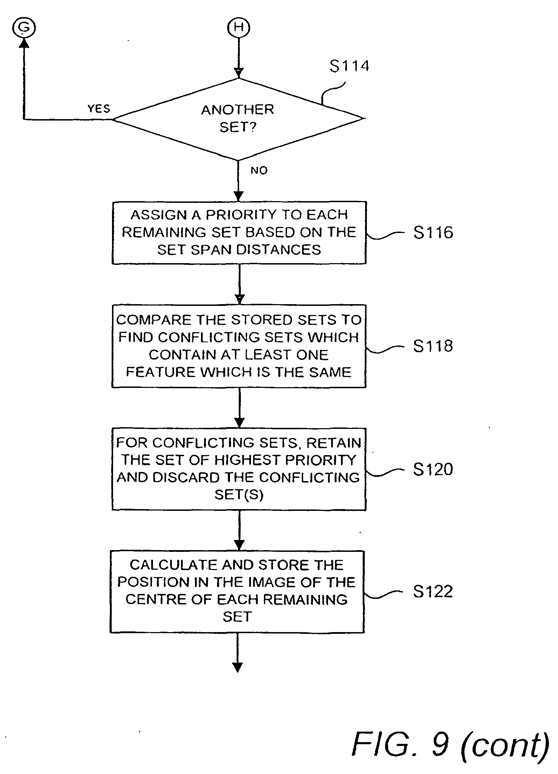

Figure 9 shows the processing operations performed by feature clusterer 60 at step S34.

Referring to Figure 9, at step S70, feature clusterer 60 calculates and stores the distance between each respective pair of features found by feature detector 50 at step S32.

At step S72, feature clusterer 60 considers the next unprocessed feature in the input image (this being the first feature the first time step S72 is performed).

At step S74, feature clusterer 60 determines which of the other features in the input image are nearest to the feature currently being considered (that is, the feature selected at step S72) to form a set of four features (this being the number of features in each cluster 200-222 on photographic mat 34).

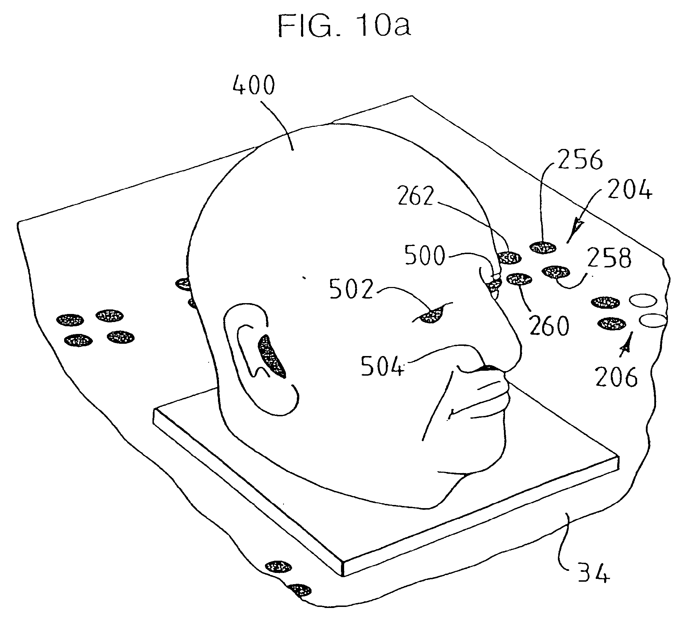

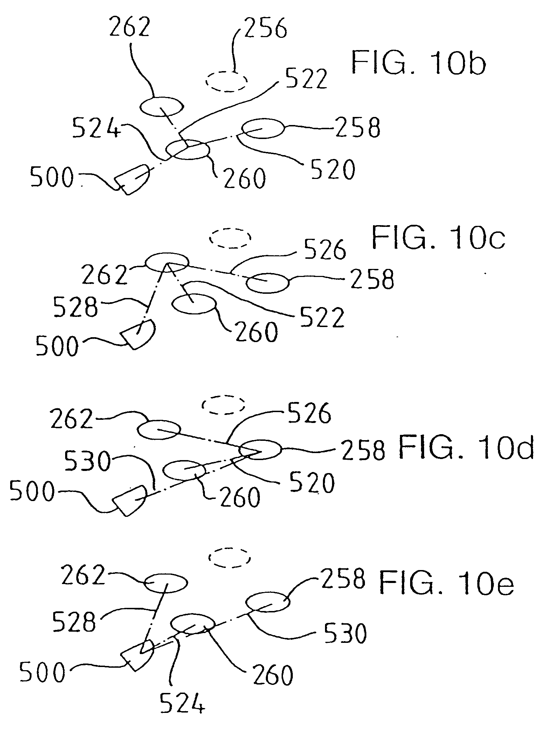

Referring to Figure 10A, by way of example, if feature 260 in cluster 204 is considered at step S72, then at step S74, feature clusterer 60 would identify features 258 and 262 in cluster 204 and feature 500 on object 400 as the three nearest neighbour features. Accordingly, a set comprising features 260, 258, 262 and 500 would be formed.

As can be seen from the example shown in Figure 10A, performing processing at step S74 to determine the three nearest features to a feature in the image may not correctly identify the four features which correspond to a cluster of features on the photographic mat 34. More particularly, in the example shown in Figure 10A, the processing does not identify the four correct features since a feature 500 on the object 400 is closer to feature 260 than feature 256 in cluster 204. Similarly, depending upon the relative position and orientation of the camera 410 to the photographic mat 34, an error may occur in which a set of features is formed comprising features from more than one cluster.

Accordingly, processing is performed at steps S76 to S122 to remove errors.

More particularly, at step S76, feature clusterer 60 considers in turn each feature in the set formed at step S74 and adds the distances (previously calculated at step S70) between the feature and each of the other three features in the set to give a span distance for the feature.

Figures 10B to 10E illustrate the processing performed at step S76 for the example shown in Figure 10A. Referring to Figure 10B, feature clusterer 60 adds the distances 520, 522 and 524 between feature 260 and features 258, 262 and 500 respectively to give a span distance for the feature 260.

Similarly, referring to Figure 10C, feature clusterer 60 adds the distances 526, 522 and 528 between feature 262 and features 258, 260 and 500 respectively to give a span distance for feature 262. In addition, referring to Figure 100, feature clusterer 60 adds the distances 526, 520 and 530 between feature 258 and features 262, 260 and 500 respectively to give a span distance for feature 258. Referring to Figure 10E, feature clusterer 60 also adds the distances 528, 524 and 530 between feature 500 and features 262, 260 and 258 respectively to give a span distance for feature 500.

At step S78, feature clusterer 60 adds the four span distances calculated at step S76 to give a set span distance for the set of four features, and stores the calculated set span distance.

At step S80, feature clusterer 60 determines which of the three neighbouring features found at step S74 has the largest span distance calculated at step S76, and removes the feature having the largest span distance from the set (leaving three remaining features).

At steps S82 to S98, feature clusterer 60 performs processing to attempt to find another feature in the input image, which, when added to the three features remaining after step S80 has been performed, gives a set of four features having a set span distance less than the set span distance for the original set of four features stored at step S78.

More particularly, at step S82, feature clusterer 60 determines which features in the input image which are not currently in the set formed at step S74 lie within the largest span distance (that is, the span distance of the feature removed at step S80) from each of the three remaining features in the set. This processing corresponds to determining which features lie within the intersection of three circles, each having a radius corresponding to the largest span distance and each being centred on a respective one of the three remaining features in the set.

The processing performed at step S82 identifies features in the input image which could, potentially, give a set span distance less than the set span distance stored at step S78 when they are added to the three features in the set remaining after step S80 has been performed. More particularly, step S82 excludes from further processing any feature which, when considered with the three remaining features, would have a span distance greater than the span distance of the feature removed at step S80, and which, therefore, would cause the set span distance to exceed the set span distance stored at step S78.

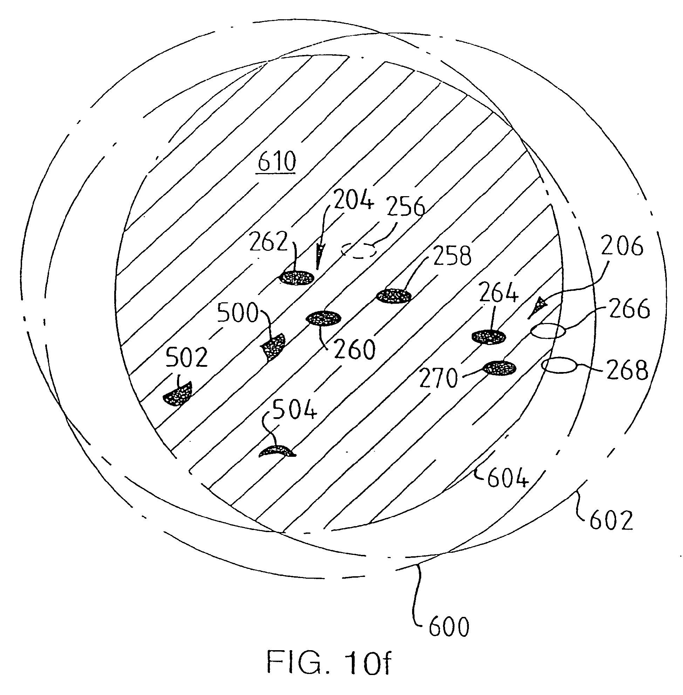

Figure 10F illustrates the principle behind the processing performed at step S80 and S82 for the example shown in Figures 10A to 10E.

Referring to Figure 10F, if it is found at step S80 that feature 500 has the largest span distance, then feature 500 is removed from the set at step S80 leaving feature 260 and neighbouring features 258 and 262. A circle 600 having a radius corresponding to the span distance of feature 500 and centred on feature 260 defines features which lie within the largest span distance of feature 260. Similarly, a circle 602 centred on feature 258 and a circle 604 centred on feature 262, both of radius corresponding to the span distance of feature 500, define features lying within the largest span distance of feature 258 and feature 262, respectively. Any feature lying within the intersection at 610, indicated by diagonal lines in Figure 10F, therefore lies within the largest span distance of all of the three remaining features in the set, that is, features 260, 258 and 262.

Referring again to Figure 9, at step S84, feature clusterer 60 resets an "improved flag" (that is, feature clusterer 60 cancels the improved flag if it has been set in previous processing).

At step S86, feature clusterer 60 adds the next feature from the features determined at step S82 (that is the features which lie within the largest span distance from each of the three remaining features in the set) to the set and calculates a span distance for the feature (this being performed in the same manner described previously by adding the distance between the feature added and each of the other three features in the set - these distances already having been calculated at step S70).

At step S88, feature clusterer 60 calculates a set span distance for the new set by adding the span distance calculated at step S86 to the span distance calculated for the three features already in the set (that is, features 260, 258 and 262 in the example of Figure 10F) previously calculated at step S76.

At step S90, feature clusterer 60 determines whether the set span distance calculated at step S88 is greater than the set span distance which is currently stored for the set (this being the set span distance stored at step S78 the first time step S90 is performed).

If it is determined at step S90 that the new set span distance is less than the stored set span distance, then the new set of features created at step S86 is considered to be more accurate than the currently stored set of features, and accordingly, at step S92, feature clusterer 60 replaces the set of features and set span distance which are currently stored with the set of features and set span distance generated at step S86 and S88. Then, at step S94, feature clusterer 60 sets the "improved flag" to indicate that an improved set of features has been generated.

On the other hand, if it is determined at step S90 that the set span distance calculated at step S88 is not less than the stored set span distance, then steps S92 and S94 are omitted so that the set of features and set span distance which are already stored are retained and the "improved flag" is not set.

At step S96, feature clusterer 60 flags the feature added to the set at step S86 as processed, and at step S98 determines whether there is another feature found by the processing performed at step S82 which lies within the largest span distance of each of the three remaining features of the set and which has not yet been processed.

Steps S86 to S98 are repeated until each feature lying within the largest span distance of each of the three remaining features in the set has been processed in the manner described above.

When it is determined at step S98 that no feature remains to be processed, processing has been performed to replace the feature determined at step S80 to have the largest set span distance with each feature lying within the largest span distance from the three other features in the set. The set features which provide the smallest set span distance will be stored in memory, and the "improved flag" will be set if the stored features do not correspond to the set created at step S74, but instead result from the removal of a feature at step S80 and the addition of a feature at step S86.

At step S100, feature clusterer 60 determines whether the "improved flag" is set.

If it is determined at step S100 that the "improved flag" is set, then, steps S80 to S100 are repeated for the next neighbour feature in the set having the largest span distance. Accordingly, only neighbour features can be removed from the set and the feature considered at step S72 for which the set has been created can not itself be removed from the set.

Steps S80 to S100 are therefore repeated for each neighbour feature (which may be a feature added to the set at step S86) until no improvement in the set of features is found when a neighbour feature is removed from the set (that is, when it is determined at step S90 for each feature added to the set to replace the removed feature, that the set span distance is not less than the span distance for the set when the removed feature was included, so that the "improved flag" is not set at step S94). When it is determined at step S100 that the "improved flag" is not set, then processing proceeds to step S102, at which feature clusterer 60 sets a flag for the feature considered at step S72 to indicate that processing has been performed for the feature.

At step S104, feature clusterer 60 determines whether there is another feature in the input image for which processing has not been performed.

Steps S72 to S104 are then repeated until each feature in the input image has been processed in the manner described above.

Consequently, after performing this processing, feature clusterer 60 has identified for each feature in the input image the three neighbour features which give the smallest set span distance. However, some of the sets of four features may comprise, for example, features which all lie on object 400, rather than a cluster of features which corresponds to a cluster on photographic mat 34. Accordingly, at steps S106 to S114, feature clusterer 60 performs processing to discard clusters of features which do not correspond to a cluster on the photographic mat 34.

More particularly, at step S106, feature clusterer 60 considers the next stored set of features.

At step S108, feature clusterer 60 calculates the ratio of the area of the largest feature in the set to the area of the smallest feature in the set. More particularly, feature clusterer 60 reads the number of pixels making up each feature in the set (stored at step S56 in Figure 8) and calculates the ratio of the largest number of pixels to the smallest number of pixels.

At step S110, feature clusterer 60 determines whether the ratio calculated at step S110 is less than a threshold value, which, in this embodiment is set to 1.5.

If it is determined at step S110 that the calculated ratio is not less than 1.5, then, at step S112, feature clusterer 60 discards the set. On the other hand, if it is determined at step S110 that the calculated ratio is less than 1.5, then step S112 is omitted, so that the set of features is retained.

In this way, sets in which the area of the largest feature is much greater than the area of the smallest feature are discarded since such a set is likely to comprise one or more features from the object 400. However, sets in which each feature has substantially the same size are retained, since the features on photographic mat 34 are likely to have substantially the same size in any input image, and accordingly a set in which all of the features are substantially the same size is likely to correspond to a cluster of features on the photographic mat 34.

At step S114, feature clusterer 60 determines whether there is another stored set of features. Steps S106 to S114 are repeated until each stored set has been processed in the manner described above.

At step S116, feature clusterer 60 assigns a priority to each remaining set of features based on the set span distance of each set.

More particularly, feature clusterer 60 priorities the sets in order of increasing set span distance, so that the set with the smallest set span distance (which is considered to be the most accurate set) is assigned the highest priority.

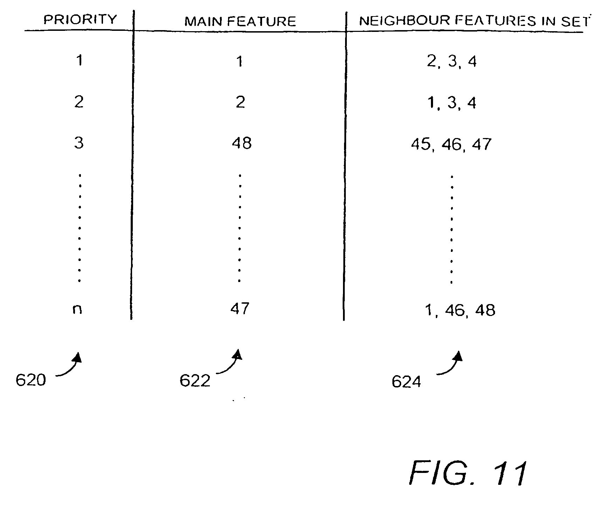

Referring to Figure 11, after performing the processing at step S16, there is stored in processing apparatus 2 data 622 defining the main feature in each set (that is, the feature considered at step S72), and data 624 defining three other features which, together with the main feature, make up a set of four features. The sets of features are stored in accordance with priority data 620.

At step S118, feature clusterer 60 compares the stored sets to find conflicting sets, that is, sets which contain at least one feature which is the same.

At step S120, for any conflicting sets identified at step S118, feature clusterer 60 retains the set of highest priority and discards the conflicting set(s).

Thus, referring to Figure 11, the set of lowest priority (that is, priority "n" in Figure 11) conflicts with the set of highest priority since both of these sets contain feature 1. Accordingly, the set of priority "n" is deleted.

In summary, after performing the processing at steps S70 to S120, feature clusterer 60 has grouped the features found by feature detector 50 at step S32 (Figure 7) into clusters corresponding to clusters on the photographic mat 34, so that no feature lies in more than one cluster.

At step S122, feature clusterer 60 calculates and stores the position in the image of the centre of each cluster. In this embodiment, this position is calculated by determining the point of intersection of lines connecting the centres of the diagonal features in the cluster (for example the point of intersection of a line connecting the centre of feature 256 to feature 260 and a line connecting the centre of feature 258 to feature 262 in the example shown in Figure 10A).

Referring again to Figure 7, at step S36, feature identifier 70 performs processing to identify the features found by feature detector 50 at step S32 which form part of a cluster formed by feature clusterer 60 at step S34. That is, feature identifier 70 performs processing to identify a respective one-to-one mapping between each feature in the input image which is part of a cluster and a feature on the photographic mat 34 defined by the data stored at step S6 (Figure 2).

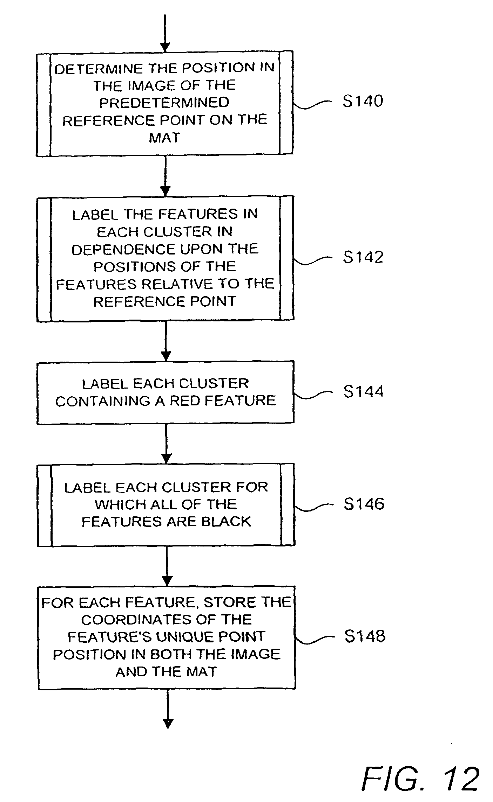

Figure 12 shows the processing operations performed by feature identifier 70 at step S36.

Referring to Figure 12, at step S140, feature identifier 70 determines the position in the input image of the predetermined reference point on the photographic mat 34. As noted above with reference to Figure 3, in this embodiment, the predetermined reference point on the photographic mat 34 is the centre of the circle on which the clusters 200-222 of features lies. Accordingly, processing is performed at step S140 to determine the position of the centre of this circle in the input image.

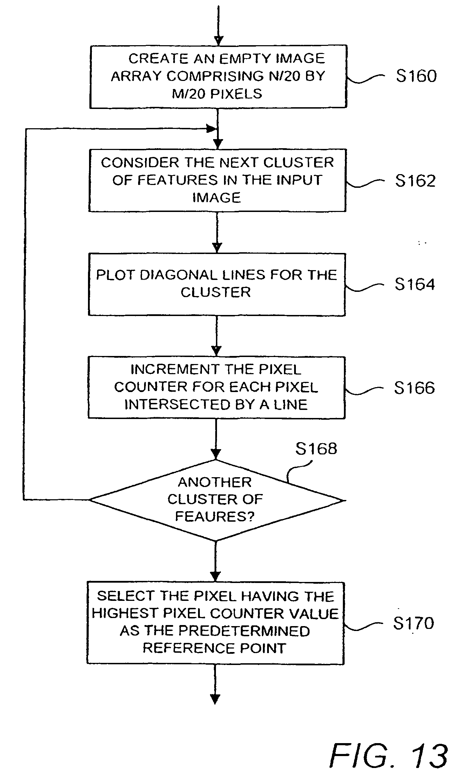

Figure 13 shows the processing operations performed by feature identifier 70 at step S140.

Referring to Figure 13, at step S160, feature identifier 70 creates an empty image array (that is, an array of pixels with integer value zero) comprising "N"/20 by "M"/20 pixels, where "N" and "M" are the number of pixels in the horizontal and vertical directions respectively of the input image (the number of pixels being rounded up at step S160 if "N"/20 or "M"/20 is not an integer value).

Accordingly, the processing performed at step S160 creates a coarse image array corresponding to the image array of the input image.

At step S162, feature identifier 70 considers the next cluster of features in the input image found at step S34 (Figure 7), and at step S164 plots diagonal lines for the cluster.

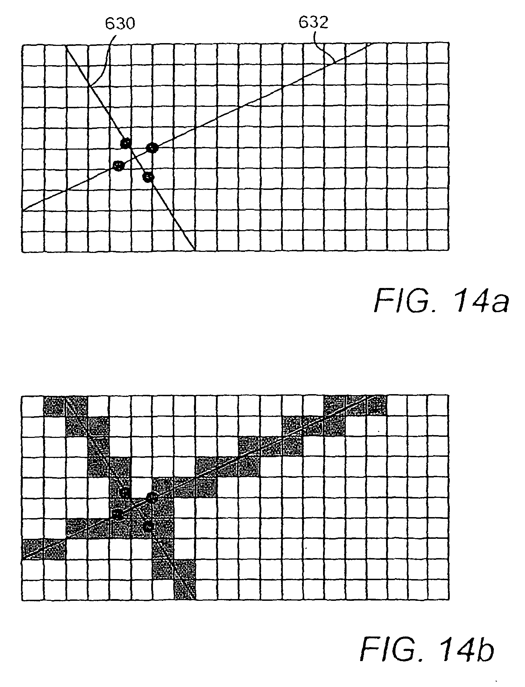

More particularly, referring to Figure 14A, at step S164, feature identifier 70 plots the positions of the four features (circles) in the input image on the image array created at step S160 and plots the diagonal lines for the cluster previously calculated at step S122 (Figure 9) on the image array created at step S160.

At step S166, feature identifier 70 increments a pixel counter for each pixel in the image array created at step S160 which is intersected by one of the diagonal lines plotted at step S164. Thus, referring to Figure 14B, by way of example, the pixel counter for each of the shaded pixels is incremented by 1.

At step S168, feature identifier 70 determines whether there is another cluster of features found at step S34 (Figure 7) to be processed. Steps S162 to S168 are repeated until each cluster of features has been processed in the manner described above.

At step S170, feature identifier 70 selects the pixel from the image array created at step S160 which has the highest pixel counter value as the pixel representing the position of the predetermined reference point on the photographic mat 34 in the input image. As described above reference to Figure 3, the circles 240-334 are arranged within the clusters 200-222 such that one of the diagonal cluster lines (line 350 and line 354 in Figure 3) passes through the centre 352 of the circle on which the clusters 200-222 lie (that is, the predetermined reference point of the photographic mat 34). Accordingly, in performing the processing at steps S162 to S168, the pixel in the image array created at step S160 which corresponds to the centre of the circle on which the clusters 200-222 lie in the input image should be intersected by one of the diagonal lines created for each cluster in the input image, and should therefore have the highest pixel counter value. A coarse image array is created at step S160 and used for this processing to overcome errors due to the diagonal lines not intersecting at the same point because of inaccuracies in the position of the diagonal line arising from distortion of the positions of the features due to imaging conditions etc.

Referring again to Figure 12, at step S142, feature identifier 70 labels the features within each cluster found at step S34 (Figure 7) in dependence upon the position of the feature relative to the reference point located at step S140.

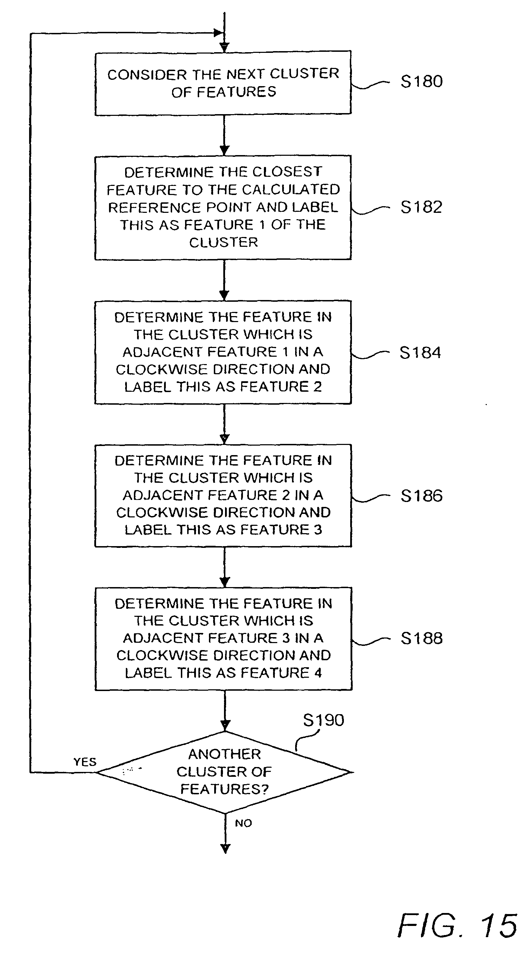

Figure 15 shows the processing operations performed by feature identifier 70 at step S142.

Referring to Figure 15, at step S180, feature identifier 70 considers the next cluster of features (this being the first cluster the first time step S180 is performed).

At step S182, feature identifier 70 determines the feature in the cluster currently being considered which is closest in the input image to the reference point calculated at step S140, and labels the determined feature as feature 1 of the cluster.

At step S184, feature identifier 70 determines the feature in the cluster which is adjacent to the feature labelled as feature 1 at step S182 in a clockwise direction, and labels the determined feature as feature 2 of the cluster. More particularly, in this embodiment, feature identifier 70 determines which of the features is adjacent in a clockwise direction in a conventional manner, for example by selecting the point which, when connected to feature 1 with a straight connecting line, results in the other features in the cluster lying to the right of the connecting line.

At step S186, feature identifier 70 determines the feature in the cluster which is adjacent feature 2 in a clockwise direction and labels this as feature 3 of the cluster.

Similarly, at step S188, feature identifier 70 determines the feature in the cluster which is adjacent feature 3 in a clockwise direction and labels this as feature 4 of the cluster.

At step S190, feature identifier 70 determines whether there is another cluster of features to be processed. Steps S180 to S190 are repeated until each cluster of features found in the input image by feature clusterer 60 at step S34 (Figure 7) has been processed in the manner described above.

Referring again to Figure 12, at step S144, feature identifier 70 uses the feature labels calculated at step S142 to label each cluster which contains a red feature (these clusters being identified using the colour of each feature stored at step S60 in Figure 8).

More particularly, referring to Figure 3, cluster 200 contains a red feature 244 at position 1 and position 4. On the other hand, cluster 206 has red features at positions 3 and 4, while cluster 212 has red features at positions 2 and 3, and cluster 218 has red features at positions 1 and 2. Accordingly, at step S144, each cluster containing a red feature in the input image is assigned a label defining the corresponding cluster on the photographic mat 34 on the basis of the labels of the red features assigned at step S142.

As a result of this processing, each feature in each cluster which contains a red feature has been associated with a unique feature on the photographic mat 34.

Referring again to Figure 12, at step S146, feature identifier 70 labels each cluster in the input image for which all of the features are black.

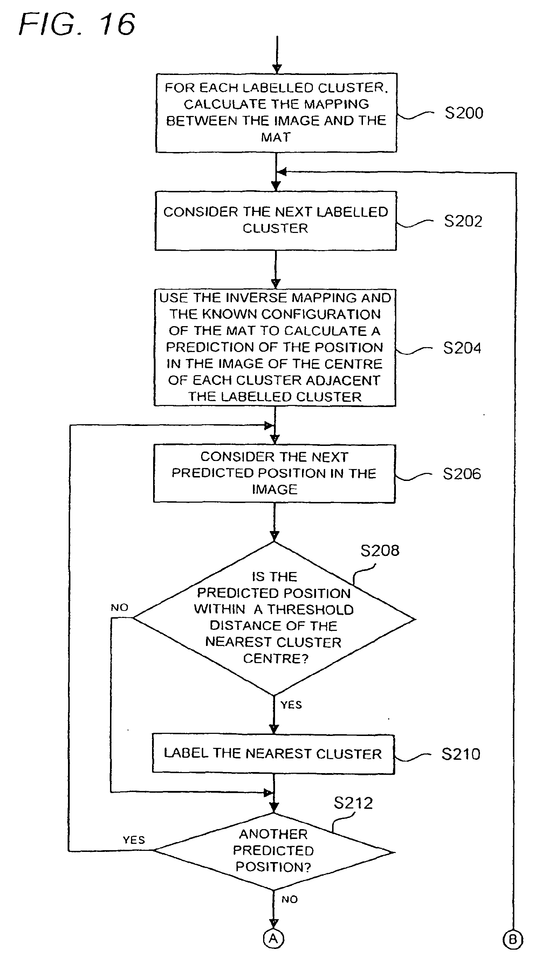

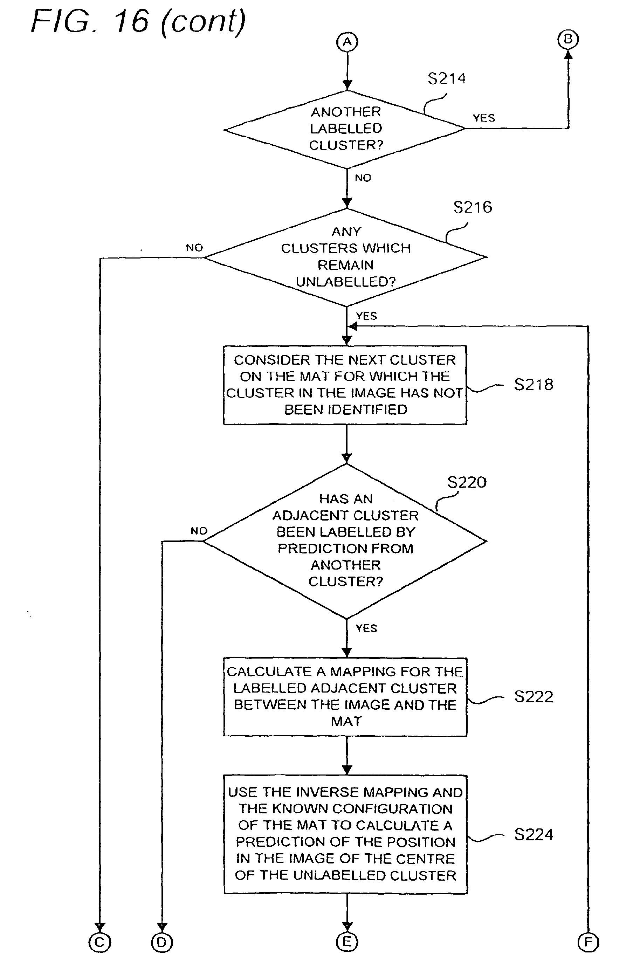

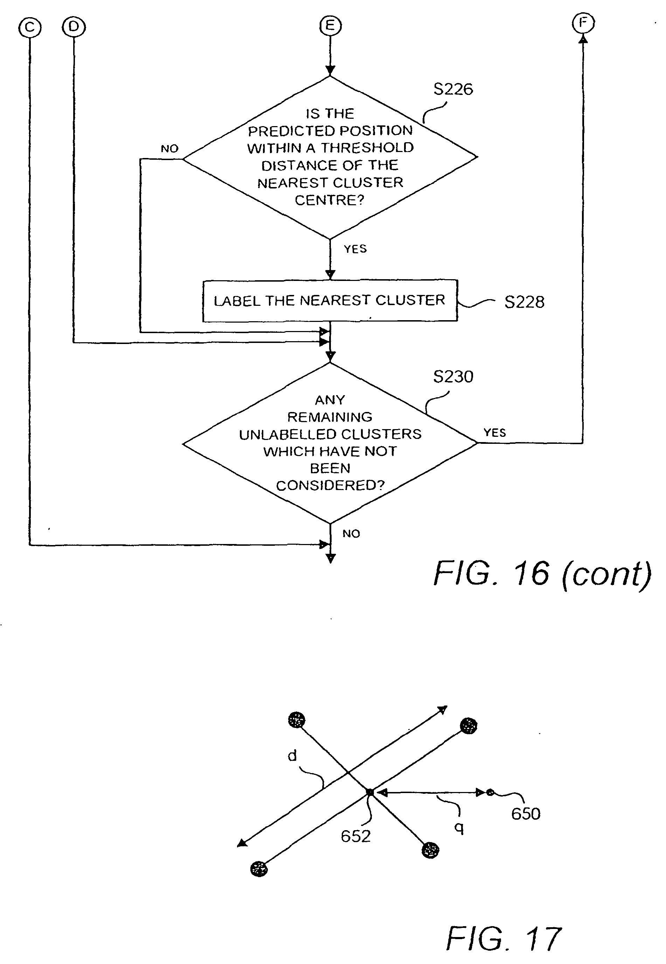

Figure 16 shows the processing operations performed by feature identifier 70 at step S146.

Referring to Figure 16, at step S200, feature identifier 70 uses each identified cluster (that is, each cluster which contains a red feature and which was labelled at step S144) to calculate a respective mapping for the cluster between the input image and the photographic mat 34.

More particularly, in this embodiment, feature identifier 70 uses the position in the input image and the position on the photographic mat 34 of each feature in the cluster to calculate the mapping in a conventional manner, for example as described in "Digital Image Processing and Computer Vision" by R.J. Schalkoff, John Wiley and Sons, ISBN 047150536-6, Chapter 3.

At step S202, feature identifier 70 considers the next cluster containing a red feature which was labelled at step S144 (this being the first cluster the first time step S202 is performed).

At step S204, feature identifier 70 calculates the inverse of the mapping calculated for the cluster currently being considered at step S200 and uses the inverse mapping and the known positions of the features on the photographic mat 34 to calculate a prediction of the position in the input image of the centre of each cluster adjacent the identified cluster.

Referring to Figure 3 by way of example, if cluster 206 is considered at step S202, then, at step S204, a prediction is calculated for the position of the centre of cluster 204 in the input image and the position of the centre of cluster 208 in the input image. Similarly, if cluster 212 is considered at step S202, then, at step S204, predictions of the positions of the centres of clusters 210 and 214 are calculated.

At step S206, feature identifier 70 considers the next predicted position in the image which was calculated at step S204 (this being the first predicted position the first time step S206 is performed).

At step S208, feature identifier 70 determines whether the predicted position currently being considered is within a threshold distance of the nearest cluster centre which was found in the input image at step S34 in Figure 7, (the cluster centres in the input image having been calculated and stored at step S122 in Figure 9).

Figure 17 illustrates the processing performed at step S208.

Referring to Figure 17, feature identifier 70 determines whether the distance "q" to between the predicted position 650 and the centre 652 of the cluster is less than the distance "d", where d is the largest distance between any two features in the cluster.

If it is determined at step S208 that the distance "q" is less than the distance "d" then, at step S210, feature identifier 70 assigns a label to the nearest cluster (that is, the cluster having the centre 652) to identify it as the cluster from the photographic mat 34 whose centre was predicted to be at the position 650 in the input image.

On the other hand, if it is determined at step S208 that the distance "q" is not less than the distance "d", then step S210 is omitted so that the cluster is not labelled.

In summary, therefore, feature identifier 70 has predicted the position in the input image of a known cluster on the photographic mat 34 (the cluster being known since it is the cluster adjacent to an already identified cluster), has tested whether a cluster already found in the input image exists at the predicted position, and, if a cluster found in the input image does exist at the position, has labelled the cluster to correspond to the cluster on the photographic mat 34.

At step S212, feature identifier 70 determines whether there is another predicted position to be processed. Steps S206 to S212 are repeated until both of the predicted positions calculated at step S204 have been processed in the manner described above.

At step S214, feature identifier 70 determines whether there is another cluster of features which was identified at step S114 in Figure 12 and for which processing has not been performed.

Steps S202 to S214 are repeated until each cluster identified at step S144 has been processed in the manner described above.

Accordingly, when it is determined at step S214 that all of the identified clusters have been processed, then feature identifier 70 will have used each cluster of features which contains a red feature and which is visible in the input image to predict the position of the adjacent clusters, and to label the adjacent clusters if clusters have been found in the input image at the predicted positions. However, object 400 may obscure one or more of the clusters which contains a red feature so that not all of the clusters which contain a red feature are visible in the input image.

Referring to Figure 3, by way of example, if clusters 206, 212 and 218 are visible in the input image, then, at steps S202 to S214, feature identifier 70 will have predicted the positions of clusters 204, 208, 210, 214, 216 and 220, and labelled the clusters which exist at these predicted positions in the input image. However, if cluster 200 is not visible in the input image, then the positions of clusters 202 and 222 will not have been predicted, and no attempt will therefore have been made to label these clusters.

In addition, an attempt to label a cluster by predicting its position from a cluster containing a red feature may fail since the predicted position may not be within the threshold distance of the nearest cluster centre.

Accordingly, at steps S216 to S230, feature identifier 70 performs processing to attempt to label each cluster in which all of the features are black and which has not yet been labelled.

More particularly, at step S216, feature identifier 70 determines whether any clusters remain unlabelled.

If it is determined at step S216 that all of the clusters have been labelled, then the processing at step S146 (Figure 12) is complete.

On the other hand, if it is determined at step S216 that not all of the clusters have been labelled, then, at step S218, feature identifier 70 considers the next cluster on the photographic mat 34 for which the cluster in the image has not been identified.

At step S220, feature identifier 70 determines whether a cluster which is adjacent the cluster considered at step S218 on the photographic mat 34 has been labelled by prediction from another cluster (that is, whether an adjacent cluster has been labelled at step S210).

Thus,_ referring to Figure 3 by way of example, if the unlabelled cluster considered at step S218 is cluster 222, then, at step S220, feature identifier 70 determines whether cluster 220 was labelled when step S210 was performed. Similarly, if cluster 202 was the unlabelled cluster considered at step S218, then, at step S220, feature identifier 70 determines whether cluster 204 has been labelled at step S210.

If it is determined at step S220 that the adjacent cluster has not been labelled by prediction from another cluster, then processing proceeds to step S230.

On the other hand, if it is determined at step S220 that the adjacent cluster has been labelled by prediction, then, at step S222, feature identifier 70 calculates a mapping for the labelled adjacent cluster between the input image and the photographic mat 34. In this embodiment, the mapping is calculated in a conventional manner, for example as described in "Digital Image Processing and Computer Vision" by R.J. Schalkoff, John Wiley and Sons, ISBN 047150536-6, Chapter 3.

At step S224, feature identifier 70 calculates the inverse of the mapping generated at step S222, and uses the inverse mapping and the known positions of the features on the mat 34 to calculate a prediction of the position in the image of the centre of the unlabelled cluster considered at step S218.

At step S226, feature identifier 70 determines whether the predicted position calculated at step S224 is within a threshold distance of the nearest cluster centre in the input image, the processing performed at step S226 being the same as that performed at step S208, described above with respect to Figure 17.

If it is determined at step S226 that the predicted position is within the threshold distance, then, at step S228, feature identifier 70 labels the nearest cluster to identify it as the cluster from the photographic mat 34 considered at step S218.

On the other hand, if it is determined at step S226 that the predicted position is not within the threshold distance, then step S228 is omitted, so that the unlabelled cluster considered at step S218 remains unlabelled.

At step S230, feature identifier 70 determines whether there are any remaining unlabelled clusters which have not yet been considered (that is, for which processing has not yet been performed at steps S218 to S228). Steps S218 to S230 are repeated until each unlabelled cluster has been processed in the manner described above.

In summary, therefore, at steps S218 to S230, feature identifier 70 attempts to label each unlabelled cluster by predicting its position from a cluster which was itself labelled by prediction from another cluster.

After performing the processing described above with respect to Figure 16, feature identifier 70 should have labelled each cluster which is visible in the input image and for which all of the features are black.

Referring again to Figure 12, having labelled the features within each cluster at step S142, and labelled each cluster at step S144 or S146, at step S148, feature identifier 70 stores, for each feature within a cluster in the input image, the coordinates of the features unique point position in both the input image and the photographic mat 34. As will be described below, the one-to-one correspondences between features in the input image and features on the photographic mat 34 are used to calculate the position and orientation of the camera 410 when the image was recorded, and the more one-to-one correspondences that there are, the more accurate the calculated position and orientation. Accordingly, the photographic mat 34 in this embodiment provides the advantage that each feature 240-334 defines a unique point position on the photographic mat, and therefore, each feature in the input image which is labelled provides a correspondence for use in calculating the position and orientation of the camera 410.

Referring to again to Figure 7, at step S38, camera calculator 80 uses the data stored at step S148 defining the correspondence between the position in the input image and the position on the photographic mat 34 of each feature to calculate the position and orientation of the camera 410 relative to the photographic mat 34 and object 400 when the input image was recorded. More particularly, camera calculator 80 calculates the transformation (translation and rotation) in the coordinate system defined by the data stored at step S6 of the camera 410 when the input image was recorded.

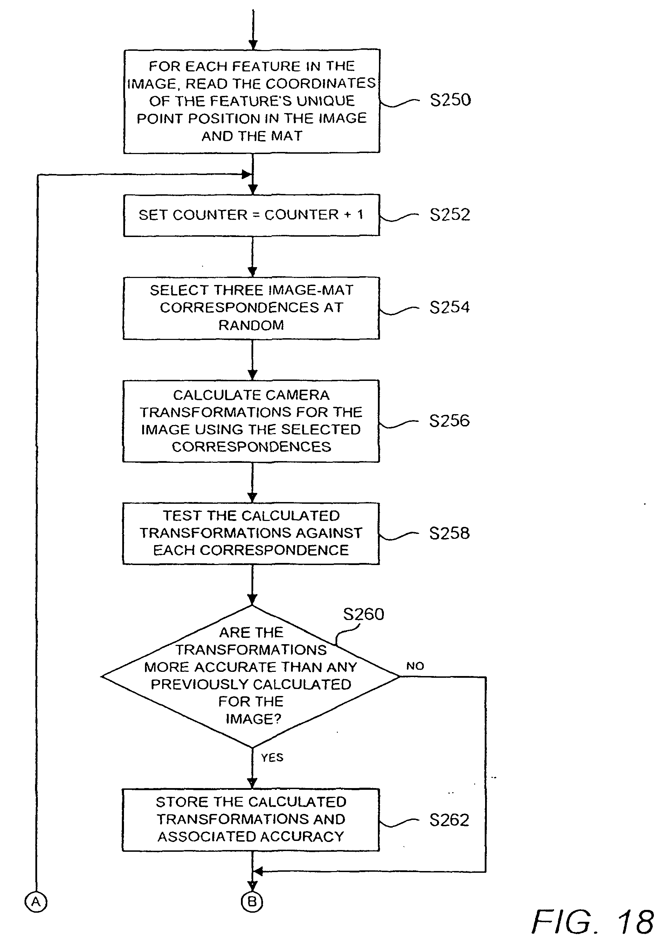

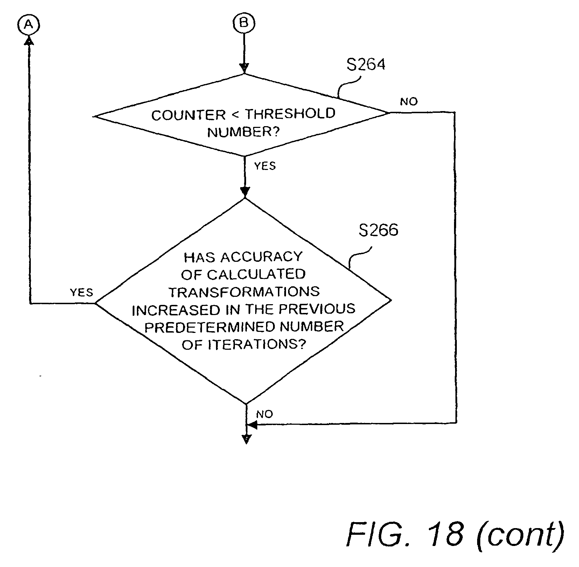

Figure 18 shows the processing operations performed by camera calculator 80 at step S38.

Referring to Figure 18, at step S250, camera calculator 80 reads the data stored at step S148 in Figure 12, which defines the coordinates of each feature's unique point position in the input image and the photographic mat 34.

At step S252, camera calculator 80 increments the value of a counter by 1 (the counter being set to the value 1 the first time step S252 is performed).

At step S254, camera calculator 80 selects at random three of the image-mat correspondences read at step S250 (each correspondence defining a feature position in the input image and the corresponding feature position on the photographic mat 34).

At step S256, camera calculator 80 uses the three correspondences selected at step S254 to calculate transformations defining the movement of the camera 410 within the coordinate system defined by the data stored at step S6 (Figure 2) to the imaging position and orientation at which the input image was recorded.

More particularly, in this embodiment, camera calculator 80 performs processing at step S256 to calculate the transformations in a conventional manner, for example as described in section 13.4.15 of "Computer and Robot Vision Volume 2" by R.M. Haralick and L.G. Shapiro, Addison-Wesley Publishing Company, 1993, ISBN 0-201-56943-4 (v.2).

At step S258, camera calculator 80 tests the transformations calculated at step S256 against each of the image-mat correspondences read at step S250. More particularly, for each feature point listed in the correspondences read at step S250, camera calculator 80 calculates the distance between the position of the feature point in the input image calculated by feature detector 50 (stored at step S58 in Figure 8) and the position in the input image generated when the corresponding feature from photographic mat 34 is projected from the photographic mat 34 into the input image using the transformations calculated at step S256, and determines whether the calculated distance between these positions is less than a threshold value. This processing is performed using the following equation, and is repeated for each point listed in the correspondences read at step S250, to determine the number of points for which the inequality holds:

$$\left| \underline{x}_i - \frac{P\underline{X}_i}{(PX_i)_3} \right| < d \qquad \qquad \ldots \ldots (2)$$

where: $\underline{x}_i$ is the position of the "i"th feature in the input image (stored at step S58 in Figure 8), given by $\underline{x}_i = (u_i, v_i, 1)$;
$\underline{X}_i$ is the position of the "i"th feature on the photographic mat 34, given by $\underline{X}_i = (x_i, y_i, z_i, 1)$;
"P" defines the camera transformations calculated at step S256, which is a 3 by 4 matrix, and is given in a conventional manner by P = K [R t], which K is a matrix defining the intrinsic parameters of the camera 410,
"R" is the calculated rotation and "t" is the calculated translation;
$(PX_i)_3$ is the third component of the vector $PX_i$;
$P\underline{X}_i / (PX_i)_3$ is the predicted position of the "i"th feature from the photographic mat 34 in the input image on the basis of the calculated camera transformations; and
"d" is a threshold value, which, in this embodiment, is set to d = 3 pixels.

At step S260, camera calculator 80 determines whether the camera transformations calculated at step S256 and tested at step S258 are more accurate than any camera transformations calculated when step S256 was performed during a previous iteration. More particularly, camera calculator 80 determines from the result of the test performed at step S258 whether the number of points which satisfy the inequality given in equation (2) above is greater than the number of points which satisfied the inequality when the current most accurate camera transformations were tested.

If it is determined at step S260 that the calculated transformations are more accurate than any calculated at step S256 during a previous iteration, then, at step S262, camera calculator 80 stores the calculated transformations together with the number of points satisfying the inequality defined in equation (2).

on the other hand, if it is determined at step S260 that the camera transformations are not more accurate than any previously calculated, then step S262 is omitted.

At step S264, camera calculator 80 determines whether the value of the counter incremented at step S252 is less than a threshold number defining the maximum number of iterations of steps S252 to S262 to be performed, which in this embodiment, is set to 10,000.

If it is determined at step S264 that the counter value is less than a threshold (indicating that the required number of iterations has not yet been performed), then, at step S266, camera calculator 80 determines whether the accuracy of the camera transformations calculated at step S256 (represented by the number of points satisfying the inequality in equation (2) above tested at step S258) has increased in the last predetermined number of iterations of steps S252 to S264 (the predetermined number being set to 2,000 in this embodiment).

If it is determined at step S266 that the accuracy has increased during the last 2,000 iterations, then it is determined that it is worthwhile performing further iterations, and steps S252 to S266 are repeated.

On the other hand, if it is determined at step S266 that there has not been any change in the accuracy of the calculated camera transformations, or if it is determined at step S264 that the counter value is no longer less than the threshold value, then no further camera transformations are calculated.

The camera transformations which are stored after all the iterations of steps S252 to S266 have been performed are the most accurate of those calculated, and are therefore used as the camera transformations defining the position and orientation of camera 410 when the input image was recorded.

Referring again to Figure 7, the processing for the input image currently being considered is now complete.

Accordingly, at step S40, processing apparatus 2 determines whether there is another input image to be processed, and steps S30 to S40 are repeated until each input image has been processed in the manner described above to determine the position and orientation of the camera 410 relative to the photographic mat 34 for each input image.

Referring again to Figure 6, at step S16, surface modeller 90 processes each input image to segment image data representing the object 400 from image data representing the photographic mat 34 and the surface 380 on which the mat 34 is placed (step S16 being a preliminary step in this embodiment to generate data for use in the definition of a 3D computer model of the surface of object 400).

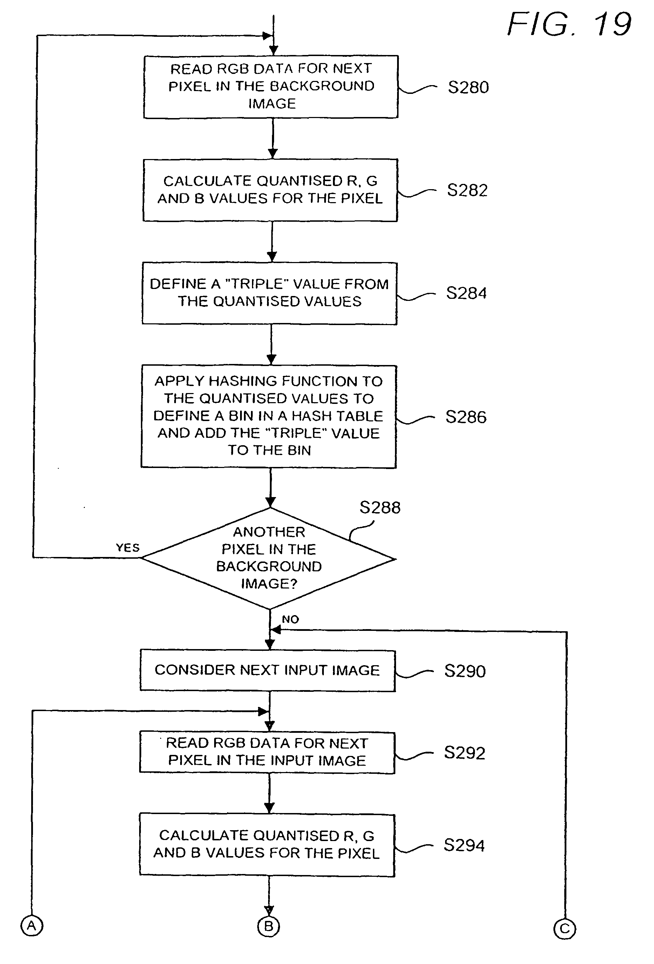

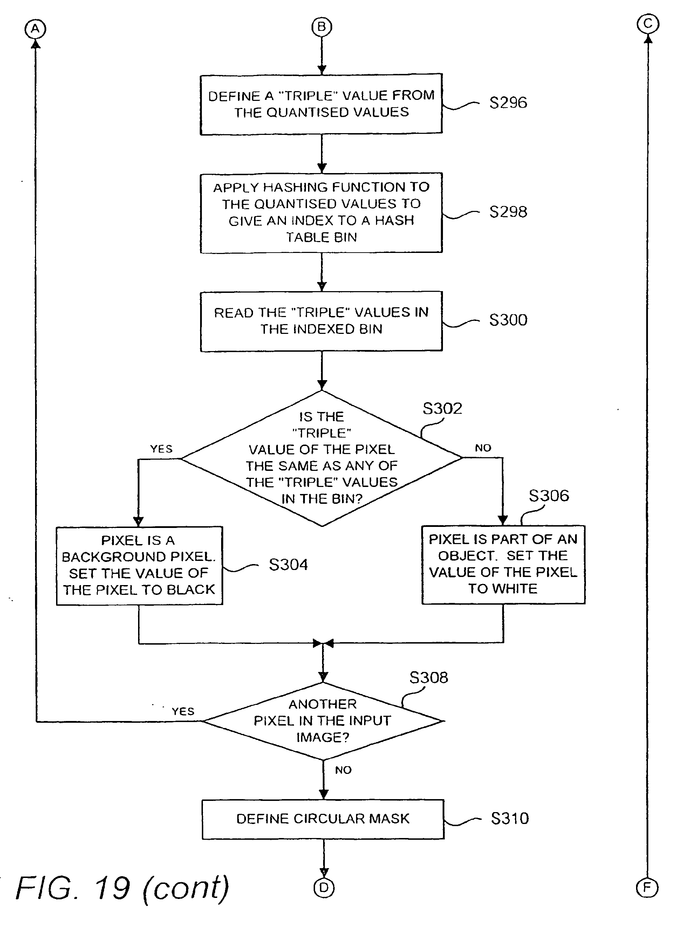

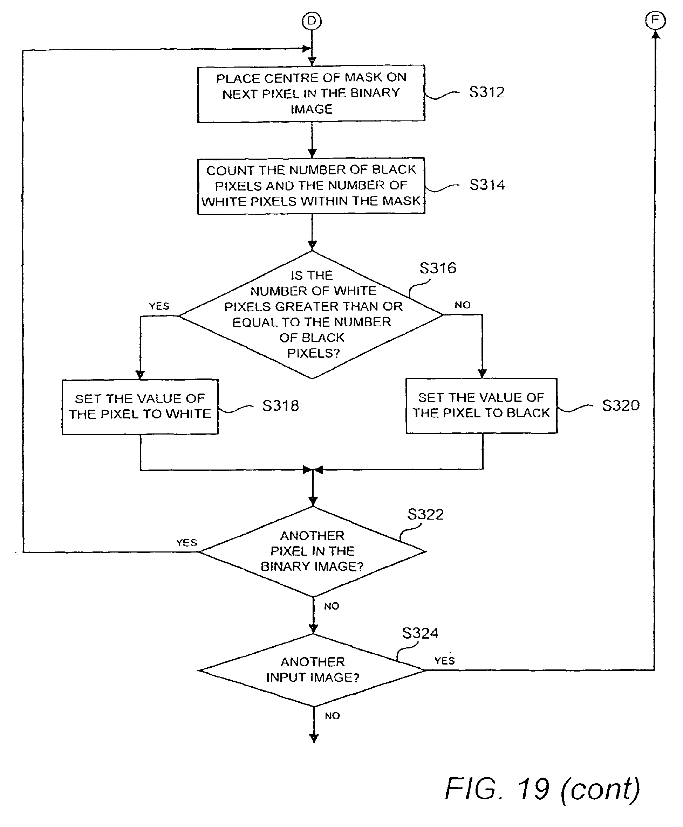

Figure 19 shows the processing operations performed by surface modeller 90 at step S16.

Referring to Figure 19, at steps S280 to S288, surface modeller 90 builds a hash table of quantised values representing the colours in the input images which represent the photographic mat 34 and the background 380 rather than the object 400 itself.

More particularly, at step S280, surface modeller 90 reads the RGB data values for the next pixel in the "background image" stored at step S12 in Figure 6 (that is, the final image to be input to processing apparatus 2 which shows the surface 380 and an object having the same colour as the material on which photographic mat 34 is printed).

At step S282, surface modeller 90 calculates a quantised red (R) value, a quantised green (G) and a quantised blue (B) value for the pixel in accordance with the following equation:

$$q = \frac{(p + t/2)}{t} \qquad \ldots \ldots (3)$$

where: "q" is the quantised value;

"p" is the R, G or B value read at step S280;

"t" is a threshold value determining how near RGB values from an input image showing the object 400 need to be to background colours to be labelled as background. In this embodiment, "t" is set to 4.

At step S284, surface modeller 90 combines the quantised R, G and B values calculated at step S282 into a "triple value" in a conventional manner.

At step S286, surface modeller 90 applies a hashing function to the quantised R, G and B values calculated at step S282 to define a bin in a hash table, and adds the "triple" value defined at step S284 to the defined bin. More particularly, in this embodiment, surface modeller 90 applies the following hashing function to the quantised R, G and B values to define the bin in the hash table:

$$h(q) = (q_{red} \& 7) * 2^6 + (q_{green} \& 7) * 2^3 + (q_{blue} \& 7) \ldots \ldots (4)$$

That is, the bin in the hash table is defined by the three least significant bits of each colour. This function is chosen to try and spread out the data into the available bins in the hash table, so that each bin has only a small number of "triple" values. In this embodiment, at step S286, the "triple" value is added to the bin only if it does not already exist therein, so that each "triple" value is added only once to the hash table.

At step S288, surface modeller 90 determines whether there is another pixel in the background image. Steps S280 to S288 are repeated until each pixel in the "background" image has been processed in the manner described above. As a result of this processing, a hash table is generated containing values representing the colours in the "background" image.

At steps S290 to S324, surface modeller 90 considers each input image in turn and uses the hash table to segment the data in the input image relating to the photographic mat 34 and background from the data in the input image relating to the object 400. In this embodiment, the "background" image processed at steps S280 to S288 to generate the hash table does not show the features 240-334 on the photographic mat 34. Accordingly, the segmentation performed at steps S290 to S324 does not distinguish pixel data relating to the object 400 from pixel data relating to a feature 240-334. Instead, in this embodiment, the processing performed by surface modeller 90 to generate the 3D computer model of the surface of object 400 (described below) is carried out in such a way that pixels relating to a feature on photographic mat 34 do not contribute to the surface model.

At step S290, surface modeller 90 considers the next input image, and at step S292 reads the R, G and B values for the next pixel in the input image (this being the first pixel the first time step S292 is performed).

At step S294, surface modeller 90 calculates a quantised R value, a quantised G value and a quantised B value for the pixel using equation (3) above.

At step S296, surface modeller 90 combines the quantised R, G and B values calculated at step S294 into a "triple value".

At step S298, surface modeller 90 applies a hashing function in accordance with equation (4) above to the quantised values calculated at step S294 to define a bin in the hash table generated at steps S280 to S288.

At step S300, surface modeller 90 reads the "triple" values in the hash table bin defined at step S298, these "triple" values representing the colours of the material of the photographic mat 34 and the background surface 380.

At step S302, surface modeller 90 determines whether the "triple" value generated at step S296 of the pixel in the input image currently being considered is the same as any of the background "triple" values in the hash table bin.

If it is determined at step S302 that the "triple" value of the pixel is the same as a background "triple" value, then, at step S304, it is determined that the pixel is a background pixel and the value of the pixel is set to "black".

On the other hand, if it is determined at step S302 that the "triple" value of the pixel is not the same as any "triple" value of the background, then, at step S306, it is determined that the pixel is part of the object 400 and surface modeller 90 sets the value of the pixel to "white".

At step S308, surface modeller 90 determines whether there is another pixel in the input image. Steps S292 to S308 are repeated until each pixel in the input image has been processed in the manner described above.

At steps S310 to S322, surface modeller 90 performs processing to correct any errors in the classification of image pixels as background pixels or object pixels.

More particularly, at step S310, surface modeller 90 defines a circular mask for use as a median filter. In this embodiment, the circular mask has a radius of 4 pixels.

At step S312, surface modeller 90 performs processing to place the centre of the mask defined at step S310 at the centre of the next pixel in the binary image generated at steps S304 and S306 (this being the first pixel the first time step S312 is performed).

At step S314, surface modeller 90 counts the number of black pixels and the number of white pixels within the mask.

At step S316, surface modeller 90 determines whether the number of white pixels within the mask is greater than or equal to the number of black pixels within the mask.

If it is determined at step S316 that the number of white pixels is greater than or equal to the number of black pixels, then, at step S318 surface modeller 90 sets the value of the pixel on which the mask is centred to white. On the other hand, if it is determined at step S316 that the number of black pixels is greater than the number of white pixels then, at step S320, surface modeller 90 sets the value of the pixel on which the mask is centred to black.

At step S322, surface modeller 90 determines whether there is another pixel in the binary image, and steps S312 to S322 are repeated until each pixel has been processed in the manner described above.

At step S324, surface modeller 90 determines whether there is another input image to be processed. Steps S290 to S324 are repeated until each input image has been processed in the manner described above.

Referring again to Figure 6, at step S18, surface modeller 90 performs processing to generate data defining a computer model of the 3D surface of the object 400.

In this embodiment, the processing at step S18 is performed in a conventional manner, and comprises the following three stages:

(1) The camera positions and orientations generated at step S14 and the segmented image data generated at step S16 is processed to generate a voxel carving, which comprises data defining the 3D grid of voxels enclosing the object. Surface modeller 90 performs processing for this stage in a conventional manner, for example as described in "Rapid Octree Construction from Image Sequences" by R. Szeliski in CVGIP: Image Understanding, Volume 58, Number 1, July 1993, pages 23-32.

(2) The data defining the voxel carving is processed to generate data defining a 3D surface mesh of triangles defining the surface of the object 400. In this embodiment, this stage of the processing is performed by surface modeller 90 in accordance with a conventional marching cubes algorithm, for example as described in W.E. Lorensen and H.E.Cline: "Marching Cubes: A High Resolution 3D Surface Construction Algorithm", in Computer Graphics, SIGGRAPH 87 proceedings, 21: 163-169, July 1987, or J. Bloomenthal: "An Implicit Surface Polygonizer", Graphics Gems IV, AP Professional, 1994, ISBN 0123361559, pp 324-350.

(3) The number of triangles in the surface mesh generated at stage 2 is substantially reduced by performing a decimation process.

In stage 3, surface modeller 90 performs processing in this embodiment to carry out the decimation process by randomly removing vertices from the triangular mesh generated in stage 2 to see if each vertex contributes to the shape of the surface of object 400 or not. Vertices which do not contribute to the shape are discarded from the triangulation, resulting in fewer vertices (and hence triangles) in the final model. The selection of vertices to remove and test is carried out in a random order in order to avoid the effect of gradually eroding a large part of the surface by consecutively removing neighbouring vertices. The decimation algorithm performed by surface modeller 90 in this embodiment is described below in pseudo-code.

> *INPUT*
>
> *Read in vertices*
>
> *Read in triples of vertex IDs making up triangles*
>
>
> *PROCESSING*
>
> *Repeat NVERTEX times*
>
> > *Choose a random vertex, V, which hasn't been chosen before*
> >
> > *Locate set of all triangles having V as a vertex, S*
> >
> > *Order S so adjacent triangles are next to each other*

*Re-triangulate triangle set, ignoring V (i.e. remove selected*

*triangles & V and then fill in hole)*

*Find the maximum distance between V and the plane of each*

*triangle*

*If (distance < threshold)*

> *Discard V and keep new triangulation*

*Else*

> *Keep V and return to old triangulation*


*OUTPUT*

*Output list of kept vertices*

*Output updated list of triangles*


since the absolute positions of the features 240-334 on photographic mat 34 are known (the features having been printed in accordance with the diameter stored at step S4), the 3D computer model of the surface of object 400 is generated to the correct scale.

At step S20, surface texturer 100 processes the input image data to generate texture data for each surface triangle in the surface model generated by surface modeller 90 at step S18.

More particularly, in this embodiment, surface texturer 100 performs processing in a conventional manner to consider each surface triangle in the surface mesh generated at step S18 and to find the input image "i" which is most front-facing to the triangle. That is, the input image is found for which the value $\hat{n}_t.\hat{v}_i$ is largest, where $\hat{n}_t$ is the triangle normal and $\hat{v}_i$ is the viewing direction for the "i"th image. This identifies the input image in which the surface triangle has the largest projected area.

The surface triangle is then projected into the identified input image, and the vertices of the projected triangle are used as texture coordinates to define an image texture map.

The result of performing the processing described above is a VRML (or similar format) model of the surface of object 400, complete with texture coordinates defining image data to be rendered onto the model.

At step S22, central controller 20 outputs the data defining the 3D computer model of the object 400 from output data store 120, for example as data stored on a storage device such as disk 122 or as a signal 124 (Figure 1). In addition, or instead, central controller 20 may cause display processor 110 to display an image of the 3D computer model of the object 400 in accordance with a viewpoint input by a user, for example using a user input device 6. In addition, the data defining the position and orientation of the camera 410 for one or more input images generated at step S14 by camera calculator 80 may also be output, for example as data recorded on a storage device such as disk 122 or as a signal 124.

In the first embodiment described above, the clusters 200, 206, 212 and 218 on the photographic mat 34 are identical and the clusters 202, 204, 208, 210, 214, 216, 220 and 222 are identical. The one-to-one correspondence between each feature found in an input image and a feature on the photographic mat 34 is identified by labelling each feature within a cluster in dependence upon the feature's position relative to a predetermined point on the photographic mat in the input image (steps S140 and S142 in Figure 12), labelling the clusters 200, 206, 212 and 218 in dependence upon the positions of the red features within these clusters (these positions being determined relative to the predetermined point on the mat) (step S144 in Figure 12) and labelling each of the clusters 202, 204, 208, 210, 214, 216, 220 and 222 in dependence upon its position relative to one of the clusters 200, 206, 212 or 218 (or another identified cluster if it can not be labelled from a cluster containing a red feature).

Second Embodiment

A second embodiment of the invention will now be described. In the second embodiment, features are provided on photographic mat 34 such that it is not necessary to determine the position of a predetermined point on the photographic mat in the input image in order label the features.

The components of the second embodiment and the processing operations performed by the components are the same as those in the first embodiment, with the exception that the pattern on the photographic mat 34 is different, and the processing performed by feature identifier 70 at step S36 in Figure 7 is different.

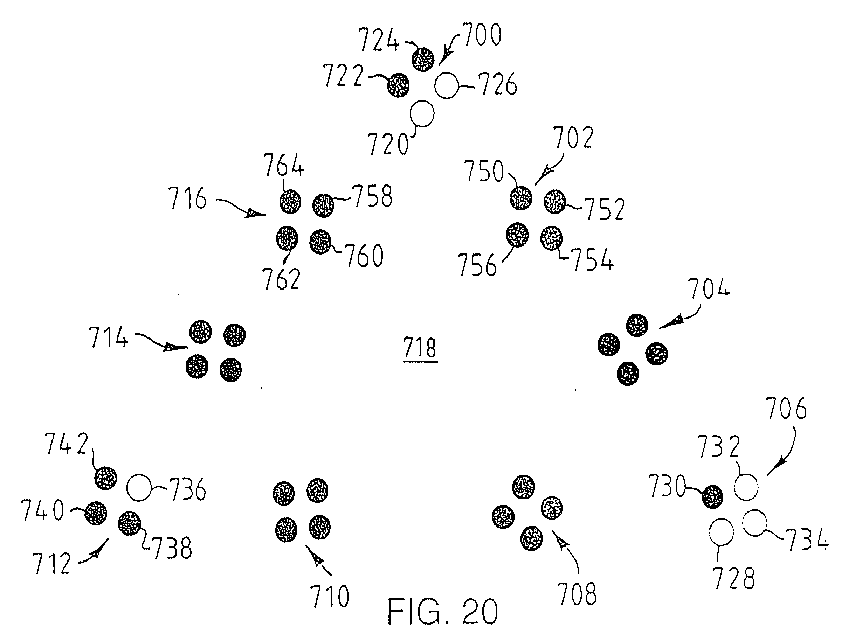

Figure 20 shows the pattern of features on a photographic mat 34 printed or displayed in the second embodiment.

Referring to Figure 20, the pattern comprises a plurality of clusters 700-716 arranged in a triangle around a central empty area 718. The size of the central area 718 is such that a circle having the diameter stored at step S4 (Figure 2) can be drawn without touching any of the features in the clusters 700-716.

Each cluster 700-716 contains four features, which, in this embodiment, are circles. As in Figure 3, a black circle with a white centre in Figure 20 represents a circle which is all red on the photographic mat 34, while a solid black circle in Figure 20 represents a circle which is all black on the photographic mat 34.

Three of the clusters on the photographic mat 34 in the second embodiment contain red features. Cluster 712 contains a single red feature 736, cluster 700 contains two red features 720 and 726, and cluster 706 contains three red features 728, 732 and 734. Since the clusters 700, 706 and 712 contain different numbers of red features, each of these clusters is unique unlike the clusters 200, 206, 212 and 218 in the first embodiment. Accordingly, a unique label can be assigned to each of the clusters 700, 706 and 712 whenever one of these clusters is detected in an input image. In addition, the features within each cluster 700, 706 and 712 (and the other clusters 702, 704, 708, 710, 714 and 716) can be labelled without reference to a predetermined point on the photographic mat 34, as will be described below.

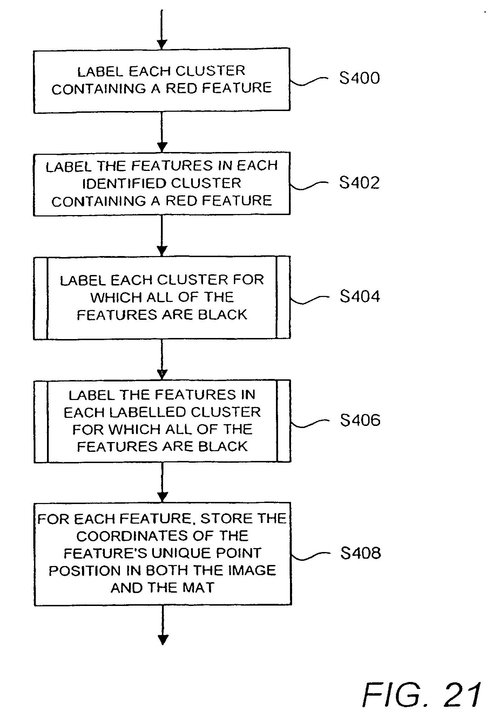

Figure 21 shows the processing operations performed by feature identifier 70 in the second embodiment at step S36 in Figure 7.

Referring to Figure 21, at step S400, feature identifier 70 labels each cluster in the input image which contains a red feature. As noted above, the clusters containing red features can be uniquely labelled because they contain different numbers of red features. That is, at step S400, feature identifier 70 labels the clusters in dependence upon the number of red features which they contain.

At step S402, feature identifier 70 labels the features in each identified cluster containing a red feature.

More particularly, referring to Figure 20, feature identifier 70 labels as feature 1 in a cluster the red feature in the cluster for which the adjacent feature in a clockwise direction is a black feature. Thus, referring to Figure 20, feature 720 is labelled as feature 1 of cluster 700, feature 728 is labelled as feature 1 of cluster 706 and feature 736 is labelled as feature 1 of cluster 712. The remaining features are then labelled in a clockwise direction from feature 1 in the cluster. Thus, for example, in cluster 700, feature 722 is labelled as feature 2, feature 724 is labelled as feature 3 and feature 726 is labelled as feature 4. Similarly, in cluster 712, feature 738 is labelled as feature 2, feature 740 is labelled as feature 3, and feature 742 is labelled as feature 4.

As a result of performing the processing at steps S400 to S402, a one-to-one correspondence between each feature in a cluster containing a red feature in the input image and a feature on the photographic mat 34 has been identified.

At step S404, feature identifier 70 labels each cluster in the input image for which all of the features are black. The processing performed at step S404 corresponds to the processing performed in the first embodiment at step S146 (Figure 12). As this processing has been described above with reference to Figure 16, it will not be described again here.

At step S406, feature identifier 70 labels the features within each cluster that was labelled at step S404. That is, feature identifier 70 labels the features in each labelled cluster for which all of the features are black.

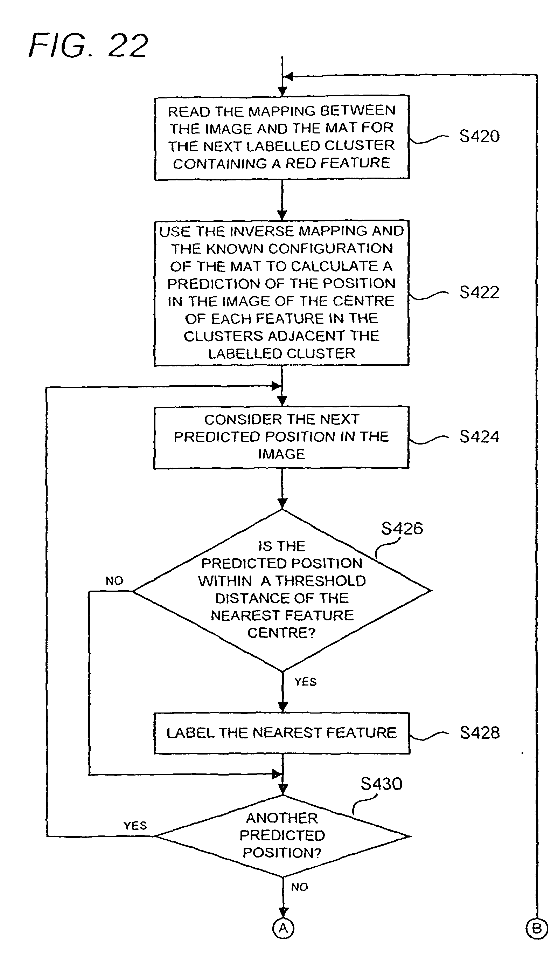

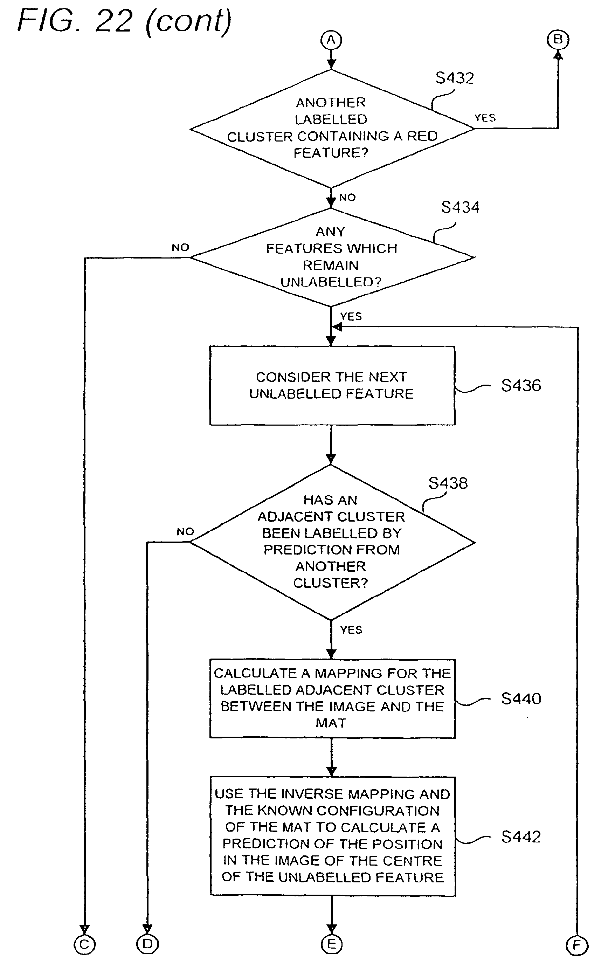

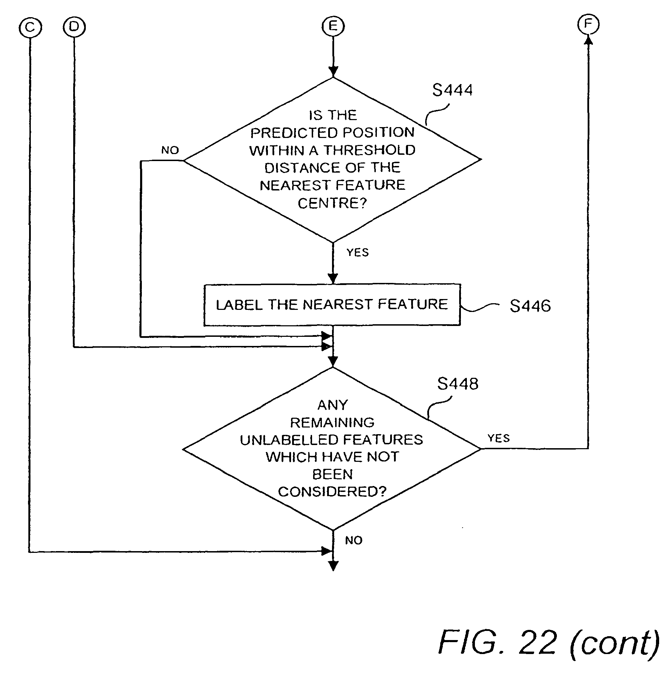

Figure 22 shows the processing operations performed by feature identifier 70 at step S406. These operations are similar to the operations performed at step S404 to label the clusters, since the processing is based on predicting the position of a feature, testing whether a feature in the input image is within a threshold distance of a predicted position, and labelling the feature in the input image if it is within the threshold distance.

More particularly, referring to Figure 22, at step S420, feature identifier 70 reads the mapping between the image and the mat for the next labelled cluster containing a red feature, this mapping having being previously calculated at step S200 in Figure 16 when step S404 was performed.

At step S422, feature identifier 70 calculates the inverse of the mapping read at step S420 and uses the inverse mapping together with the known positions of the features on the photographic mat 34 to calculate a prediction of the respective position in the input image of the centre of each feature in the clusters adjacent the labelled cluster.

Thus, referring to Figure 20, if cluster 700 is the labelled cluster considered at step S420, then, at step S422, feature identifier 70 predicts the position in the input image of the centre of each of features 750-756 in cluster 702 and each of features 758-764 in cluster 716.

At step S424, feature identifier 70 considers the next predicted position calculated at step S422 (this being the first predicted position the first time step S424 is performed).

At step S426, feature identifier 70 determines whether the predicted position is within a threshold distance of the centre of the nearest feature in the input image. In this embodiment, the threshold distance is set to 20 pixels.

If it is determined at step S426 that the predicted position is within the threshold distance of the nearest feature centre, then, at step S428, feature identifier 70 labels the nearest feature in the input image, this being possible since the corresponding feature on the photographic mat 34 is known because each predicted position was calculated at step S422 specifically for a unique feature on the photographic mat.

On the other hand, if it is determined at step S426 that the predicted position is not within a threshold distance of the nearest feature centre, then step S428 is omitted so that the feature remains unlabelled.

At step S430, feature identifier 70 determines whether there is another predicted position calculated at step S422 for which processing has not been performed. Steps S424 to S430 are repeated until each predicted position has been processed in the manner described above.

At step S432, feature identifier 70 determines whether there is another labelled cluster containing a red feature. Steps S420 to S432 are repeated until each labelled cluster containing a red feature has been processed in the manner described above.

If each of the clusters 700, 706 and 712 containing a red feature is visible in the input image, then the processing performed at steps S420 to S432 should label each of the features in clusters 702, 704, 708, 710, 714 and 716.

However, in case any feature remains unlabelled (which would arise, for example, if one of the clusters containing a red feature was obscured by the object 400 so that it was not visible in the input image), feature identifier 70 performs additional processing at steps S434 to S448.

More particularly, at step S434, feature identifier 70 determines whether any features remain unlabelled.

If it is determined at step S434 that no features in the input image remain unlabelled, then the processing at step S406 (Figure 21) is complete.

On the other hand, if it is determined at step S434 that at least one feature in the input image remains unlabelled, then, at step S436, feature identifier 70 considers the next unlabelled feature (this being the first unlabelled feature the first time step S436 is performed).

At step S438, feature identifier 70 determines whether a cluster adjacent to the cluster containing the unlabelled feature selected at step S436 has been labelled by prediction from another cluster.

Referring to Figure 20, if the unlabelled feature considered at step S436 is part of cluster 716, feature identifier 70 would determine at step S438 whether cluster 714 has been labelled by prediction at step S210 (Figure 16).

If it is determined at step S438 that an adjacent cluster has not been labelled by prediction from another cluster, then the processing proceeds to step S448, leaving the feature considered at step S436 unlabelled.

On the other hand, if it is determined at step S438 that an adjacent cluster has been labelled at step S210 (Figure 16) then, at step S440, feature identifier 70 calculates a mapping for the labelled adjacent cluster between the input image and the photographic mat 34 if such a mapping has not already been calculated when step S404 was performed. The mapping is calculated at step S440 in the same way that the mapping was calculated at step S222 in Figure 16 (that is, in a conventional manner, for example as described in "Digital Image Processing and Computer Vision" by R.J. Schalkoff, John Wiley and Sons, ISBN 047150536-6, Chapter 3).

At step S442, feature identifier 70 calculates the inverse of the mapping calculated or read at step S440, and uses the inverse mapping and the known positions of the features on the photographic mat 34 to calculate a prediction of the position in the input image of the centre of the unlabelled feature.

At step S444, feature identifier 70 determines whether the predicted position is within a threshold distance of the centre of the nearest feature in the input image. In this embodiment, the threshold distance is set to 20 pixels.

If it is determined at step S444 that the nearest feature in the input image is within the threshold distance of the predicted position, then, at step S446, the nearest feature is labelled.

On the other hand, if it is determined at step S444 that the distance between the nearest feature centre and the predicted position exceeds the threshold distance, then step S446 is omitted, leaving the feature considered at step S436 unlabelled.

At step S448, feature identifier 70 determines whether there are any remaining unlabelled features which have not yet been considered. Steps S436 to S448 are repeated until each unlabelled feature has been processed in the manner described above.

Referring again to Figure 21, at step S408, feature identifier 70 stores, for each feature in the input image, the coordinates of the feature's unique point position in the input image and the feature's unique point position on the photographic mat 34.

In the first and second embodiments described above, each cluster of features on the photographic mat 34 contains the same number of features, and some of the clusters contain red features, which enables these clusters to be labelled. The labelled clusters containing red features are then used to label the clusters in which all of the features are black.

Third Embodiment

A third embodiment of the invention will now be described.

In the third embodiment, rather than providing clusters of features containing red features as in the first and second embodiments, a plurality of single features are provided on the photographic mat 34 which can be distinguished from each other and which can be used to label clusters of features in which all of the features are black.

The components of the third embodiment and the processing operations performed by the components are the same as those in the first embodiment, with the exception that the pattern on the photographic mat 34 is different, and the processing performed by feature detector 50 at step S32 in Figure 7 and the processing performed by feature identifier 70 at step S36 in Figure 7 is different.

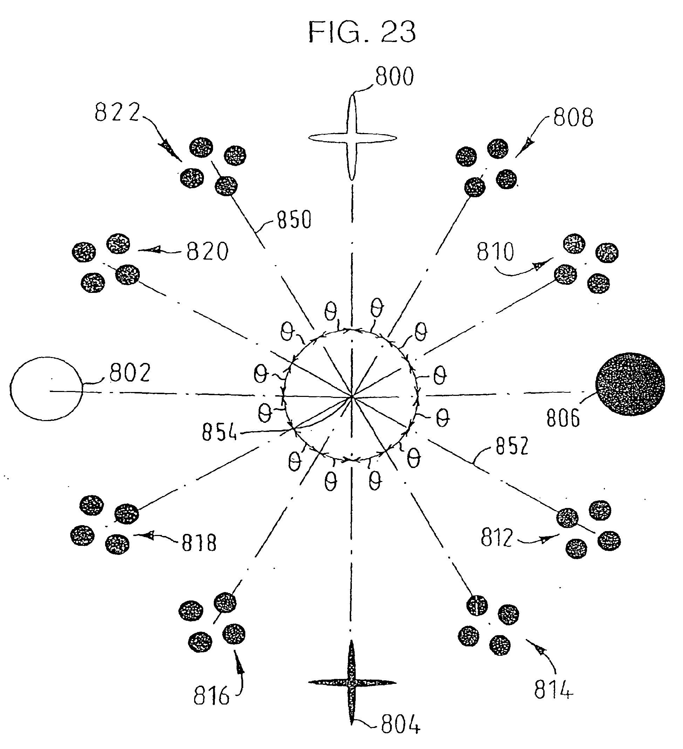

Figure 23 shows the pattern of features on a photographic mat 34 printed or displayed in the third embodiment.

Referring to Figure 23, the pattern on the photographic mat 34 in the third embodiment comprises a red star 800, a red circle 802, a black star 804 and a black circle 806, together with clusters 808, 810, 812, 814, 816, 818, 820 and 822, each cluster containing four black circles such that the clusters are identical.

The centres of features 800-806 and the centres of clusters 808-822 are arranged on the perimeter of a circle having a diameter based on the diameter stored at step S4 (Figure 2), leaving a space in the centre on which object 400 can be placed.

As in the first embodiment, the features are arranged within clusters 808-822 such that an imaginary line (that is a line not present on photographic mat 34) drawn through two opposing features in a cluster (such as line 850 for cluster 822 and line 852 for cluster 812) passes through the centre 854 of the circle on which the features and clusters are arranged.

Features 800-806 and clusters 808-822 are arranged on the photographic mat such that, if the centre of each of features 800-806 and the centre of each of clusters 808-822 are connected to the centre 854, the angle θ between each pair of adjacent connecting lines (that is, the dashed lines in Figure 23) is equal. That is, the centres of features 800-806 and the centres of clusters 808-822 are equally spaced on the perimeter of a circle.

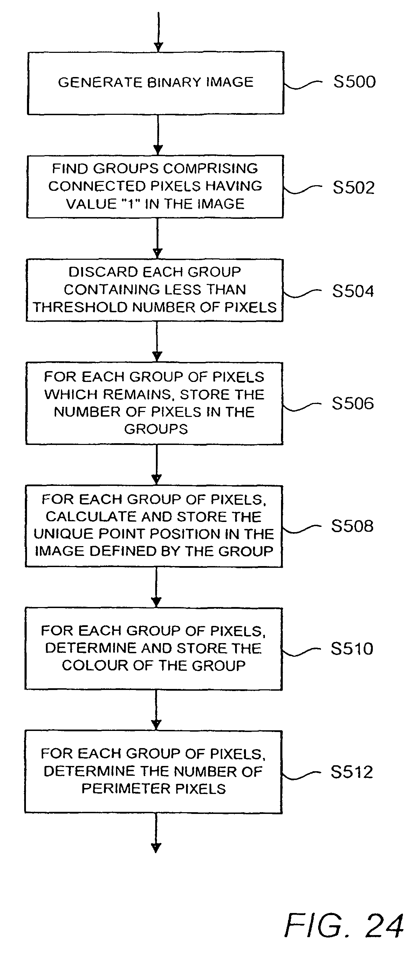

Figure 24 shows the processing operations performed by feature detector 50 at step S32 (Figure 7) in the third embodiment.

Referring to Figure 24, the processing operations performed at steps S500 to S508 are the same as the processing operations performed at steps S50 to S58 (Figure 8) in the first embodiment. As these processing operations have been described above, they will not be described again here.

At step S510, feature detector 50 determines and stores the colour of each group of pixels in the input image. In the first embodiment, this step was performed (step S60 in Figure 8) by determining the colour of the pixel in the input image closest to the unique point position defined by the group. However, in the third embodiment, any error in the calculation of the centre of cross 800 or cross 804 may result in a pixel position which is not actually part of the cross (since the centre of the cross is narrow compared to a circle). Accordingly, in the third embodiment, at step S510, feature detector 50 determines the colour of each group of pixels by taking the average R value, the average G value and the average B value of the pixels in the group and determining the colour in dependence upon the average values.

At step S512, feature detector 50 determines and stores the number of perimeter pixels in each group of pixels, that is, the number of pixels which are on the outer edge of the group of pixels. In this embodiment, feature detector 50 identifies a perimeter pixel as a pixel which is connected to a pixel which is not part of the group of pixels (that is a pixel having value 0).

As noted above, the processing operations performed by feature clusterer 60 in the third embodiment are the same as those performed in the first embodiment. Accordingly, it should be noted that features 800-806 on the photographic mat 34 in the third embodiment will not be part of a cluster formed by feature clusterer 60 (since a cluster containing one of features 800-806 will be rejected when the sizes of features in the cluster are compared at steps S106 to S114 in Figure 9).

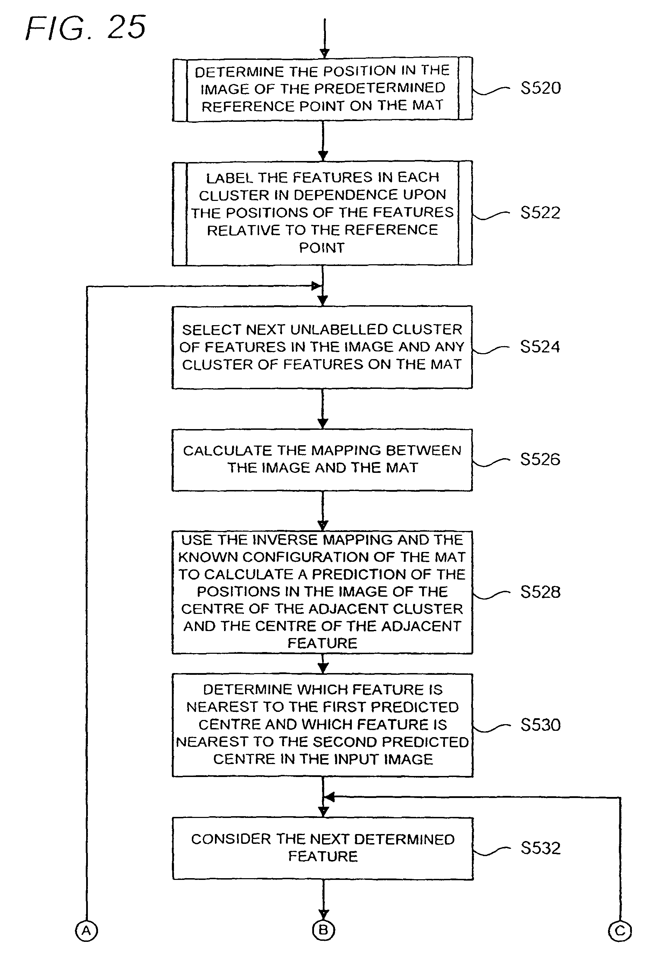

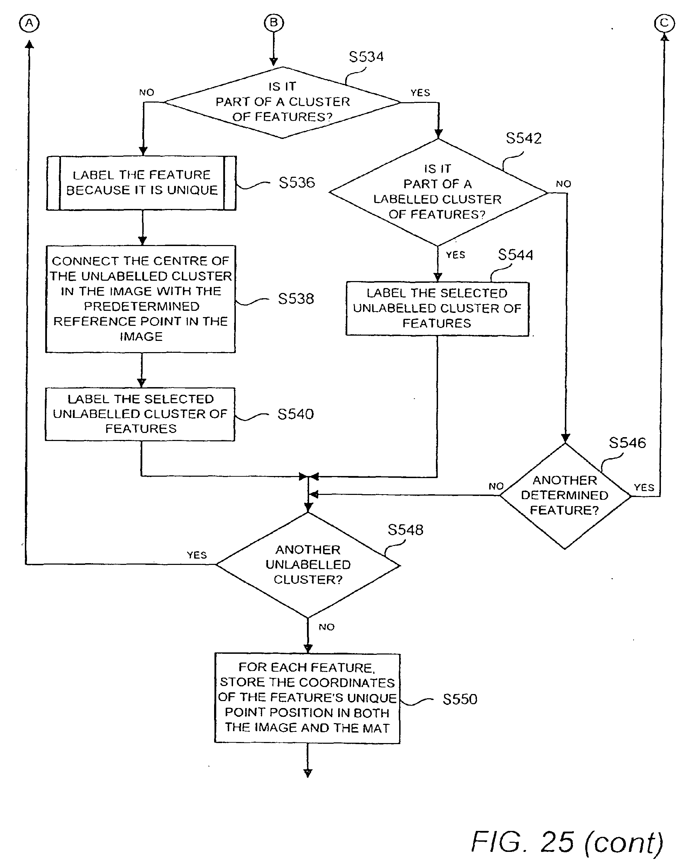

Figure 25 shows the processing operations performed by feature identifier 70 at step S36 (Figure 7) in the third embodiment.

In the first and second embodiments, a number of clusters containing red features are provided on the photographic mat 34, and the features within these clusters can be uniquely identified in an input image because processing is performed to ensure that each cluster corresponds to a cluster on the photographic mat 34 (and not a cluster containing one or more features on the object 400), and because each cluster containing a red feature can be distinguished from all of the other clusters. Further, each of the clusters containing a red feature contains four features in total and, therefore, by labelling the features in a cluster containing a red feature, four correspondences between points in the input image and points on the photographic mat are identified. This enables feature identifier 70 in the first and second embodiments to calculate a mapping between the input image and the mat, and hence predict the positions of adjacent clusters in which all of the features are black.

However, in the third embodiment, none of features 800-806 is part of a cluster. Consequently, no processing has been performed to label features 800-806 (that is, to determine which features in the input image correspond to these features on the photographic mat). Further, only one unique point position is defined for each of features 800-806 (that is, the centre of the feature).

Accordingly, in the third embodiment, feature identifier 70 can not label each of the clusters 808-822 in dependence upon a prediction from a feature 800-806 since, firstly, none of features 800-806 has been labelled, and, secondly, even if the features had been labelled, there are not enough image-mat correspondences for a single feature 800-806 to calculate a mapping between the image and the mat.

The way in which labelling is performed instead will now be described.

Referring to Figure 25, step S520 and step S522 correspond to step S140 and step S142 respectively in the first embodiment (Figure 12). As the processing performed at these steps has been described above, it will not be described again here.

At step S524, feature identifier 70 selects the next unlabelled cluster 808-822 of features in the input image (this being the first unlabelled cluster the first time step S524 is performed) and any cluster of features on the photographic mat 34.

At step S526, feature identifier 70 calculates a mapping between the input image and the photographic mat 34. In this embodiment, this is performed by assigning at random a one-to-one correspondence between the features in the unlabelled cluster in the input image selected at step S524 and the features in the cluster on the photographic mat 34 selected at step S524, and calculating the mapping using the assigned correspondences in a conventional manner, for example as described in "Digital Image Processing and Computer Vision" by R.J. Schalkoff, John Wiley and Sons, ISBN 047150536-6, Chapter 3.

At step S528, feature identifier 70 calculates the inverse of the mapping calculated at step S526 and uses the inverse mapping and the known positions of the features on the photographic mat 34 to calculate a prediction of the positions in the input image of the centre of the cluster adjacent the cluster on the photographic mat selected at step S524 and the centre of the feature on the photographic mat adjacent the cluster selected at step S524.

Thus, referring to Figure 23, if cluster 808 on the photographic mat is selected at step S524, then, at step S528, feature identifier 70 would predict the position of the input image of the centre of cluster 810 and the centre of feature 800.

Due to the symmetrical arrangement of the features 800-806, the clusters 808-822 and the circles within the clusters on the photographic mat 34, the positions predicted at step S528 will apply no matter which of the clusters on the photographic mat is selected at step S524 to be used in conjunction with the unlabelled cluster of features in the input image to generate one-to-one correspondences.

At step S530, feature identifier 70 determines which feature in the input image is nearest to the position of the first centre predicted at step S528, and which feature in the input image is nearest to the second centre predicted at step S528.

At step S532, feature identifier 70 considers the next feature determined at step S530 to be nearest to a predicted centre (this being the first feature the first time step S532 is performed), and, at step S534, determines whether the feature is part of a cluster of features.

If it is determined at step S534 that the feature is not part of a cluster of features, then, the feature must be one of stars 800 or 804, or one of the circles 802 or 806. Accordingly, at step S536, feature identifier 70 labels the feature.

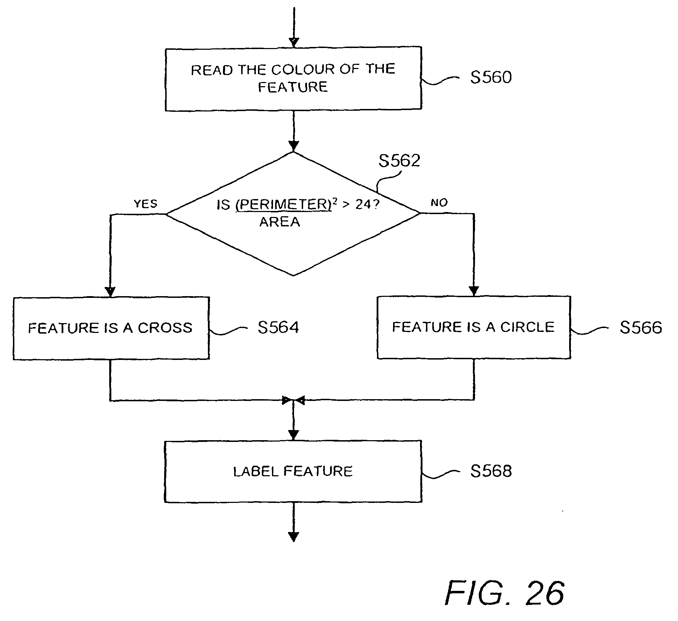

Figure 26 shows the processing operations performed by feature identifier 70 at step S536.

Referring to Figure 26, at step S560, feature identifier 70 reads the colour of the feature (which was stored at step S510 in Figure 24).

At step S562, feature identifier 70 determines whether the square of the number of perimeter pixels divided by the total number of pixels making up the feature is greater than a threshold value, which, in this embodiment is set to 24.

If it is determined at step S562 that the calculated value is greater than 24, then, at step S564, feature identifier 70 determines that the feature is a cross.

On the other hand, if it is determined at step S562 that the calculated value is not greater than 24, then, at step S566, feature identifier 70 determines that the feature is a circle.

At step S568, feature identifier 70 labels the feature in dependence upon the colour of the feature read at step S560 and whether the feature was determined to be a cross at step S564 or a circle at step S566.

As described above, feature identifier 70 labels the features 800-806 in dependence upon the prediction of a position in the input image using one of the clusters 808-822. Accordingly, this provides a reliable way to distinguish the features 800-806 from features on the object 400, since features on the object are unlikely to have a position in the image corresponding to a predicted position.

Referring again to Figure 25, if it is determined at step S534 that the feature is not part of a cluster of features, and the feature is labelled at step S536, then the unlabelled cluster from the input image selected at step S524 must be a cluster adjacent the feature labelled at step S536. Thus, referring to Figure 23, if the feature labelled at step S536 is feature 800 for example, then the unlabelled cluster from the image selected at step S524 is either cluster 808 or cluster 822.

At steps S538 and S540, feature identifier 70 performs processing to determine which of the two clusters adjacent the labelled feature on the photographic mat corresponds to the unlabelled cluster in the input image selected at step S524.

More particularly, at step S538, feature identifier 70 connects in the input image the centre of the unlabelled cluster selected at step S524 (this centre having being stored at step S122 in Figure 9) and the predetermined reference point in the image determined at step S520.

At step S540, feature identifier 70 labels the unlabelled cluster selected at step S524 in dependence upon the label assigned to the feature at step S536 and the position of that feature relative to the line generated at step S538.

More particularly, referring to Figure 23, if the feature labelled at step S536 is feature 800, then the unlabelled cluster selected at step S524 is cluster 822 if feature 800 lies to the right (that is, in a clockwise direction) of line 850 generated at step S538. On the other hand, if the unlabelled cluster selected at step S524 is cluster 808, then feature 800 will lie to the left (that is, in an anti-clockwise direction) of the line generated at step S538.

On the other hand, if it is determined at step S534 that the feature considered at step S532 is part of a cluster of features, then, at step S542, feature identifier 70 determines whether the feature considered at step S532 is part of a labelled cluster of features. The first time step S542 is performed, no clusters of features will have been labelled, but in subsequent iterations, clusters may have been labelled.

If it is determined at step S542 that the feature is part of a labelled cluster, then, at step S544, feature identifier 70 labels the unlabelled cluster of features selected from the input image at step S524. More particularly, a unique label can be assigned to the unlabelled cluster selected at step S524 since each cluster on photographic mat 34 is adjacent to only one other cluster.

Thus, referring to Figure 23, if it is determined at step S542 that the feature considered at step S532 is part of labelled cluster 822 for example, then, at step S544, feature identifier 70 labels the unlabelled cluster as cluster 820 (since this is the only cluster adjacent cluster 822).

On the other hand, if it is determined at step S542 that the feature considered at step S532 is not part of a labelled cluster of features, then, at step S546, feature identifier 70 determines whether there is another feature which was determined at step S530 to be nearest to a predicted centre to be processed. Steps S532 to S546 are repeated until the feature nearest the first predicted centre and the feature nearest the second predicted centre have been processed in the manner described above.

At step S548, feature identifier 70 determines whether there is another unlabelled cluster of features in the input image. Steps S524 to S548 are repeated until each unlabelled cluster has been processed in the manner described above.

After performing the processing described above, feature identifier 70 has labelled each cluster and each feature on the photographic mat 34 which is visible in the input image.

Accordingly, at step S550, feature identifier 70 stores the coordinates for each feature of the feature's unique point position in both the input image and the photographic mat 34.

In the first, second and third embodiments described above, at least some of the clusters of features on the photographic mat 34 are identical (that is, the clusters in which all of the features are black), and the one-to-one correspondence between the features in these identical clusters in an input image and the features on the photographic mat 34 are identified using a feature or a cluster of features which is unique (that is, clusters 200, 206, 212 and 218 in the first embodiment, clusters 700, 706 and 712 in the second embodiment and features 800, 802, 804 and 806 in the third embodiment).

Fourth Embodiment

A fourth embodiment of the invention will now be described. In the fourth embodiment, each cluster of features on photographic mat 34 is unique, so that each feature in the input image can be labelled without reference to another feature or cluster.

The components of the fourth embodiment and the processing operations performed by the components are the same as those in the first embodiment, with the exception that the pattern on the photographic mat 34 is different, and the processing performed by feature identifier 70 at step S36 in Figure 7 is different. In addition, although the processing operations performed by feature clusterer 60 in the fourth embodiment are the same as those in the first embodiment, the processing is performed to identify clusters containing five features, rather than four features.

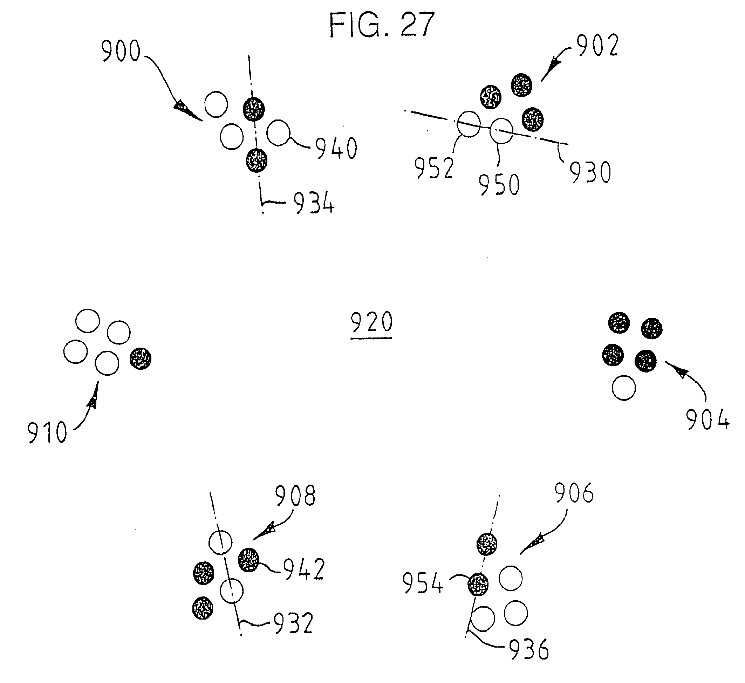

Figure 27 shows the pattern of features on a photographic mat 34 printed or displayed in the fourth embodiment.

Referring to Figure 27, in the fourth embodiment, the pattern on photographic mat 34 comprises a plurality of clusters 900-910, each of which contains five features. In this embodiment, each feature is a circle, and in Figure 27 black circles with a white interior represent circles which are actually red on photographic mat 34 and solid black circles represent circles which are black on photographic mat 34.

The clusters 900-910 are arranged around a blank area 920 on which object 400 is to be placed (area 920 being sized so that a circle having the diameter stored at step S4 in Figure 2 can be drawn therein). However, the clusters do not necessarily lie in a circle, or any other shape, although the position of each feature within each cluster is known and stored by mat generator 30 at step S6 (Figure 2) for use in processing by processing apparatus 2.

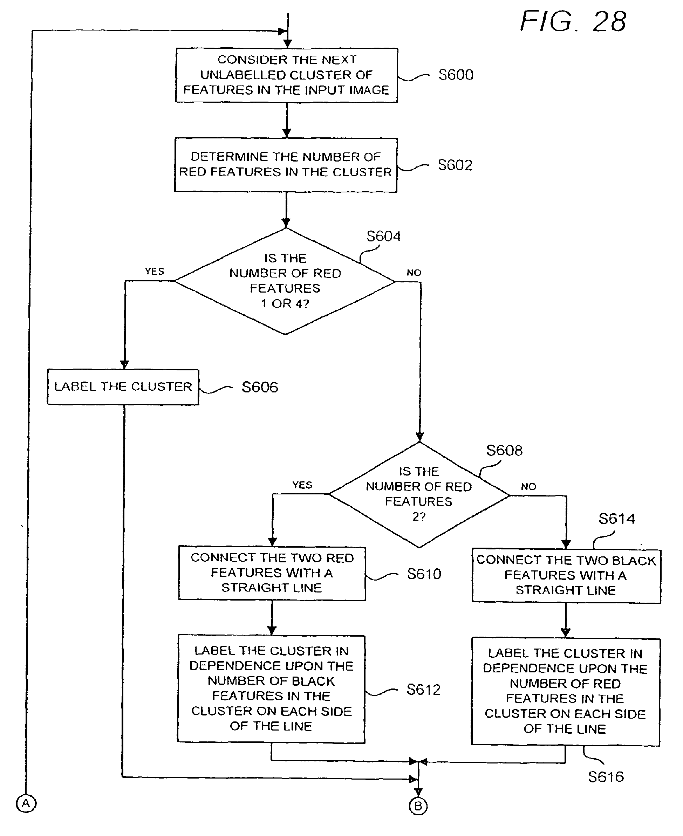

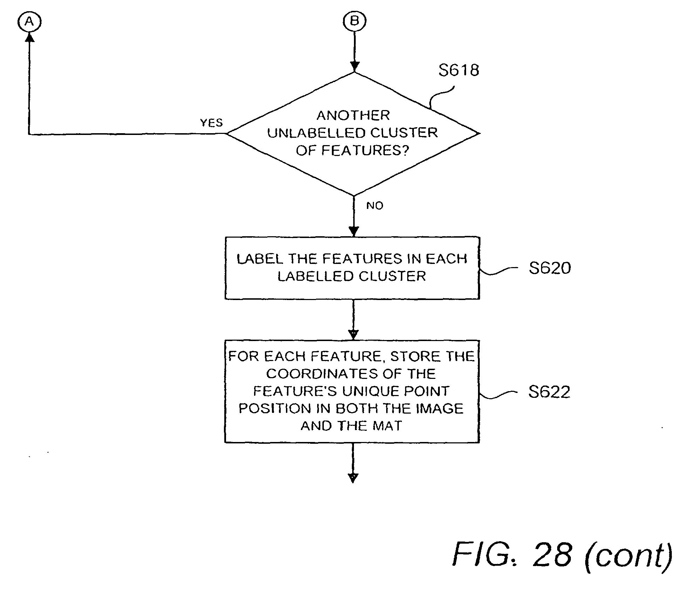

Figure 28 shows the processing operations performed in the fourth embodiment by feature identifier 70 at step S36 in Figure 7.

Referring to Figure 28, at step S600, feature identifier 70 considers the next unlabelled cluster of features in the input image (this being the first unlabelled cluster the first time step S600 is performed).

At step S602, feature identifier 70 determines the number of red features in the cluster (the colour of each feature having being stored by feature detector 50 at step S60 in Figure 8).

At step S604, feature identifier 70 determines whether the number of red features is one or four.

If it is determined at step S604 that the number of red features is one or four, then, at step S606, feature identifier 70 labels the cluster. More particularly, referring to Figure 27, if the number of red features is one, the cluster is labelled as cluster 904, while if the number of red features is four, the cluster is labelled as cluster 910.

On the other hand, if it is determined at step S604 that the number of red features is not one or four, then, at step S608, feature identifier 70 determines whether the number of red features is two.

If it is determined at step S608 that the number of red features is two, then, at step S610, feature identifier 70 connects the centre of the two red features with a straight line. Then, at step S612, feature identifier 70 labels the cluster in dependence upon the number of black features in the cluster on each side of the line generated at step S610.

Referring to Figure 27, if it is determined at step S608 that the number of red features in the cluster is two, then the cluster is either cluster 902 or cluster 908. At step S612, feature identifier 70 labels the cluster as cluster 902 if all of the black features lie on the same side of line 930 generated at step S610, and labels the cluster as cluster 908 if the black features in the cluster lie on different sides of the line 932 generated at step S610.

On the other hand, if it is determined at step S608 that the number of red features in the cluster is not two (that is, the number of red features in the cluster is three) then, at step S614, feature identifier 70 connects the centres of the two black features in the cluster with a straight line and, at step S616, labels the cluster in dependence upon the number of red features in the cluster on each side of the line.

Referring to Figure 27, if it is determined at step S608 that the number of red features is three, then the cluster is either cluster 900 or cluster 906. At step S616, feature identifier 70 labels the cluster as cluster 900 if the red features lie on different sides of the line 934 generated at step S614, and labels the cluster as cluster 906 if all of the red features lie on the same side of line 936 generated at step S614.

At step S618, feature identifier 70 determines whether there is another unlabelled cluster of features in the input image. Steps S600 to S618 are repeated until each cluster in the input image has been labelled in the manner described above.

At step S620, feature identifier 70 labels the features within each cluster.

More particularly, in this embodiment, in the case of cluster 904, feature identifier 70 labels the single red feature as feature 1 of the cluster, and in the case of cluster 910, labels the single black feature as feature 1. The remaining features are then labelled in a clockwise direction from feature 1. The features are found in a clockwise direction in a conventional manner, for example by selecting the point which, when connected to feature 1 with a straight connecting line, results in the other features in the cluster lying to the right of the connecting line.

In the case of clusters 900 and 908, feature identifier 70 labels as feature 1 of the cluster the feature which lies in isolation to one side of the line generated at step S610 or step S614 (that is the red feature 940 in the case of cluster 900 and the black feature 942 in the case of cluster 908). The other features in the cluster are labelled in a clockwise direction from the feature labelled as feature 1.

In the case of clusters 902 and 906, feature identifier 70 labels as feature 1 in the cluster one of the features connected by a straight line at step S610 or step S614. More particularly, in this embodiment, feature identifier 70 labels as feature 1 the feature connected by a straight line for which the next feature in the cluster in a clockwise direction is of the same colour. Thus, in the case of cluster 902, feature 950 is labelled as feature 1 since the next feature in a clockwise direction is feature 952 and feature 952 has the same colour as feature 950 (feature 950 can therefore be distinguished from feature 952 since the next feature in a clockwise direction from feature 952 is a black feature). Similarly, in the case of cluster 906, feature 954 is labelled as feature 1 of the cluster. The other features in the cluster are labelled in a clockwise direction from the feature labelled as feature 1.

At step S622, feature identifier 70 stores, for each feature in the input image, the coordinates of the features unique point position in both the input image and the photographic mat 34.

Fifth Embodiment

A fifth embodiment of the invention will now be described.

The fifth embodiment operates on the same principle as the fourth embodiment, namely that each cluster of features on photographic mat 34 is unique, so that each cluster in an input image can be labelled without reference to another cluster or feature.

The components of the fifth embodiment and the processing operations performed by the components are the same as those in the first embodiment, with the exception that the pattern on the photographic mat 34 is different, the processing performed by feature detector 50 to generate a binary image at step S50 in Figure 8 is different, and the processing performed by feature identifier 70 at step S36 in Figure 7 is different.

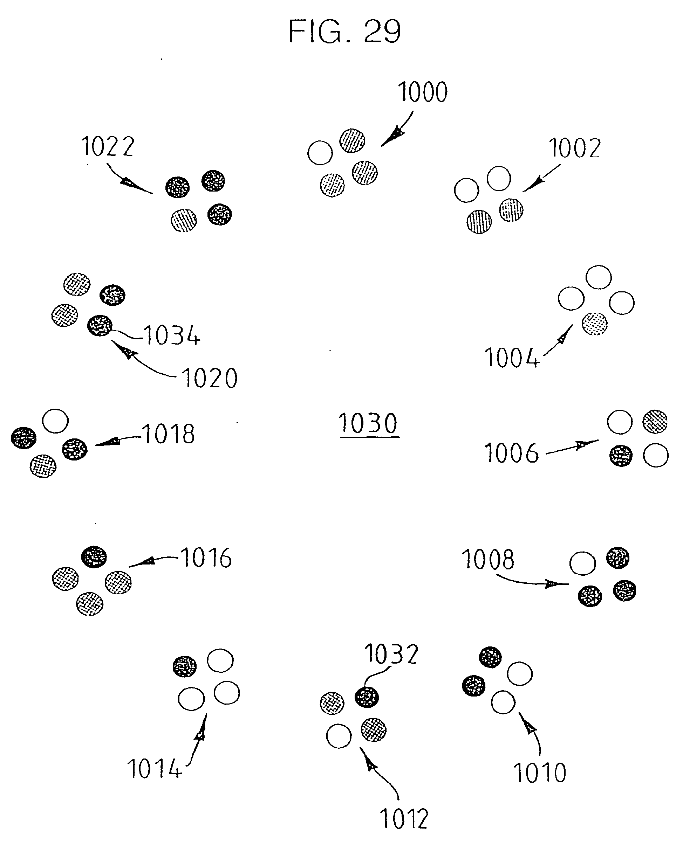

Figure 29 shows the pattern of features on a photographic mat 34 printed or displayed in the fifth embodiment.

Referring to Figure 29, in the fifth embodiment, the pattern on photographic mat 34 comprises a plurality of clusters 1000-1022. Each cluster comprises four features, which, in this embodiment are circles.

In Figure 29, black circles with a white interior represent circles which are actually red on photographic mat 34, solid black circles represent circles which are black on photographic mat 34, and the hatched circles represent circles which are actually green on photographic mat 34.

The clusters 1000-1022 are arranged around an empty area 1030 in which the object 400 is to be placed (the empty area 1030 being sized so that a circle having the diameter stored at step S4 in Figure 2 can be drawn therein). However, the clusters 1000-1022 do not have to lie in a circle, or in any other shape, but the position of each individual feature on the photographic mat 34 is known and stored by mat generator 30 at step S6 for processing by processing apparatus 2.

In the first to fourth embodiments described above, the features on photographic mat 34 are either red or black. In the fifth embodiment, however, green features are also present. Accordingly, the processing performed by feature detector 50 at step S50 in Figure 8 to generate a binary image from which to identify groups of pixels is slightly different. More particularly, rather than setting the value of each pixel in the input image to 1 or 0 in accordance with equation (1) above, in the fifth embodiment, feature detector 50 sets the value of each pixel in accordance with the following equation:

$$\text{If} \quad G < 128 \text{ and } B < 128 \text{ set pixel value to 1 (because}$$
$$\text{the pixel is red or black)}$$

$$\text{or} \quad \text{if } R < 128 \text{ and } B < 128 \text{ set pixel value to 1 (because}$$
$$\text{the pixel is black or green)}$$

$$\text{else} \quad \text{set the pixel value to 0.}$$

$$\ldots\ldots(5)$$

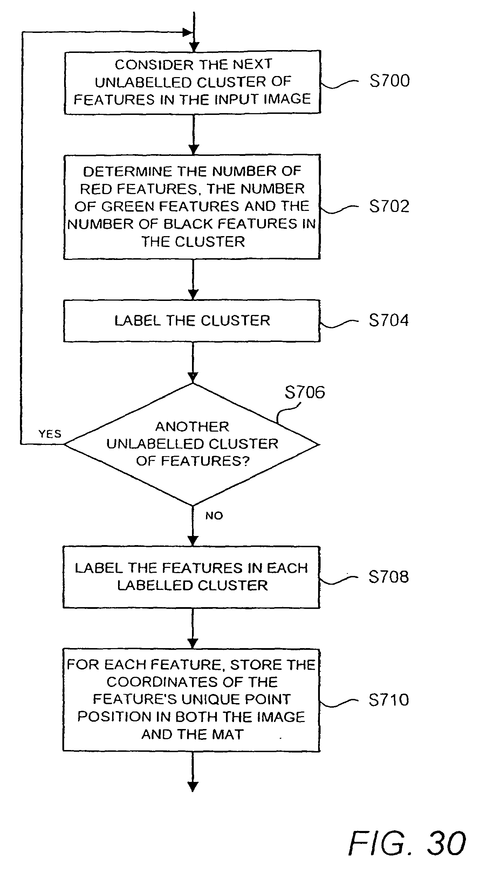

Figure 30 shows the processing operations performed by feature identifier 70 in the fifth embodiment at step S36 in Figure 7.

Referring to Figure 30, at step S700, feature identifier 70 considers the next unlabelled cluster of features in the input image (this being the first unlabelled cluster the first time step S700 is performed).

At step 5702, feature identifier 70 determines the number of red features, the number of green features and the number of black features in the cluster (these colours having been stored by feature detector 50 at step S60 in Figure 8).

At step S704, feature identifier 70 labels the cluster in dependence upon the number of red features, green features and black features determined to be in the cluster at step S702. Since each cluster is uniquely defined by its number of red, green and black features, the label at step S704 can be assigned without reference to any other feature, cluster or position in the input image.

At step S706, feature identifier 70 determines whether there is another unlabelled cluster of features in the input image. Steps S700 to S706 are repeated until each unlabelled cluster has been labelled in the manner described above.

At step S708, feature identifier 70 labels each of the features within each cluster labelled at step S704. More particularly, in this embodiment, feature identifier 70 labels a unique feature in the cluster as feature 1, and labels the remaining features in the cluster in a clockwise direction from feature 1.

Referring to Figure 29, in the case of clusters 1000, 1004, 1006, 1008, 1012, 1014, 1016, 1018 and 1022, feature identifier selects a feature which is the only feature of that colour in the cluster as feature 1. Thus, for example, the black circle 1032 is selected as feature 1 in cluster 1012. In the case of clusters 1002, 1010 and 1020, feature identifier selects as feature 1 a feature from the cluster having a predetermined colour for which the next feature in the cluster in a clockwise direction is of a different colour. Thus, for example, feature identifier 70 labels black feature 1034 as feature 1 in cluster 1020 since the next feature in a clockwise direction from feature 1034 is green.

At step S710, feature identifier 70 stores for each labelled feature the coordinates of the feature's unique point position in the input image and the photographic mat 34.

In the embodiments above, the spatial relationship between features within each cluster on the photographic mat 34 (namely the relationship that the distance between the centre of any two features in a given cluster is less than the distance between a feature in the given cluster and a feature in a different cluster) is used to group features detected in an image into candidate clusters (steps S70 to S104 in Figure 9). Subsequently, the size relationship between features in a cluster (namely the relationship that all of the features are of substantially the same area) is used to distinguish in an image clusters of features on the photographic mat 34 from clusters of features on the object 400 being modelled (steps S106 to S114 in Figure 9). This two stage processing therefore groups features into candidate clusters, and tests each candidate cluster to determine whether it is a cluster on the photographic mat 34 or not. The position, shape and/or colour of the features is then used to determine a one-to-one correspondence between each feature in the input image which is part of an actual cluster and a feature on the photographic mat 34 (step S36 in Figure 7).

However, as will now be described, other properties of features and the relationships therebetween can be used to detect candidate clusters of features and to test each candidate cluster to determine whether or not it represents a cluster on the photographic mat 34.

Sixth Embodiment

A sixth embodiment of the invention will now be described.

In the sixth embodiment, features on the photographic mat 34 are grouped into clusters having two different spatial relationships, and processing of an image is performed to group features in the image into candidate clusters on the basis of the first spatial relationship and then to test each candidate cluster using the second spatial relationship to determine whether or not it represents a cluster of features on the photographic mat 34. The labelling of each feature within a cluster is performed on the basis of the relationship between the sizes of features in the cluster.

The components of the sixth embodiment and the processing operations performed by the components are the same as those in the first embodiment, with the exception that the pattern on the photographic mat 34 is different, the processing performed by feature detector 50 at step S32 in Figure 7 is different, the processing performed by feature clusterer 60 at step S34 in Figure 7 is different, and the processing performed by feature identifier 70 at step S36 in Figure 7 is different. These differences will be described below.

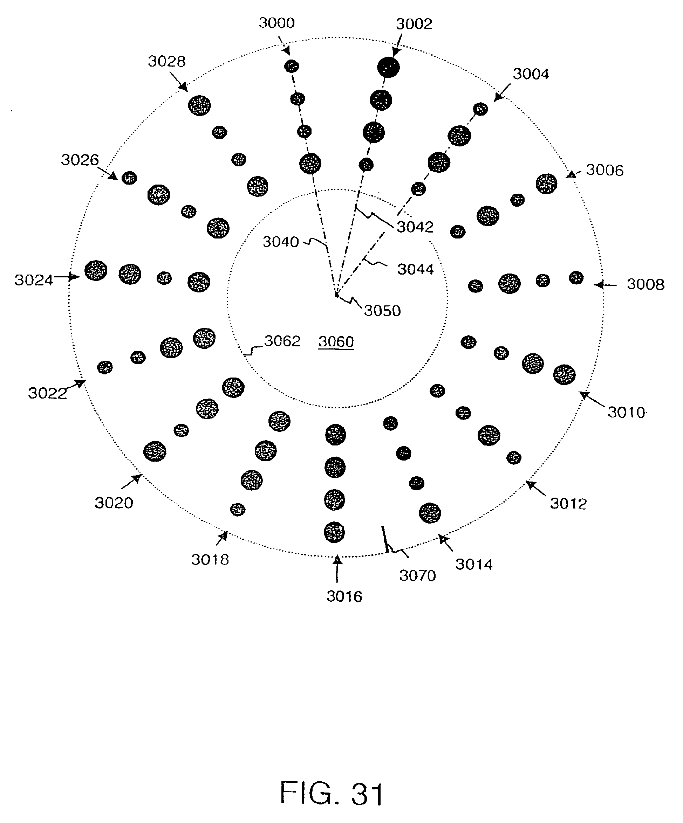

Figure 31 shows the pattern of features on the photographic mat 34 printed or displayed in the sixth embodiment.

Referring to Figure 31, in the sixth embodiment, the pattern on photographic mat 34 comprises a plurality of clusters 3000-3028. Each cluster comprises four features, which, in this embodiment, are black circles.

Each feature has one of two areas, that is, either large or small, with a large feature having an area twice the area of a small feature.

Within each cluster 3000-3028, the centres of the four features are arranged on an imaginary straight line (that is, a line not present on photographic mat 34 - indicated at 3040 for cluster 3000, 3042 for cluster 3002, and 3044 for cluster 3004), with each straight line being a radius of the same circle. Accordingly, a line through the centres of the features in a given cluster passes through the centre 3050 of the circle.

Within a given cluster, the centres of the four features are spaced equal distances apart on the radial line.

The clusters 3000-3028 are arranged around a central blank area 3060 defined by a circle 3062 having the diameter input by the user and stored at step S4 (Figure 2).

In this embodiment, a marker 3070 is provided so that a user can easily determine the amount by which the photographic mat 34 with the object 400 thereon has been rotated between images (enabling the user to rotate the photographic mat 34 by approximately equal amounts between images and also enabling the user to determine when the photographic mat 34 has been rotated through a full 360˚).

In the first to fifth embodiments described previously, features on photographic mat 34 having different colours are detected in each image. In the sixth embodiment, however, only black features need to be detected. Accordingly, the processing performed by feature detector 50 at step S50 in Figure 8 to generate a binary image from which to identify groups of pixels is slightly different. More particularly, rather than setting the value of each pixel in the input image to 1 or 0 in accordance with equation (1) above, in the sixth embodiment, feature detector 50 sets the value of each pixel in accordance with the following equation:

$$If \quad 0 \le R \le 127 \ and \ 0 \le G \le 127 \ and \ 0 \le B \le 127$$
$$then \ set \ pixel \ value \ to \ 1$$
$$else \ set \ pixel \ value \ to \ 0$$

$$\ldots (6)$$

In addition, in the sixth embodiment, step S60 in Figure 8 is omitted since it is not necessary to determine the colour of a feature.

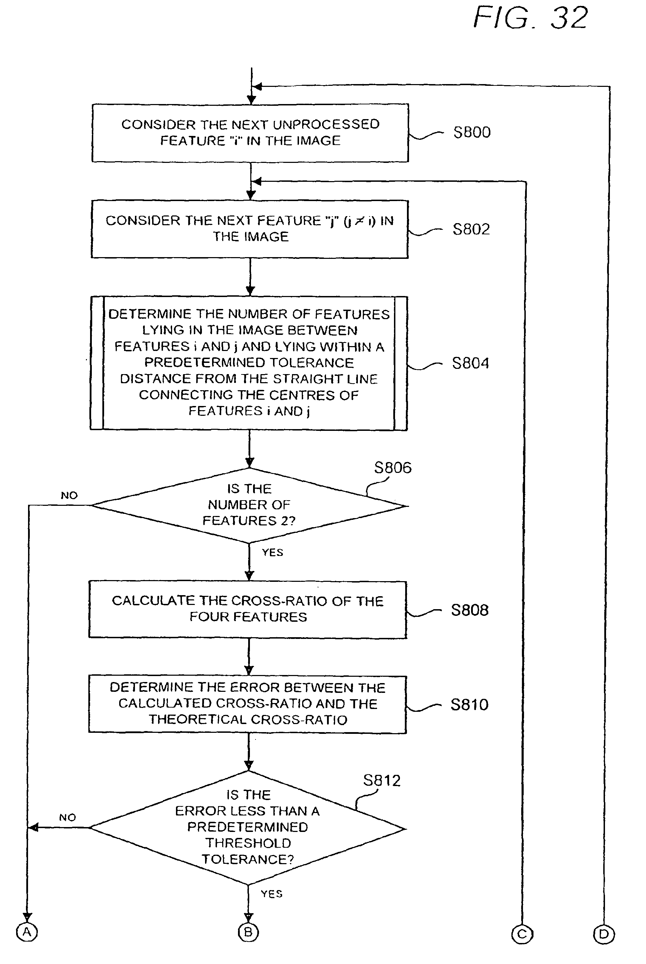

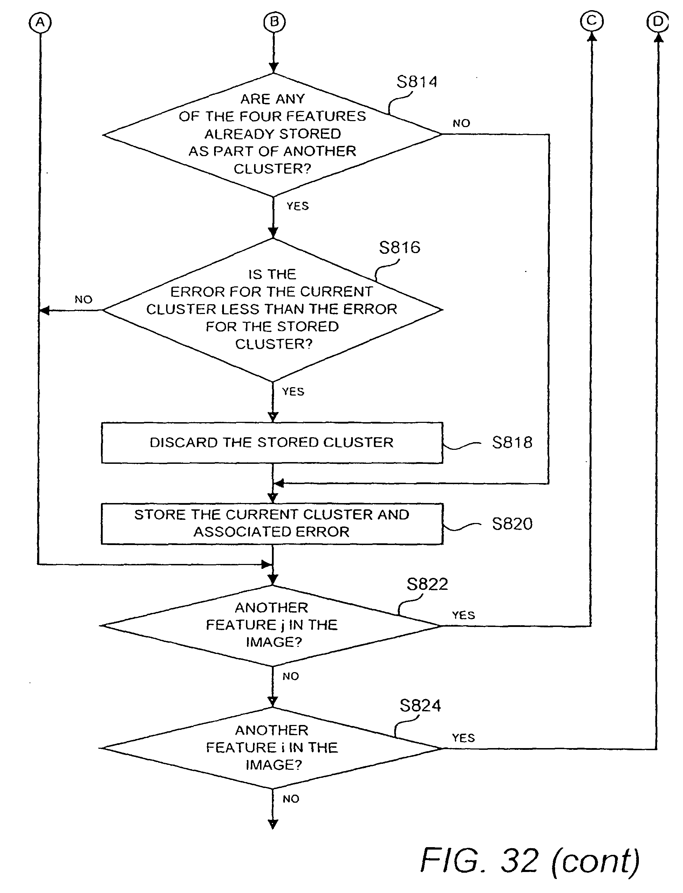

Figure 32 shows the processing operations performed by feature clusterer 60 in the sixth embodiment at step S34 in Figure 7.

Referring to Figure 32, at steps S800 to S806, feature clusterer 60 performs processing to identify candidate clusters of features by identifying clusters which contain four, and only four, features lying on a straight line. At steps S808 to S820, feature clusterer 60 performs processing to determine whether or not a candidate cluster represents a cluster on the photographic mat 34 using a ratio of the distances between features in the cluster in the image.

More particularly, at step S800, feature clusterer 60 considers the next unprocessed feature (referred to as feature "i") in the image, and at step S802 considers the next feature "j" in the image ($j \ne i$).

At step S804, feature clusterer 60 determines the number of features lying in the image between features "i" and "j" and also lying within a predetermined tolerance distance from a straight line connecting the centres of features "i" and "j".

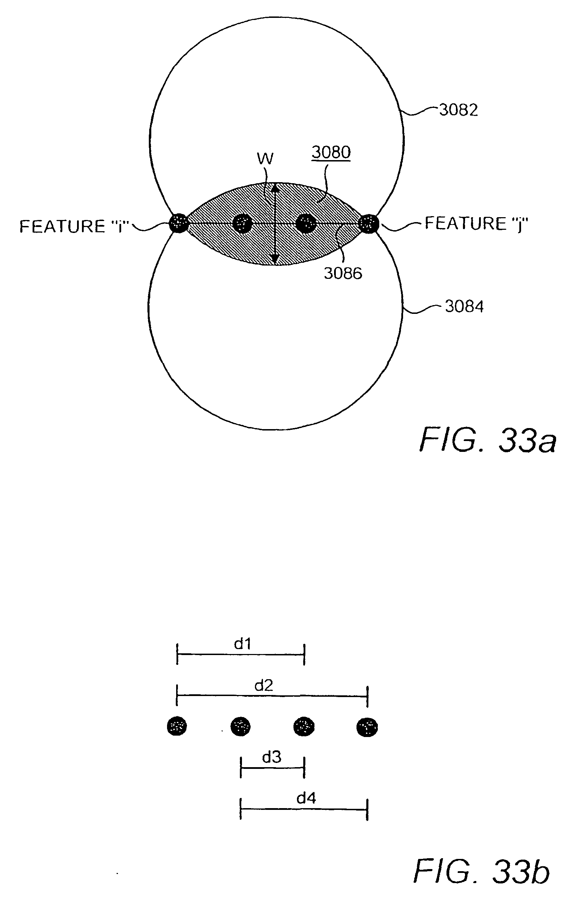

More particularly, referring to Figure 33a, at step S804, feature clusterer 60 determines the number of features lying in the area 3080 (shown shaded in Figure 33a), which comprises the intersection of two circles 3082 and 3084 which pass through the centres of features "i" and "j", and which also lie within a predetermined distance of the straight line 3086 connecting the centres of features "i" and "j".

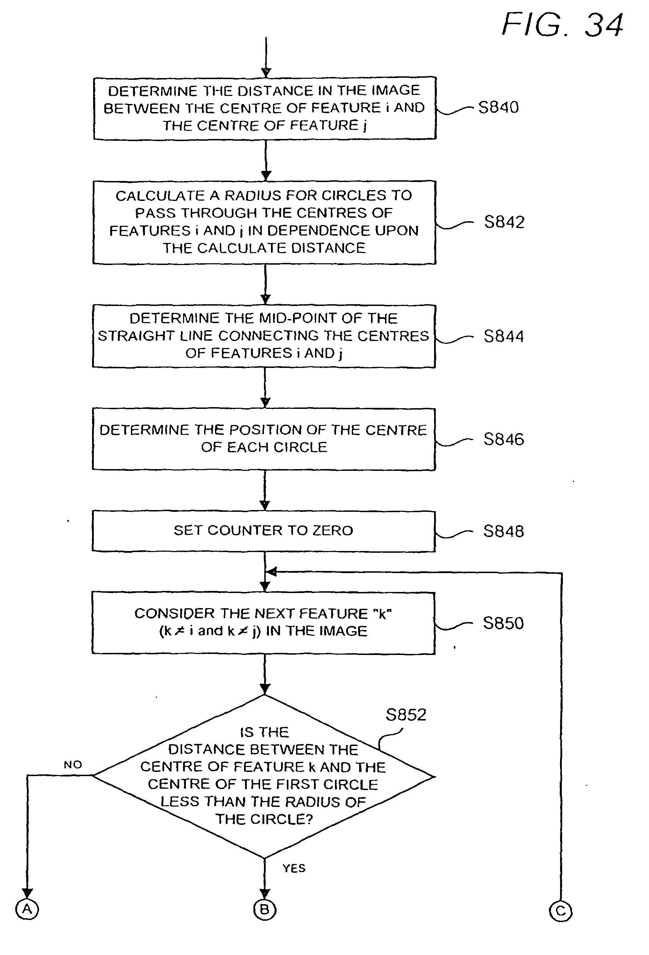

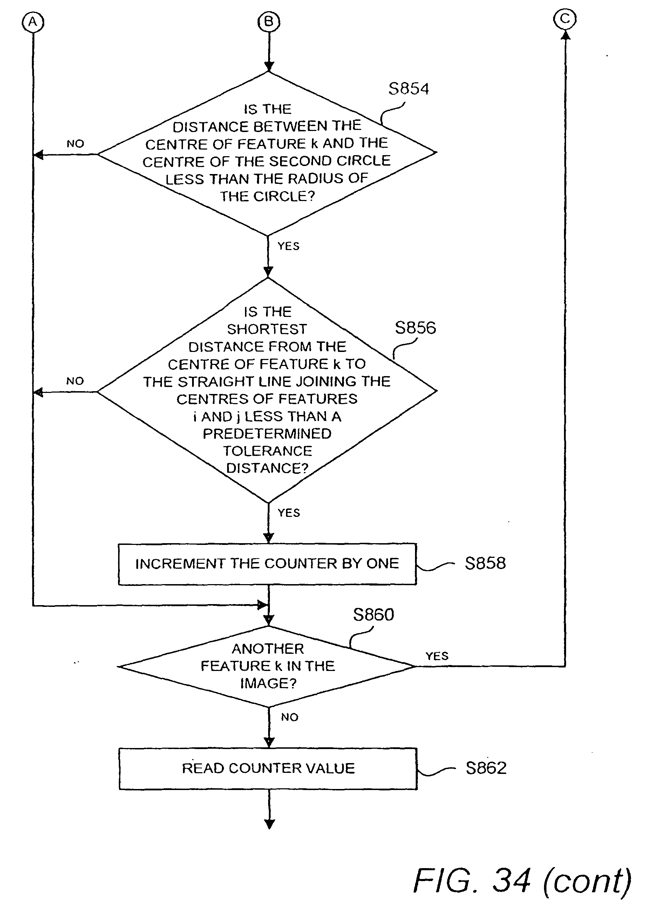

Figure 34 shows the processing operations performed by feature clusterer 60 at step S804.

Referring to Figure 34, at step S840, feature clusterer 60 determines the distance in the image between the centre of feature "i" and the centre of feature "j".

At step S842, feature clusterer 60 calculates a radius for the circles 3082 and 3084 in Figure 33a to pass through the centres of features "i" and "j" in dependence upon the distance calculated at step S840. More particularly, in this embodiment, feature clusterer 60 calculates the radius "r" using the following equation:

$$r = Dk_1 + Dk_2 \qquad \ldots (7)$$

where: D is the distance between the centres of features "i" and "j" (calculated at step S840);

$K_2$ is a constant (set to 0.125 in this embodiment) representing the width "W" to be set for the area 3080 in Figure 33a;

$$k_1 = \frac{0.25 - (k_2)^2}{2 \times k_2}$$

At step S844, feature clusterer 60 determines the mid-point of the straight line connecting the centres of features "i" and "j" (line 3086 in Figure 33a), and at step S486 determines the position of the centre of each circle 3082, 3084. More particularly, in this embodiment, feature clusterer 60 sets the centres of circles 3082 and 3084 to be the points on either side of the line 3086 which are at a distance $Dk_1$ (with these terms being as defined above) along a line through the mid-point determined at step S844 which is perpendicular to the line 3086 connecting the centres of the features "i" and "j".

Accordingly, as a result of the processing performed at steps S842 and S846, each of the circles 3082 and 3084 in Figure 33a is now defined. At steps S848 to S862, feature clusterer 60 therefore proceeds to determine the number of features lying in the area 3080 defined by the overlap of the circles 3082 and 3084 which have a centre lying within a predetermined distance of the line 3086 connecting the centres of features "i" and "j".

More particularly, at step S848, feature clusterer 60 sets the value of a counter to zero, and at step S850, considers the next feature "k" ($k \ne i$ and $k \ne j$) in the image.

At step S852, feature clusterer 60 determines whether the straight line distance between the centre of feature "k" and the centre of the circle 3082 determined at step S846 is less than the radius of the circle 3082 determined at step S842. If it is determined at step S852 that the feature "k" currently being considered lies further from the centre of circle 3082 than the radius of the circle 3082, the feature "k" can not lie in the area 3080. Accordingly, processing proceeds to step S860 to consider another feature "k" in the image.

On the other hand, if it is determined at step S852 that the distance between the centre of feature "k" and the centre of circle 3082 is less than the radius of the circle 3082, then, at step S854, feature clusterer 60 determines whether the distance between the centre of feature "k" and the centre of the second circle 3084 (determined at step S846) is less than the radius of the circle 3084 (determined at step S842).

If it is determined at step S854 that the centre of feature "k" is further from the centre of circle 3084 then the radius of circle 3084, the current feature "k" can not lie in the area 3080, and accordingly processing proceeds to step S860 to consider another feature "k" in the image.

On the other hand, if it is determined at step S854 that the distance of the centre of the feature "k" to the centre of the circle 3084 is less than the radius of the circle 3084, then the feature "k" must lie in the area 3080 (since it was previously determined at step S852 that the centre of the feature "k" also lies at a distance from the centre of circle 3082 which is less than the radius of the circle 3082). In this case, processing proceeds to step S856, at which feature clusterer 60 determines whether the shortest distance from the centre of feature "k" to the straight line 3086 joining the centres of features "i" and "j" is less than a predetermined tolerance distance (set to 2.0 pixels in this embodiment).

If it is determined at step S856 that the shortest distance is not less than the tolerance distance, then it is determined that the current feature "k" does not lie on the straight line 3086 connecting the centres of features "i" and "j", and accordingly the processing proceeds to step S860 to consider another feature "k" in the image.

On the other hand, if it is determined at step S856 that the shortest distance is less than the tolerance distance, then it is determined that feature "k" lies in the area 3080 and also lies on the line 3086. Accordingly, at step S858, feature clusterer 60 increments the value of the counter set at step S848 by one.

At step S860, feature clusterer 60 determines whether there is another feature "k" (k ≠ i and k ≠ j) in the image. Steps S850 to S860 are repeated until each such feature "k" has been processed in the manner described above.

At step S862, feature clusterer 60 reads the value of the counter to determine the number of features lying in the area 3080 and lying "on" the line 3086 (that is, within the tolerance distance of the line).

Referring again to Figure 32, at step S806, feature clusterer 60 determines whether the value read at step S862 in Figure 34 defining the number of features lying in the area 3080 and also on the line 3086 between features "i" and "j" is 2.

If it is determined at step S806 that the number of features is not 2, then feature clusterer 60 determines that the candidate cluster does not represent a cluster on the photographic mat 34, and processing proceeds to step S822 to consider another feature "j" in the image.

On the other hand, if it is determined at step S806 that the number of features is 2, then at step S808 feature clusterer 60 calculates a cross-ratio using the distances in the image between features in the candidate cluster. More particularly, with reference to Figure 33b, feature clusterer 60 calculates the cross-ratio in this embodiment as follows:

$$cross - ratio = \frac{d1 \times d4}{d2 \times d3}$$

$$\dots \dots (8)$$

where d1, d2, d3 and d4 are the distances between the centres of the features shown in Figure 33b.

The cross-ratio defined by equation (8) is a projective invariant (that is, it has a constant value irrespective of the position and orientation of the camera 410 relative to the photographic mat 34 when the image was recorded). In this embodiment, the theoretical value for the cross-ratio is 1.3333 (4/3) since the centres of the four features in each cluster are equally spaced.

At step S810, feature clusterer 60 determines the error between the cross-ratio calculated at step S808 and the theoretical cross-ratio (1.3333 in this embodiment), and at step S812 determines whether the error is less than a predetermined threshold tolerance (set to 0.1 in this embodiment).

If it is determined at step S812 that the error is not less than the threshold tolerance, then feature clusterer 60 determines that the candidate cluster does not represent a cluster of features on the photographic mat 34, and processing proceeds to step S822 to consider a different feature "j" in the image.

On the other hand, if it is determined at step S812 that the error is less than the predetermined threshold, then, at step S814, feature clusterer 60 determines whether any of the four features in the cluster are already stored as part of another cluster.

If it is determined at step S814 that none of the four features in the cluster is already stored as part of another cluster, the cluster is considered to represent a cluster of features on the photographic mat 34 and processing proceeds to step S820 at which the cluster and the associated error calculated at step S810 is stored.

On the other hand, if it is determined at step S814 that one of the features is already stored as part of another cluster, then at step S816, feature clusterer 60 determines whether the error for the current cluster (calculated at step S810) is less than the error for the stored cluster containing a feature from the current cluster. If it is determined at step S816 that the error for the current cluster is less than the error for the stored cluster, then, at step S818, feature clusterer 60 discards the stored cluster and at step S820, stores the current cluster and associated error.

On the other hand, if it is determined at step S816 that the error for the current cluster is not less than the error for the stored cluster, then steps S818 to S820 are omitted so that the stored cluster is retained and the current cluster is not stored.

At step S822, feature clusterer 60 determines whether there is another feature "j" in the image. Steps S802 to S822 are repeated until each feature "j" has been processed in the manner described above.

At step S824, feature clusterer 60 determines whether there is another feature "i" in the image. Steps S800 to S824 are repeated until each feature "i" has been processed in the manner described above.

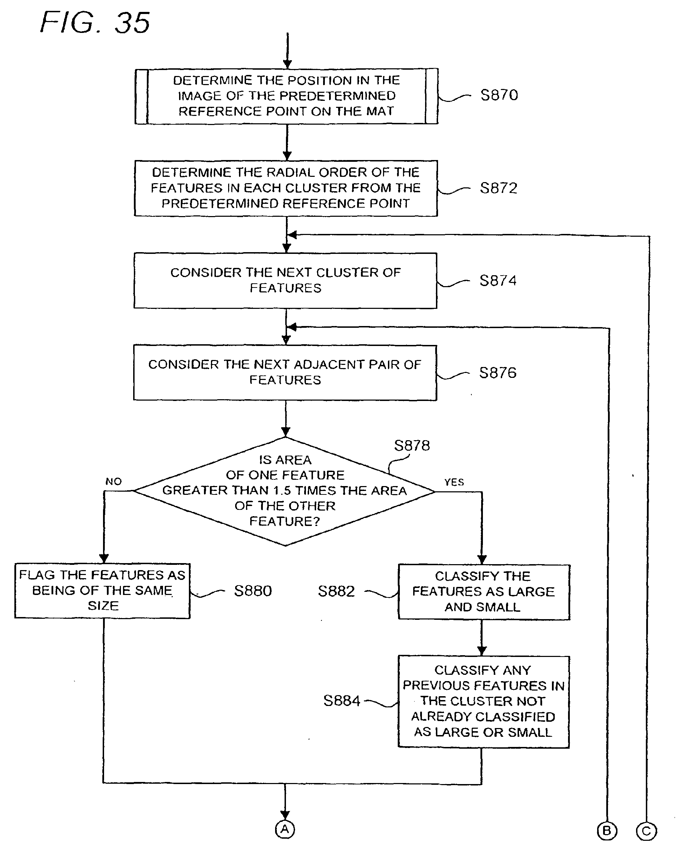

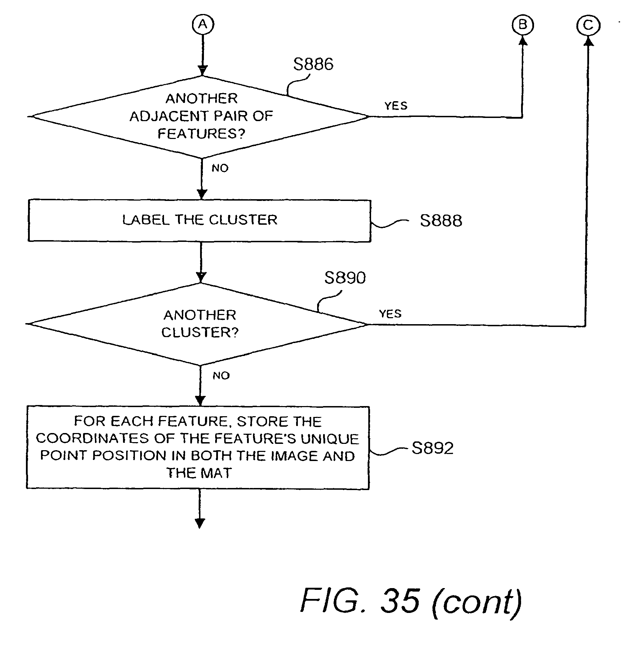

Figure 35 shows the processing operations performed by feature identifier 70 in the sixth embodiment at step S36 in Figure 7 to label clusters and the features therein on the basis of the sizes of the features in a cluster.

Referring to Figure 35, at step S870, feature identifier 70 performs processing to determine the position in the image of a predetermined reference point on the photographic mat 34. In this embodiment, the predetermined reference point is the centre 3050 of the circle having the radial lines on which the features in the clusters 3000-3028 lie.

The processing performed at step S870 is the same as the processing performed in the first embodiment at step S140 (described above with reference to Figures 13 and 14), with the exception that, rather than plotting diagonal lines for a cluster at step S164 (Figure 13), it is only necessary to plot a single line for the cluster which passes through the centre of all of the features in the cluster. As this processing has been described above, it will not be described again here.

At step S872, feature identifier 70 determines the radial order of the features in each cluster in the image from the predetermined reference point. That is, for each given cluster, feature identifier 70 allocates a number to the features so that the first feature is the farthest from the predetermined reference point and the last (fourth) feature is the nearest to the predetermined reference point.

At step S874, feature identifier 70 considers the next cluster of features (this being the first cluster the first time step S874 is performed), and at step S876 considers the next adjacent pair of features in the cluster (this being features 1 and 2 the first time step S876 is performed, features 2 and 3 the next time step S876 is performed, and features 3 and 4 the final time step S876 is performed for a given cluster).

At step S878, feature identifier 70 performs processing to test whether the features considered at step S876 are the same size or different sizes. More particularly, feature identifier 70 determines whether the area (defined by the number of pixels stored at step S56 in Figure 8) of one of the features considered at step S876 is greater than 1.5 times the area of the other feature.

As noted above, on the photographic mat 34 in this embodiment the ratio of the area of a large feature in a cluster to the area of a small feature in a cluster when viewed straight on (that is, the viewing direction is perpendicular to the photographic mat 34) is 2:1. However, as this ratio will change for other viewing directions, a threshold of 1.5 is used at step S878 to determine whether the features are of different size or whether they are of the same size. Feature identifier 70 compares the areas of features which are adjacent in a cluster at steps S876 and S878 to compensate for the reduced area in the image that features further from the camera 410 will have (which could otherwise result in a large feature further from the camera 410 having the same area in the image as a small feature closer to the camera 410).

If it is determined at step S878 that the area of one feature is not greater than 1.5 times the area of the other feature, then, at this stage, it is possible to determine that the features are of the same size, but it is not yet possible to say whether the features are both small or both large. Accordingly, at step S880, feature identifier 70 flags the features as being of the same size.

On the other hand, if it is determined at step S878 that the area of one of the features is 1.5 times greater than the area of the other feature, then, at step S882, feature identifier 70 classifies the feature having the larger area as a large feature and the feature having the smaller area as a small feature. Subsequently, at step S884, feature identifier 70 determines whether any features previously considered in the cluster have been flagged as being of the same size at step S880, but have not yet been classified as large or small. For each such feature, feature identifier 70 classifies the feature as large or small based on the large and small classifications allocated at step S882. For example, if the first time step S878 is performed the first and second features in a cluster are flagged at step S880 as being of the same size, and the second time step S878 is performed the third feature is determined to have an area 1.5 times greater than the second feature, so that, at step S882, the third feature is classified as large and the second feature is classified as small, then, at step S884, the first feature is classified as small since it was previously determined to have the same size as the second feature which has now been classified as small.

At step S886, feature identifier 70 determines whether there is another adjacent pair of features in the cluster. Steps S876 to S886 are repeated until each pair of adjacent features in the cluster has been processed in the manner described above.

At step S888, when each adjacent pair of features in the cluster has been processed, feature identifier 70 labels the cluster. More particularly, referring again to Figure 31, the order of large and small features with reference to the centre 3050 of the circle is unique for each cluster 3000-3028. Accordingly, if the features in the cluster are determined to be small-small-small-large, feature identifier 70 labels the cluster as cluster 3000. On the other hand, if the order is determined to be large-small-large-small, feature identifier 70 labels the cluster as cluster 3006. It will be seen that, in the case of cluster 3016, all of the features have the same size. Accordingly, for this cluster, feature identifier 70 will not be able to determine at steps S878-S884 whether the features are all large or all small. However, feature identifier 70 will correctly label the cluster as cluster 3016 at step S888 since no cluster is provided on the photographic mat 34 which comprises all small features.

At step S890, feature identifier 70 determines whether there is another cluster of features to be processed. Steps S874 to S890 are repeated until each cluster has been processed in the manner described above.

At step S892, feature identifier 70 stores, for each feature within a cluster in the input image, the coordinates of the feature's unique point position in both the input image and the photographic mat 34.

In summary, in the sixth embodiment, candidate clusters comprising four, and only four, features lying on a straight line are detected, and processing is performed using the distances between features in the cluster to test whether a candidate cluster represents a cluster of features on the photographic mat 34. The size of the features and their positions relative to the position of a reference point in the image (the centre 3050 in this embodiment) are then used to uniquely label each cluster, and consequently each feature therein.

Seventh Embodiment

A seventh embodiment of the invention will now be described.

The seventh embodiment uses the same principles as the sixth embodiment, but each cluster of features on the photographic mat 34 is absolutely unique, so that each cluster in an input image (and consequently each feature therein) can be labelled without reference to a predetermined point in the image.

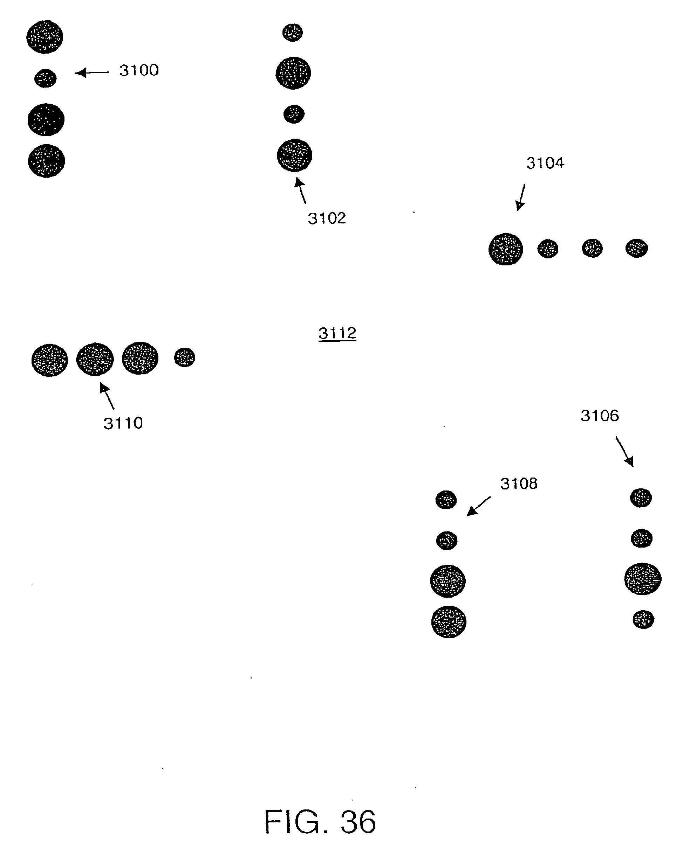

Figure 36 shows the pattern of features on a photographic mat 34 printed or displayed in the seventh embodiment.

Referring to Figure 36, the pattern on photographic mat 34 comprises a plurality of clusters 3100-3110, of which there are six in the seventh embodiment. Each cluster comprises four features, which, in this embodiment are black circles having one of two sizes, such that the area of a large circle is twice the area of a small circle.

As in the sixth embodiment, the features in a given cluster are arranged so that the centres of the features lie on an imaginary straight line.

Clusters 3100-3110 are arranged around a central blank area 3112 in which the object 400 is to be placed (the area 3112 being of a size so that a circle having the diameter stored at step S4 in Figure 2 can be drawn therein).

The components of the seventh embodiment and the processing operations performed by the components are the same as those in the sixth embodiment. However, in the seventh embodiment, each of the clusters 3100-3110 can be uniquely identified without reference to a predetermined reference point in the photographic mat 34. More particularly, clusters 3100 and 3110 can be distinguished from the other clusters because they contain three large features and one small feature, and can be distinguished from each other because the small feature in cluster 3100 is between the end features, while the small feature in cluster 3110 is itself an end feature. Using the same principle, clusters 3104 and 3106, which each comprise three small features and one large feature, can be uniquely labelled. Similarly, clusters 3102 and 3108 can be distinguished from the other clusters because they contain two large features and two small features, and can be distinguished from each other because the small features are adjacent in cluster 3108 but are separated by a large feature in cluster 3102.

Accordingly, since each cluster 3100-3110 in the seventh embodiment is absolutely unique (that is, unique without reference to a predetermined reference point), feature identifier 70 does not need to perform steps S870 and S872 in Figure 35.

In the first to seventh embodiments described above, features are detected in an input image (step S32 in Figure 7) and processing is subsequently performed to find clusters of features (step S34 in Figure 7). However, these two steps can be performed as a single step, as will now be described. In addition, as will also be described, instead of detecting candidate clusters of features using the property that the distance between any two features in a given cluster is less than the distance between a feature in the given cluster and a feature in a different cluster, or using the property that features in a given cluster lie on a straight line, other relationships between the features can be used.

Eighth Embodiment

An eighth embodiment of the invention will now be described.

The components of the eighth embodiment and the processing operations performed by the components are the same as those in the first embodiment, with the exception that the pattern on the photographic mat 34 is different, the processing performed by feature detector 50 at step S32 and the processing performed by feature clusterer 60 at step S34 in Figure 7 are different and become combined, and the processing performed by feature identifier 70 at step S36 in Figure 7 is different. These differences will now be described.

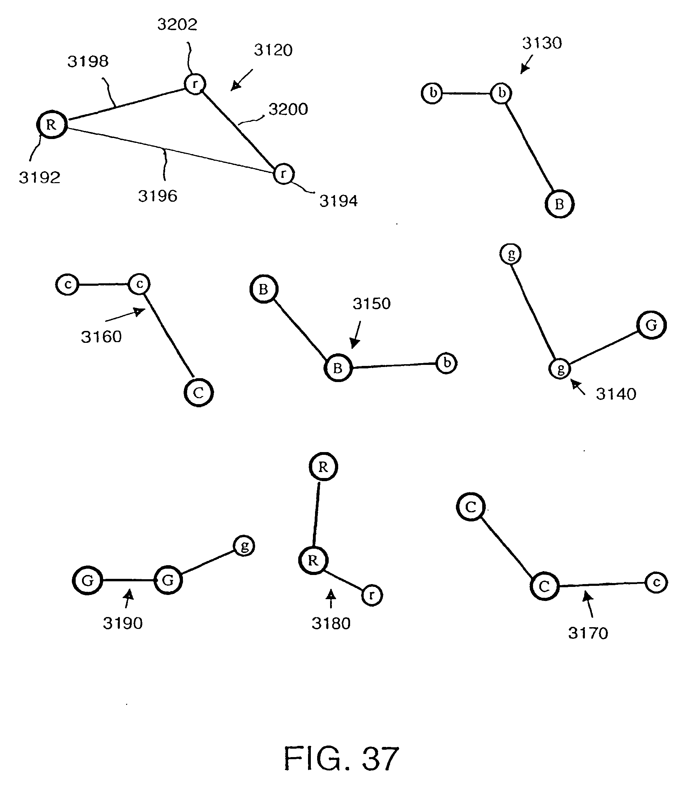

Figure 37 shows the pattern of features on a photographic mat 34 printed or displayed in the eighth embodiment.

Referring to Figure 37, in the eighth embodiment, the pattern on photographic mat 34 comprises a plurality of clusters 3120-3190, of which there are eight in this embodiment.

Each cluster contains three features, each of which is a circle having either a large area or a small area, with the large area being twice that of a small area. In Figure 37, a circle with "R" in it is a red circle of large area on photographic mat 34 (that is, the letter does not exist on the photographic mat 34 and is only used for labelling purposes in the drawing), a circle with "r" is a red circle of small area, a circle with "B" is a large blue circle, a circle with "b" is a small blue circle, a circle with "G" is a large green circle, a circle with "g" is a small green circle, a circle with "C" is a large cyan circle, and a circle with "c" is a small cyan circle.

As will be seen from Figure 37, in the pattern of the eighth embodiment, in some cases, the distance between a feature in a first cluster and a feature in a second cluster is less than the distance between two features in the first cluster or the second cluster (unlike the pattern in the first to fifth embodiments).

Within each cluster, the three features are connected by lines which form part of the pattern on photographic mat 34 (these being lines 3198 and 3200 for cluster 3120 - line 3196 being an imaginary line which is not part of the pattern on the photographic mat 34). The relationship between features in a cluster that they are connected will be used in this embodiment to identify candidate clusters of features. In addition, within each cluster each of the three features has the same colour, and this colour relationship will be used to process candidate clusters to determine whether or not the cluster represents a cluster on the photographic mat 34.

As will be described below, a unique label will be assigned to each cluster 3120-3190 in dependence upon whether the cluster contains two large features and one small feature or two small features and one large feature. In addition, a unique label will be assigned to each feature in a cluster using the property that the two features in a cluster having the largest distance therebetween are the end features of the cluster. More particularly, referring to cluster 3120 in Figure 37, the features 3192 and 3194 can be determined as the end features of the cluster since the length of imaginary line 3196 is greater than the length of line 3198 and line 3200.

In this embodiment, no central blank area is provided on photographic mat 34. Instead, clusters 3120-3190 are distributed over all of the surface of the photographic mat 34 such that, when object 400 is placed on the photographic mat, some, but not all, of the features will be obscured. This obscuring of features does not present a problem for subsequent processing provided that at least six features are visible in each input image.

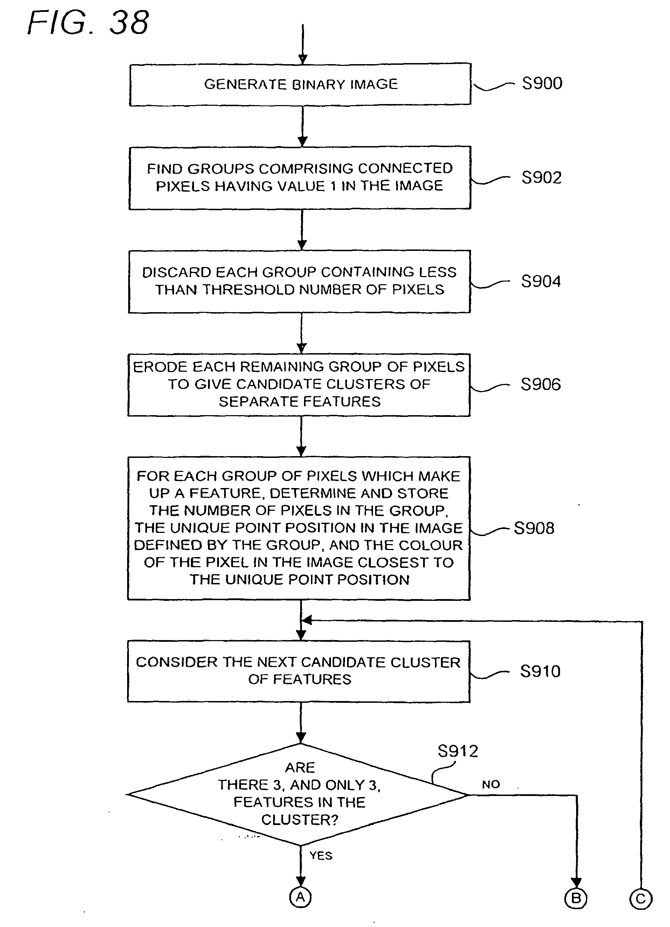

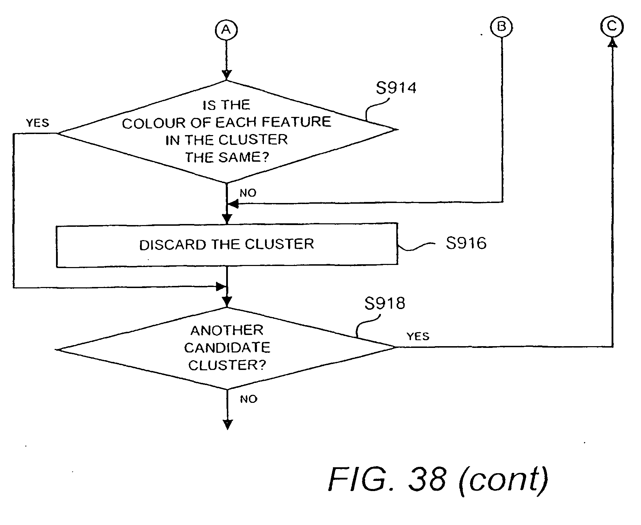

Figure 38 shows the processing operations performed in the eighth embodiment by feature detector 50 and feature clusterer 60 to detect features in an input image and to detect clusters of features corresponding to clusters on the photographic mat 34. As will be explained below, the processing steps in Figure 38 represent a combined processing operation to detect and cluster features instead of the separate steps at step S32 and S34 in Figure 7 in previous embodiments.

Referring to Figure 38, at step S900, processing apparatus 2 processes the image data to generate a binary image corresponding to the input image, in which each pixel in the input image which has a colour corresponding to the colour of a feature on the photographic mat 34 (that is, red, green, blue or cyan in this embodiment) is set to 1 and pixels having other colours are set to 0.

More particularly, in this embodiment, for each pixel in the input image, processing apparatus 2 reads the red colour value, R, the green colour value, G, and the blue colour value, B, (each of which has values from 0 to 255 in this embodiment) and sets the value of the pixel to 1 or 0 as follows (which assumes that the colour of the paper on which the pattern of the photographic mat is printed is light - that is, in an image all colour components of a pixel corresponding to paper on which no pattern is present have a value greater than 128):

$$\textit{If } R<128 \textit{ or } G<128 \textit{ or } B<128 \textit{ set pixel value to } 1$$

$$\textit{else set the pixel value to } 0 \qquad \cdots\cdots(9)$$

At step S902 , processing apparatus 2 processes the binary image data generated at step S900 to find groups comprising pixels having the value 1 which are connected in the binary image, so as to identify spatially isolated groups of pixels having the value 1. The processing performed at step S902 is the same as that performed at step S52 in Figure 8, and is carried out in a conventional manner, for example as described in "Digital Image Processing and Computer Vision" by R.J. Schalkoff, John Wiley & Sons, ISBN 047150536-6, page 276. The result of performing the processing at step S902 is that a single group of pixels will be identified for each cluster 3120-3190 which is visible in the input image. That is, the pixels representing each of the three features in a cluster and also the lines connecting the features will be part of one group identified at step S902. similarly, a group of pixels will be identified for each isolated feature on object 400.

At step S904, processing apparatus 2 discards each group found at step S902 which contains less than a threshold number of pixels (set to 25 in this embodiment), so as to discard groups of pixels which are too small to represent a feature on the photographic mat 34. This processing corresponds to step S54 in Figure 8.

At step S906, processing apparatus 2 performs erosion processing on each group of pixels which remains after step S904 has been performed. In this embodiment, the erosion processing is performed in a conventional manner for example as described in "Digital Image Processing and Computer Vision" by R.J. Schalkoff, John Wiley & Sons, ISBN 047150536-6, pages 310 to 325. The result of performing the erosion processing on a group of pixels is that each part of the group is reduced in width. In the case of a group of pixels representing a cluster of connected features on the photographic mat 34, the erosion processing results in the removal of the lines connecting the features (3198 and 3200 for cluster 3120 in Figure 37) leaving separate, non-connected features, each having a reduced number of pixels which represents the feature. The separate features which result from the erosion processing performed on a given group of pixels at step S906 are stored as a candidate cluster by processing apparatus 2 (it being noted that the erosion processing may not result in separate features, but instead may give just a single feature for a group of pixels representing a feature on object 400).

At step S908, processing apparatus 2 processes each feature remaining after the processing performed at step S906 to determine and store the number of pixels in the group representing the feature, the unique point position in the image defined by the group (in this embodiment, the centre of the group of pixels calculated by determining the centre of gravity of the group) and the colour of pixel in the image closest to the unique point position. This processing corresponds to the processing performed at steps S56, S58 and S60 in Figure 8.

At steps S910 to S918, processing apparatus 2 tests each of the candidate clusters resulting in the processing performed at steps S900 to S906 to determine whether or not it represents a cluster of features on the photographic mat 34.

More particularly, at step S910, processing apparatus 2 considers the next candidate cluster of features, and at step S912 determines whether there are three, and only three, features in the cluster.

If it is determined at step S912 that there are not three features in the cluster, then the processing proceeds to step S916, at which the cluster is discarded.

On the other hand, if it is determined at step S912 that there are three (and only three) features in the cluster, then, at step S914, processing apparatus 2 performs a further test to determine whether each of the features in the cluster is of the same colour.

If it is determined at step S914 that the features in the cluster are not of the same colour in the image, then, at step S916, the cluster is discarded.

On the other hand, if it is determined at step S914 that the features in the cluster are of the same colour, then step S916 is omitted so that the cluster is retained.

At step S918, processing apparatus 2 determines whether there is another candidate cluster. Steps S910 to S918 are repeated until each candidate cluster has been processed in the manner described above.

In summary, as a result of performing the processing in Figure 38, processing apparatus 2 has detected features and candidate clusters thereof in a combined processing operation (steps S900 to S906), in which actual clusters representing clusters on the photographic mat 34 will be included because the features therein are connected by lines, and has tested the candidate clusters to determine those which represent clusters on the photographic mat 34 using the relationship that such clusters will contain three, and only three features, and also the relationship that features in a cluster on the photographic mat 34 will all have the same colour in the image.

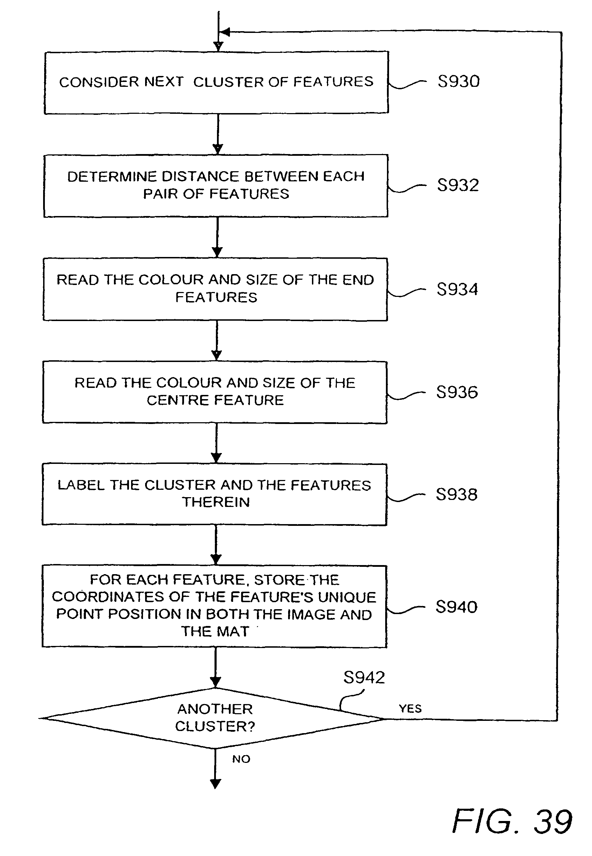

Figure 39 shows the processing operations performed by feature identifier 70 at step S36 to identify the features within each cluster (that is, label each feature with a unique one-to-one correspondence to a feature on photographic mat 34) in the eighth embodiment.

Referring to Figure 39, at step S930, feature identifier 70 considers the next cluster of features, and at step S932 calculates the straight line distance in the image between the centres of each pair of features in the cluster.

At step S934, feature identifier 70 reads the colour and size (stored at step S908 in Figure 38) of each of the end features in the cluster (the end features being defined as the features having the greatest distance therebetween - that is, features 3192 and 3194 in cluster 3120 in Figure 37, for example).

At step S936, feature identifier reads the colour and size (previously stored at step S908) of the centre feature in the cluster (that is, the feature not processed at step S934).

At step S938, feature identifier 70 uses the colours and sizes read at steps S934 and S936 to determine to which of the clusters 3120-3190 on the photographic mat 34 the cluster in the input image corresponds and to identify a one-to-one correspondence between the features in the cluster in the input image and the features in the cluster on the photographic mat 34. For example, referring to Figure 37, if the end features of the cluster comprise a large red feature and a small red feature, and the centre feature of the cluster comprises a small red feature, then feature identifier 70 labels the cluster as cluster 3120, and labels the large red end feature as feature 3192, the small red end feature as feature 3194 and the centre feature as feature 3202.

At step S940, feature identifier 70 stores, for each feature within the cluster in the input image, the coordinates of the features unique point position in both the input image and the photographic mat 34. This processing corresponds to step S148 in Figure 12.

At step S942, feature identifier 70 determines whether there is another cluster of features in the input image to be processed. Steps S930 to S942 are repeated until each cluster has been processed in the manner described above.

In summary, therefore, feature identifier 70 labels each cluster and the features therein using the respective relationships of the colours and sizes of the features.

Ninth Embodiment

A ninth embodiment of the invention will now be described.

In the ninth embodiment, as in the eighth embodiment, the steps of detecting features and grouping the features into candidate clusters are performed together, rather than as separate steps as in earlier embodiments (steps S32 and S34 in Figure 7). More particularly, candidate clusters are identified on the basis of features lying in detectable areas of the input image. Each candidate cluster is tested on the basis of the number of features and the size of the features therein to determine whether or not it represents a feature on the photographic mat 34. Subsequently, each cluster and the features therein are labelled in dependence upon the size of the features in the cluster and the properties of the area of the input image in which the features lie.

The components of the ninth embodiment and the processing operations performed by the components are the same as those in the first embodiment, with the exception that the pattern on the photographic mat 34 is different, the processing performed by feature detector 50 at step S32 and the processing performed by feature clusterer 60 at step S34 (Figure 7) are different and are now combined, and the processing performed by feature identifier 70 at step S36 in Figure 7 is different. These differences will now be described.

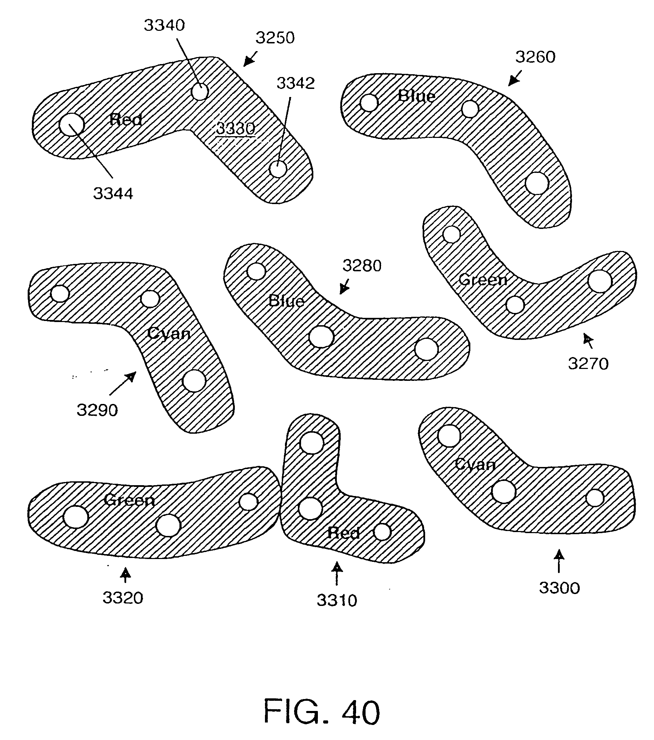

Figure 40 shows the pattern of features on the photographic mat 34 printed or displayed in the ninth embodiment.

Referring to Figure 40, the pattern on photographic mat comprises a plurality of clusters 3250-3320, of which there are eight in the ninth embodiment. Each cluster comprises three features, each of which is a circle defined by a hole in an area of solid colour (the circular holes being labelled as 3340, 3342 and 3344 and the area of solid colour being labelled as 3330 in a cluster 3250 in Figure 40). Thus, each of the features (holes) in a cluster has the same colour as the paper on which the photographic mat 34 is printed.

In this embodiment, the pattern on photographic mat 34 comprises two areas of red colour 3250, 3310, two areas of green colour, 3270, 3320, two areas of blue colour 3260, 3280, and two areas of cyan colour 3290, 3300.

Within a given area of colour, two holes of large size and one hole of small size are provided, or instead, two holes of small size and one hole of large size are provided, with a different one of these arrangements being provided in each of the two areas of the same colour (that is, the red area of cluster 3250 has two holes 3340, 3342 of small area and one hole of large area 3344, while the red area of cluster 3310 has two holes of large area and one hole of small area). In this embodiment, the size (area) of a large hole is twice that of a small hole.

In this embodiment, no central blank area is provided on photographic mat 34. Instead, clusters 3250-3320 are distributed over all of the surface of the photographic mat 34 such that, when object 400 is placed on the photographic mat, some, but not all, of the features will be obscured. This obscuring of features does not present a problem for subsequent processing, but provided that at least six features are visible in each input image.

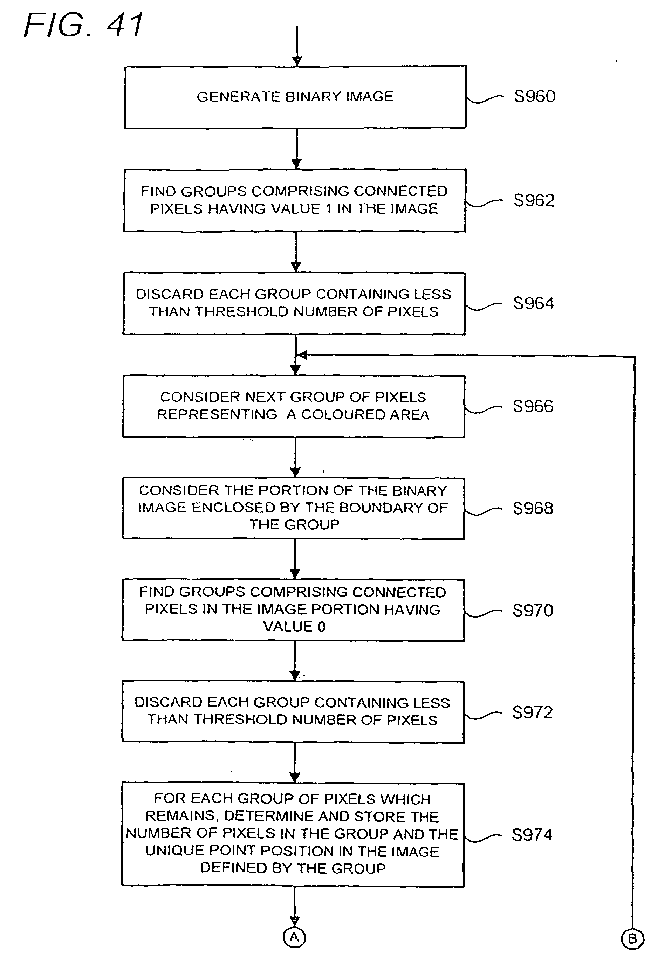

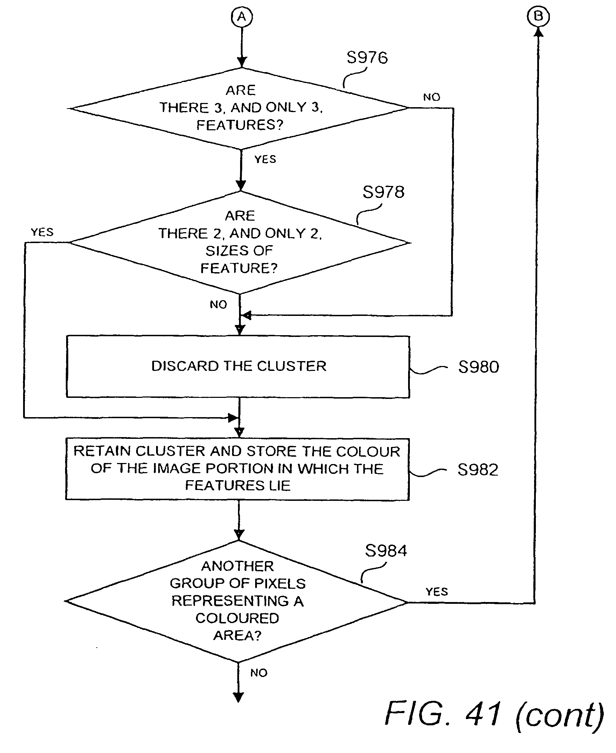

Figure 41 shows the processing operations performed in the ninth embodiment to detect candidate clusters of features in an input image and to test each candidate cluster to determine whether it represents an actual cluster of features on the photographic mat 34, this processing replacing the processing in the first embodiment performed at step S32 and step S34 in Figure 7.

Referring to Figure 41, at step S960, processing apparatus 2 processes the image data to generate a binary image corresponding to the input image, in which each pixel in the input image which has a colour corresponding to the colour of one of the coloured regions defining clusters 3250-3320 on photographic mat 34 (that is, red, green, blue or cyan in this embodiment) is set to 1, and pixels having other colours are set to 0. This processing is performed in the same way as step S900 (Figure 38) in the eighth embodiment, and accordingly will not be described again here.

At step S962, processing apparatus 2 processes the binary image data generated at step S960 to find groups comprising pixels having the value 1 which are connected in the binary image, so as to identify spatially isolated groups of pixels having the value 1. This processing is performed in a conventional manner, for example as described in "Digital Image Processing and Computer Vision" by R.J. Schalkoff, John Wiley & Sons, ISBN 047150536-6, page 276, and the result of this processing is the detection of groups of pixels representing any of the solid colour areas defining clusters 3250-3320 which are visible in the input image, together with the detection of groups of pixels representing red, green, blue or cyan features on the object 400 which are visible in the input image.

At step S964, processing apparatus 2 discards each group found at step S962 which contains less than a threshold number of pixels (set to 25 in this embodiment). This processing corresponds to step S54 in Figure 8.

At step S966, processing apparatus 2 considers the next group of pixels remaining after step S964 has been performed, and at step S968 considers the portion of the binary image (generated at step S960) enclosed by the boundary pixels of the group.

At step S970, processing apparatus 2 processes the pixels in the portion of the binary image selected at step S968 to find groups comprising pixels having the value 0 which are connected in the binary image. In this embodiment, the processing at step S970 is performed in a conventional manner, for example as described in "Digital Image Processing and Computer Vision" by R.J. Schalkoff, John Wiley & Sons, ISBN 047150536-6, page 276. The result of the processing at step S970 is the detection of groups of pixels representing holes in the current area currently being considered (selected at step S966). Consequently, the processing at step S970 will detect circular hole features representing features on photographic mat 34.

At step S972, processing apparatus 2 discards each group found at step S970 which contains less than a threshold number of pixels (set to 25 in this embodiment) so as to discard groups of pixels which are too small to represent a feature on the photographic mat 34.

At step S974, processing apparatus 2 processes each group of pixels remaining after step S972 has been performed to determine and store the number of pixels in the group, and the unique point position in the image defined by the group (this being the centre of the group of pixels in this embodiment, calculated by determining the centre of gravity of the group of pixels in a conventional manner).

At step S976, processing apparatus 2 determines whether there are three; and only three features (that is, groups of pixels having the value 0) in the candidate cluster.

If it is determined at step S976 that there are not three features in the candidate cluster, then the processing proceeds to step S980, at which the cluster is discarded.

On the other hand, if it is determined at step S976 that there are three, and only three features, in the cluster, then a second test is performed by processing apparatus 2 at step S978 to determine whether there are two, and only two, sizes of feature in the cluster. This test is performed using the information defining the number of pixels in each group stored at step S974, and by determining that two features are of the same size if the number of pixels therein does not differ by more than 20% times the number of pixels in the largest feature.

If it is determined at step S978 that the features in the cluster have more or less than two different sizes, then at step S980, the cluster is discarded.

On the other hand, if it is determined at step S978 that there are two sizes of feature in the cluster, step S980 is omitted, so that at step S982 the cluster is retained and the colour of the input image portion in which the features lie is stored (this colour being determined from the colour values of the original input image corresponding to the pixels considered at step S966 above).

At step S984, processing apparatus 2 determines whether there is another group of pixels representing a coloured area in the input image. Steps S966 to S984 are repeated until each group of pixels representing a coloured area has been processed in the manner described above.

In summary, by performing the processing described above with reference to Figure 41, processing apparatus 2 detects closed regions in the input image having a predetermined colour, detects holes in each such region, and considers the holes for each respective region as a candidate cluster of features. Accordingly, the detection of candidate clusters can be considered to be based on the positions of features (that is, lying within a closed region of predetermined colour) or the connectedness of features (that is connected by a region of predetermined colour). Each candidate cluster is then processed to determine whether it contains three, and only three, features having two, and only two, different sizes. If these conditions are satisfied, then the cluster is considered to represent a cluster of features on the photographic mat 34.

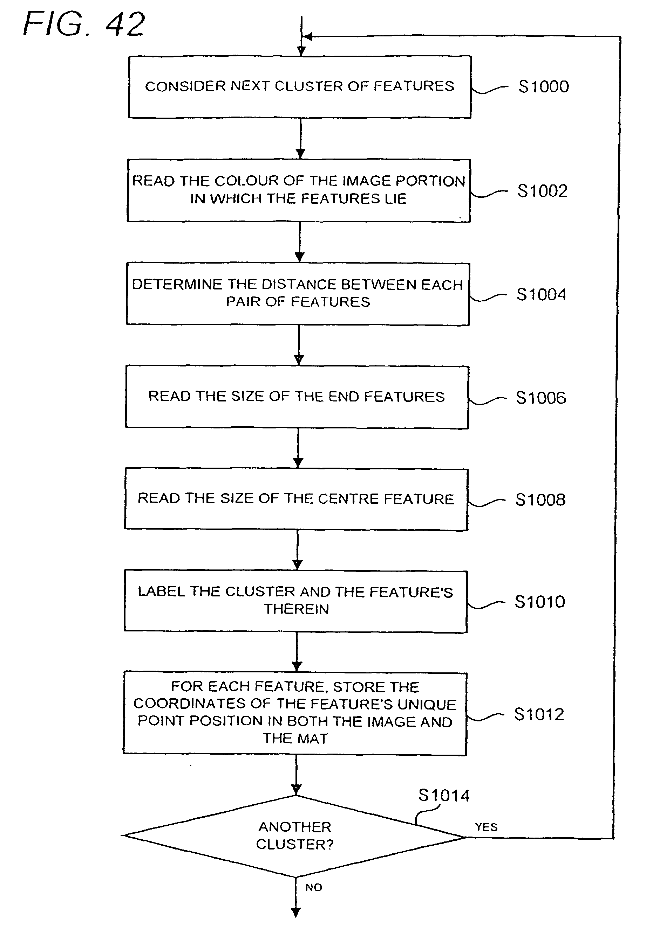

Figure 42 shows the processing operations performed by feature identifier 70 in the ninth embodiment at step S36 in Figure 7 to label each feature identified as being part of a cluster (that is, to assign a unique one-to-one correspondence between each feature in the input image which is part of a cluster and a feature on the photographic mat 34).

Referring to Figure 42, at step S1000, feature identifier 70 considers the next cluster of features (this being the first cluster the first time step S1000 is performed), and at step S1002, reads the colour of the image portion in which the features lie (previously stored at step S982 in Figure 41).

At step S1004, feature identifier 70 determines the straight line distance in the image between the centres of each pair of features in the cluster.

At step S1006, feature identifier 70 reads the size (that is the number of pixels stored at step S974 in Figure 41) of the end features in the cluster, the end features being determined as the features which have the greatest distance therebetween (for example features 3342 and 3344 for cluster 3250 in Figure 40).

At step S1008, feature identifier 70 reads the size of the centre feature in the cluster (that is, the feature which is not an end feature) previously stored at step S974 in Figure 41.

At step S1010, feature identifier 70 labels the cluster in dependence upon the colour read at step S1002 (which restricts the cluster to be one of the two clusters on the photographic mat 34 which has features lying in an area of that colour) and the sizes read at steps S1006 and S1008 (which uniquely identify the cluster from the two possibilities in dependence upon whether there are two large features and one small feature or two small features and one large feature). In addition, having labelled the cluster, feature identifier 70 labels each of the features therein. More particularly, each end feature is assigned a unique label in dependence upon the relative sizes of these features (since, in each cluster, one end feature has a large area and one end feature has a small area) and the centre feature is labelled irrespective of whether it has a large area or a small area since there is only one centre feature in this embodiment.

At step S1012, feature identifier 70 stores, for each feature in the cluster, the coordinates of the features unique point position in both the image and the photographic mat 34.

At step S1014, feature identifier 70 determines whether there is another cluster of features. Steps S1000 to S1014 are repeated until each cluster has been processed in the manner described above.

In summary, by performing the processing described above with reference to Figure 42, feature identifier 70 labels each feature in dependence upon the colour of the area in which the features lie and the relative sizes of the features.

Tenth Embodiment

A tenth embodiment of the invention will now be described.

In each of the first to ninth embodiments, processing is performed to detect the features in an image which represent features on the photographic mat 34, and then to identify the correct one-to-one correspondence between each detected feature in the image and a feature on the photographic mat 34. The correct one-to-one correspondences are then used to determine the position and orientation of the camera 410 when the image was recorded. However, once features in the image have been detected which represent features on the photographic mat 34, it is not necessary to identify the correct one-to-one correspondence between each feature in the image and a feature on the photographic mat 34. Instead, in the tenth embodiment, the position and orientation of camera 410 is calculated without first determining the correct one-to-one correspondences between the features in the input image and the features on the photographic mat 34.

The components of the tenth embodiment and the processing operations performed by the components are the same as those in the first embodiment, with the exception that the pattern on the photographic mat 34 is different, the processing performed by feature detector 50 at step S32 in Figure 7 is different, and the separate processing operations performed by feature identifier 70 and camera calculator 80 at steps S36 and S38 in Figure 7 are different and become combined. These differences will now be described.

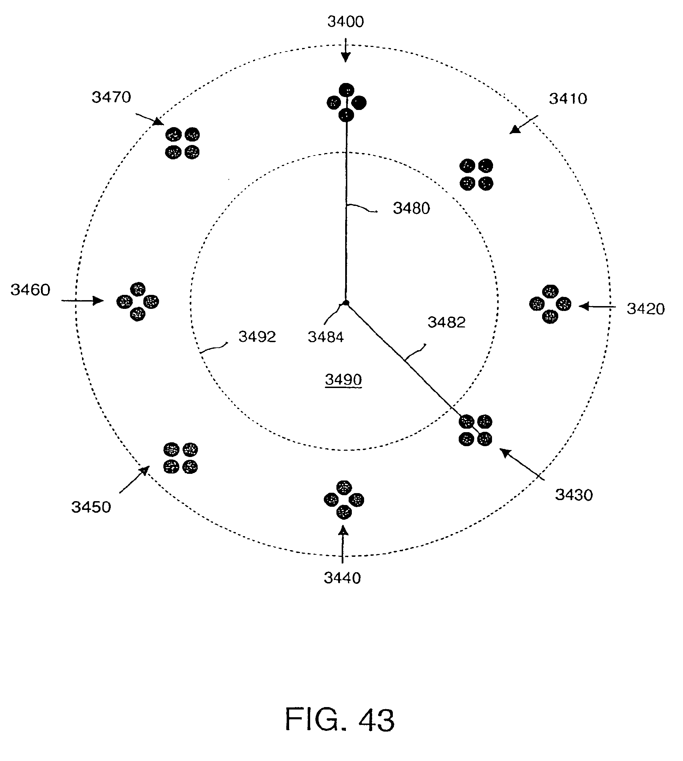

Figure 43 shows the pattern of features on a photographic mat 34 printed or displayed in the tenth embodiment.

Referring to Figure 43, the pattern on photographic mat 34 comprises a plurality of clusters 3400-3470, of which there are eight in this embodiment. Each cluster contains four features which, in this embodiment, are identical black circles.

As in the first embodiment, in the tenth embodiment, the feature circles are spatially grouped on the photographic mat 34 so that the distance between the centre of any two features in a given cluster is less than the distance between a feature in the given cluster and a feature in a different cluster.

In addition, as in the first embodiment, each cluster of circles in the tenth embodiment is orientated so that an imaginary line (that is, a line not actually present on photographic mat 34) through the centres of one pair of circles in the cluster (shown as line 3480 for cluster 3400 and as line 3482 for cluster 3430 in Figure 43) passes through a predetermined reference point 3484 on the photographic mat.

In the first embodiment, the clusters 200-222 are arranged on the photographic mat so that the distance of each cluster from the predetermined reference point 352 is the same. However, in the tenth embodiment, this is not the case. More particularly, clusters 3400, 3420, 3440 and 3460 are arranged so that the distance of each cluster from the reference point 3484 is the same, but clusters 3450 and 3470 are arranged so that the distance from the reference point 3484 to each of these clusters is the same but larger than the distance from the reference point 3484 to one of the clusters 3400, 3420, 3440 or 3460. Similarly, clusters 3410 and 3430 are positioned so that the distance from the reference point 3484 to these clusters is the same but less than the distance from the reference point 3484 to any one of the clusters 3400, 3420, 3440 or 3460. This positioning of clusters gives the pattern on the photographic mat 34 the property that it is rotationally asymmetric.

Clusters 3400-3470 are arranged around a blank area 3490 on which the object 400 is to be placed, the blank area 3490 being defined by a circle 3492 having the diameter stored at step S4 in Figure 2.

The processing performed by feature detector 50 at step S32 in Figure 7 to detect features in an input image is different from that performed in the first embodiment in that the thresholds used at steps S50 (Figure 8) to generate a binary image are different, and step S60 (Figure 8) is not performed since all features on the photographic mat 34 in the tenth embodiment are black. More particularly, in the tenth embodiment, the threshold values used at step S60 to generate a binary image are the same as those set out in equation (6) for the sixth embodiment.

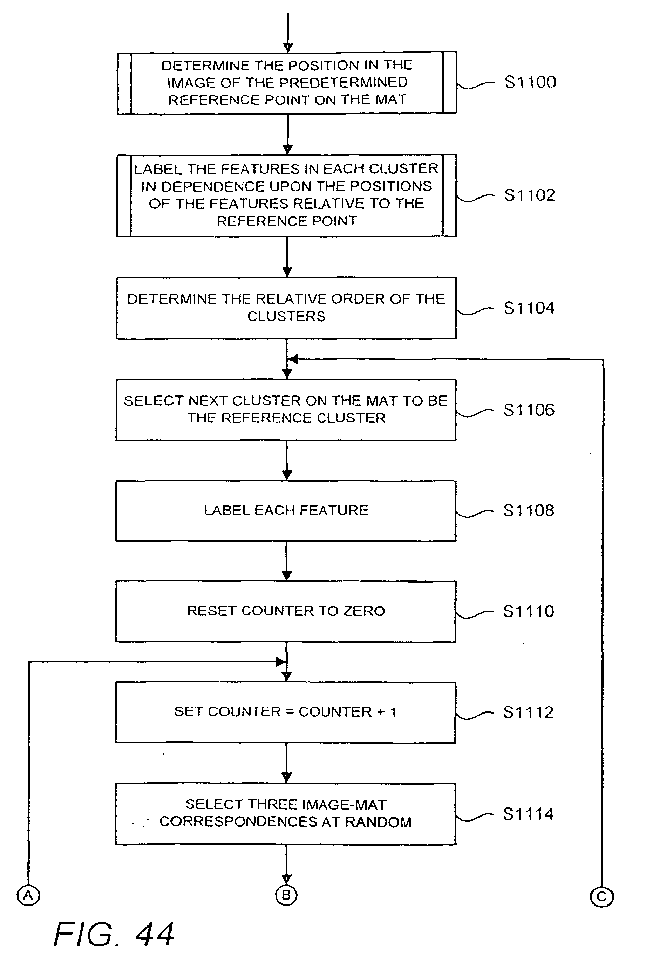

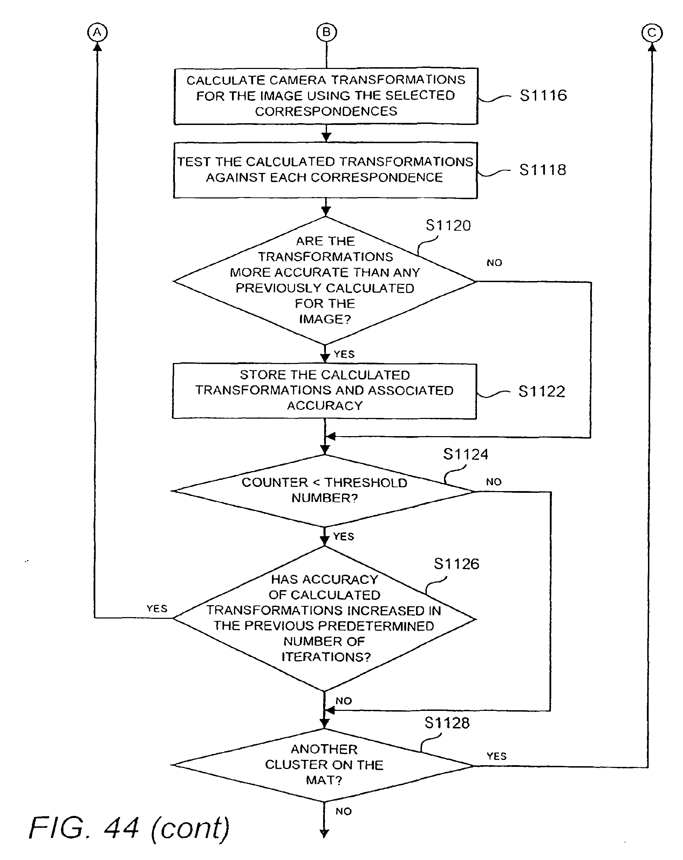

Figure 44 shows the processing operations performed in the tenth embodiment by feature identifier 70 and camera calculator 80 to process features determined by feature clusterer 60 to be part of a cluster in the input image which represents a cluster on the photographic mat 34, so as to determine the position and orientation of the camera 410 when the input image was recorded.

Referring to Figure 44, at step S1100, processing apparatus 2 determines the position in the image of the predetermined reference point 3484 on the photographic mat 34. This processing corresponds to the processing performed at step S140 (Figure 12) in the first embodiment, and accordingly will not be described again here.

At step S1102, processing apparatus 2 assigns a relative label to the features in each cluster in dependence upon the rotational order of the features relative to the reference point determined at step S1100. This processing is the same as the processing performed at step S142 (Figure 12) in the first embodiment, and accordingly will not be described again here.

At step S1104, processing apparatus 2 determines the rotational order of the clusters visible in the input image relative to the reference point 3484 determined at step S1100. More particularly, processing apparatus 2 determines the order of the visible clusters in a clockwise direction from a reference cluster selected from the visible clusters at random. This processing is performed in a conventional manner, for example by selecting the cluster as the next cluster in a clockwise direction as the cluster which, when its centre is connected to the centre of the previous cluster, results in the other clusters lying to the right of the connecting line.

As a result of the processing up to step S1104, processing apparatus 2 has detected the clusters of features in the input image which represent features on the photographic mat 34 and has determined the rotational order of the clusters. Thus, assuming that the object 400 obscures one or more of the clusters 3400-3470 so that these clusters are not visible in the image, and that the obscured clusters are adjacent to each other, processing apparatus 2 has detected the subset of clusters which are visible in the input image, and has determined the relative order of the clusters in the subset. However, at this stage, processing apparatus 2 has not determined which subset of the clusters on photographic mat 34 has been detected in the input image.

In subsequent processing, processing apparatus 2 considers each possible subset of clusters on the photographic mat 34 that the detected subset could represent, calculates and tests the position and orientation of camera 410 for each possibility, and selects the most accurate position and orientation.

More particularly, at step S1106, processing apparatus 2 selects the next cluster from the clusters 3400-3470 on the photographic mat 34 to be labelled as the reference cluster used to determine the relative order at step S1104 (this being the first cluster from the photographic mat the first time step S1106 is performed).

At step S1108, processing apparatus 2 labels each feature in the input image in dependence upon the cluster selected to be labelled as the reference cluster at step S1106. That is, processing apparatus 2 assigns a unique one-to-one correspondence between each feature in a cluster in the input image and a feature on the photographic mat 34 based on the reference cluster. More particularly, if, for example, cluster 3400 is selected at step S1106, then, at step S1108 the reference cluster in the input image is labelled as cluster 3400, and the other clusters in the input image are labelled using the cyclical order determined at step S1104 as clusters 3410, 3420 etc. On the other hand, if, for example, cluster 3450 from photographic mat 34 is selected at step S1106, then, at step S1108 the reference cluster in the input image is labelled as cluster 3450 and the remaining clusters in the input image are labelled in cyclical order as clusters 3460, 3470, 3400 etc. In addition, having allocated a label to each cluster in the input image, processing apparatus 2 allocates a label to each feature therein in dependence upon their relative positions within the cluster determined at step S1102.

As a result of performing the processing at steps S1106 and S1108, processing apparatus 2 has allocated a one-to-one correspondence between each feature in the input image and a feature on the photographic mat 34. However, the allocated one-to-one correspondences will not be the correct correspondences unless the cluster from the photographic mat 34 selected at step S1106 actually corresponds to the reference cluster in the input image.

At step S1110, processing apparatus 2 resets the value of a counter to zero.

At steps S1112 to S1126, processing apparatus 2 uses the one-to-one correspondences allocated at step S1108 to calculate and test the position and orientation of the camera 410. The processing performed in steps S1112 to S1126 is the same as the processing performed at steps S252 to S266 described above in the first embodiment, and accordingly will not be described again here.

At step S1128, processing apparatus 2 determines whether there is another cluster on the photographic mat 34 which has not yet been selected to be labelled as the reference cluster in the input image. Steps S1106 to S1128 are repeated until every cluster on the photographic mat 34 has been selected at step S1106 to be the reference cluster. In this way, the subset of clusters detected in the input image is compared against each subset of features on the photographic mat 34 to which it could correspond.

If the one-to-one correspondences allocated at step S1108 are not the correct correspondences, then the test of the calculated camera transformations performed at step S1118 will indicate a relatively large error because the pattern of features on photographic mat 34 is rotationally asymmetric in this embodiment. On the other hand, when the cluster from the photographic mat 34 selected at step S1106 actually corresponds to the reference cluster in the input image, the test performed at step S1108 will indicate a smaller error (higher accuracy) for the camera transformations than when the test is performed at step S1118. Accordingly, when steps S1106 to S1128 have been performed for every one of the clusters on the photographic mat 34 (that is, eight times in this embodiment) the stored camera transformations will be the camera transformations calculated using the correct one-to-one correspondences (since these will have the highest accuracy and will therefore be retained in memory at steps S1120 and S1122).

In summary, therefore, in the tenth embodiment, processing apparatus 2 does not perform processing to calculate the correct one-to-one correspondences between features in the input image and features on the photographic mat 34 prior to calculating the position and orientation of camera 410. Instead, processing apparatus 2 calculates the position and orientation of camera 410 using different sets of one-to-one correspondences, and selects the most accurate position and orientation which results.

Eleventh Embodiment

An eleventh embodiment of the invention will now be described.

In the first to tenth embodiments, processing is performed to detect candidate clusters of features in an image on the basis of the relationship between the spatial positions of the features on the photographic mat 34 or the connectedness of the features on the photographic mat 34. Each candidate cluster is then tested to determine whether it represents a cluster on the photographic mat 34 in dependence upon at least one further relationship between the features based on the size, colour and/or shape of the features. In the eleventh embodiment, however, this processing is reversed, and candidate clusters are detected using a relationship between the colours of features in a cluster on the photographic mat 34, and subsequently each candidate cluster is tested in dependence upon a relationship between the spatial positions of the features on the photographic mat 34.

The components of the eleventh embodiment and the processing operations performed by the components are the same as those in the first embodiment, with the exception that the pattern on the photographic mat 34 is different, the processing performed by feature detector 50 at step S32 in Figure 7 is different, the processing performed by feature clusterer 60 at step S34 in Figure 7 is different, and the processing performed by feature identifier 70 at step S36 in Figure 7 is different. These differences will now be described.

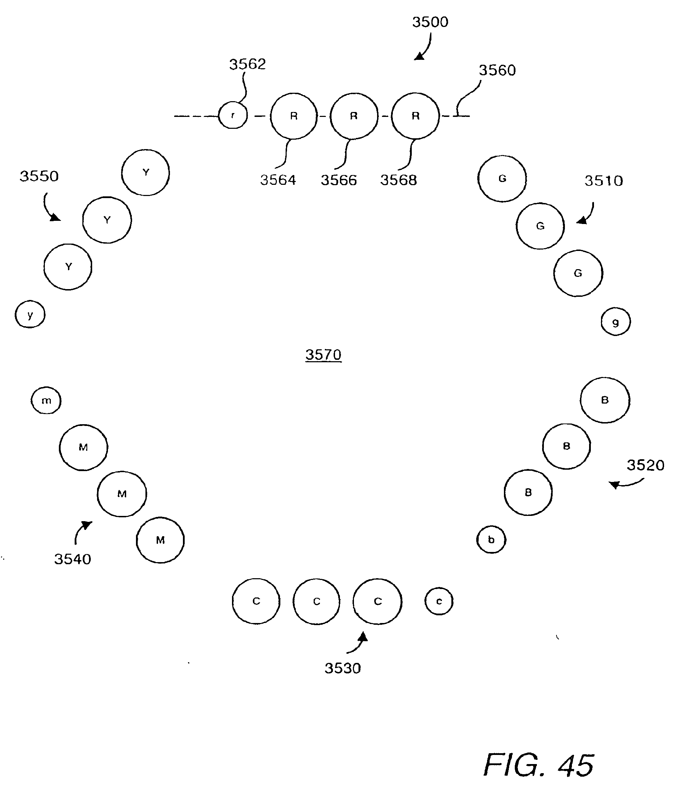

Figure 45 shows the pattern of features on the photographic mat 34 printed or displayed in the eleventh embodiment.

Referring to Figure 45, in the eleventh embodiment, the pattern on photographic mat 34 comprises a plurality of clusters 3500-3550, of which there are six in this embodiment.

Each cluster contains four features, each of which is a circle having either a large area or a small area, with a large area being twice that of a small area. In Figure 45, a circle with "R" in it is a red circle of large area on photographic mat 34 (that is, the letter does not actually exist on photographic mat 34, and is only used for labelling purposes in the drawing) a circle with "r" is a red circle of small area, a circle with "G" is a large green circle, a circle with "g" is a small green circle, a circle with "B" is a large blue circle, a circle with "b" is a small blue circle, a circle with "C" is a large cyan circle, a circle with "c" is a small cyan circle, a circle with "M" is a large magenta circle, a circle with "m" is a small magenta circle, a circle with "Y" is a large yellow circle, and a circle with "y" is a small yellow circle.

Within each cluster 3500-3550, the centres of the four features are arranged on an imaginary straight line (that is, a line not present on photographic mat 34 - indicated at 3560 for cluster 3500). Within a given cluster, the centres of the four features are spaced equal distances apart on the straight line.

The clusters 3500-3550 are arranged around a central blank area 3570 which has a size such that a circle having the diameter stored at step S4 (Figure 2) can be drawn therein without touching any of the features in the clusters 3500-3550.

The processing operations performed in the eleventh embodiment by feature detector 50 at step S32 in Figure 7 are the same as those performed in the first embodiment, with the exception that the processing performed at step S50 in Figure 8 to generate a binary image from which to identify groups of pixels is slightly different. More particularly, rather than setting the value of each pixel in the input image to 1 or 0 in accordance with equation (1) above, in the eleventh embodiment, feature detector 50 sets the value of each pixel in accordance with the following equation:

$$\textit{If } R<128 \textit{ or } G<128 \textit{ or } B<128 \textit{ set pixel value to } 1$$

$$\textit{else set the pixel value to } 0 \qquad \dots (10)$$

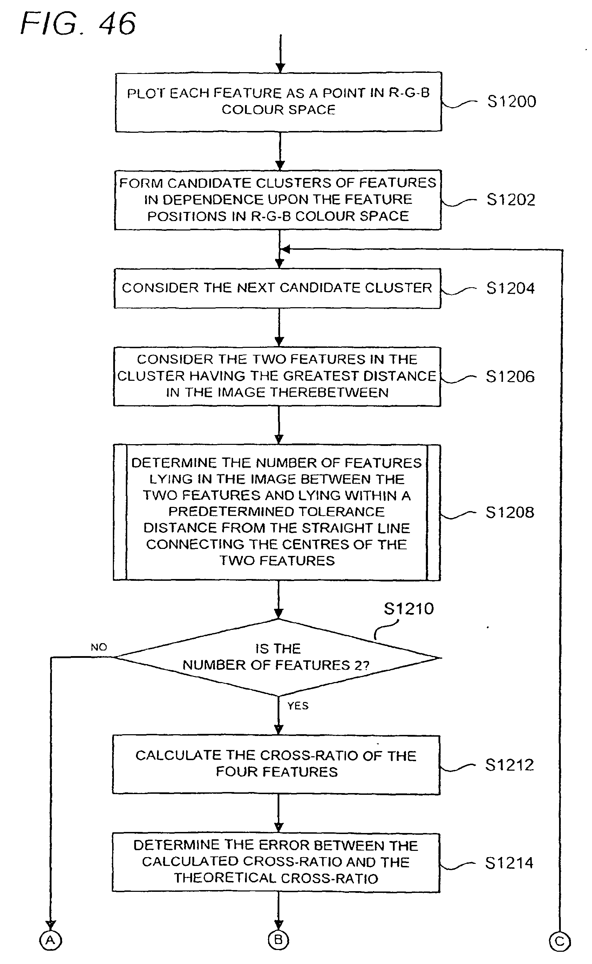

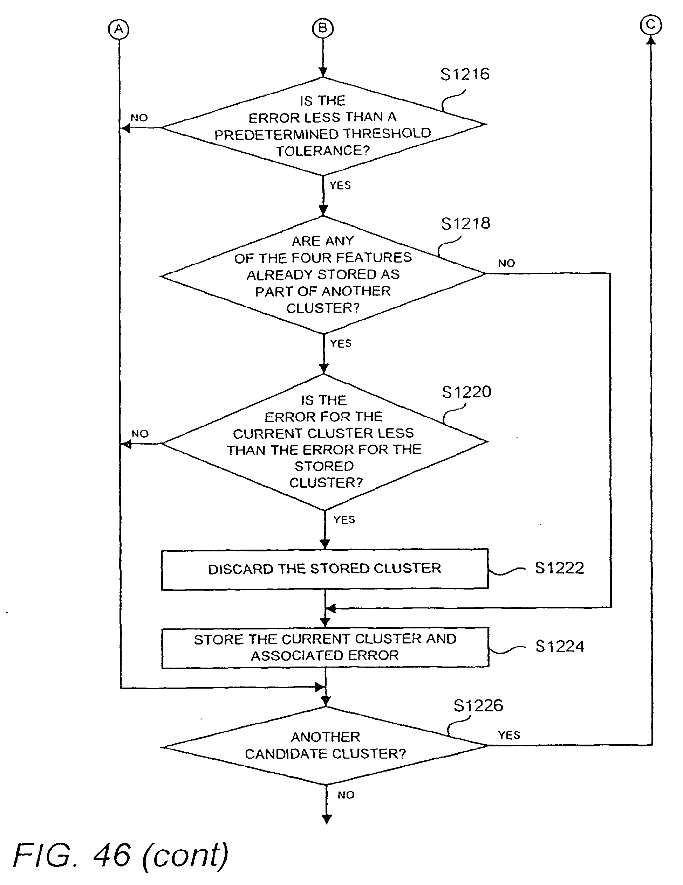

Figure 46 shows the processing operations performed by feature clusterer 60 in the eleventh embodiment at step S34 in Figure 7.

Referring to Figure 46, at step S1200, feature clusterer 60 reads the colour of each feature (previously stored at step S60 in Figure 8) and plots each feature as a point in RGB colour space in dependence upon the colour of the feature.

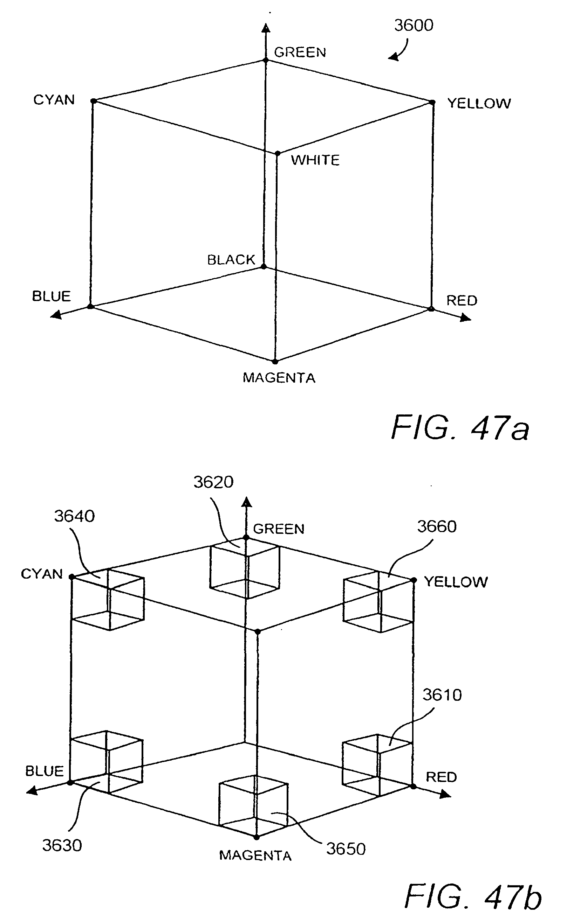

As is well known to the skilled person, the colours red, green, blue, cyan, magenta, yellow, black and white define the vertices of a cube in RGB colour space (as illustrated in Figure 47a as cube 3600). Accordingly, each point plotted at step S1200 by feature clusterer 60 will lie within the cube 3600. Points resulting from a feature on the photographic mat 34 will lie at, or near to (due to errors), one of the red, green, blue, cyan, magenta or yellow vertices. Points resulting from a feature on the subject object 400 may lie anywhere in cube 3600, including at or near to one of the red, green, blue, cyan, magenta and yellow vertices.

At step S1202, feature cluster 60 forms candidate clusters of features in dependence upon the feature positions in the RGB colour space determined at step S1200.

More particularly, referring to Figure 47b, feature clusterer 60 defines sub-regions 3610-3660 of the RGB colour space cube 3600 and defines the candidate clusters from the features whose points plotted at step S1200 lie in the sub-regions 3610-3660. In this embodiment, each sub-region 3610-3660 comprises a cube having a side length equal to one quarter that of the side length of cube 3600, and having one vertex which is the red, green, blue, cyan, magenta or yellow vertex of the cube 3600. To generate candidate clusters, feature clusterer 60 considers all of the points plotted at step S1200 lying in the red sub-region 3610, and designates as a candidate cluster each possible group of four features (since there are four features in each cluster 3500-3550 on photographic mat 34). This processing is repeated for each of the other colour sub-regions 3620-3660 to generate further candidate clusters.

Referring again to Figure 46, at steps S1204-S1226, feature clusterer 60 performs processing to test each candidate cluster of features set at step S1202 to determine whether it represents a cluster on the photographic mat 34.

More particularly, at step S1204, feature clusterer 60 considers the next candidate cluster of features generated at step S1202, and at step S1206 considers the two features in the cluster which have the greatest straight line distance in the image therebetween. Accordingly, if the candidate cluster currently being considered is a cluster on the photographic mat 34, then the two features considered at step S1206 will be the end features of the cluster in the straight line.

At steps S1208-S1224, feature clusterer 60 performs processing to determine whether there are two, and only two, features lying on a straight line between the two features considered at step S1206 and, if this is the case, whether the cross-ratio of the four features in the cluster is within a predetermined tolerance of the theoretical cross-ratio if the cluster represents a cluster on the photographic mat 34. Steps S1208-S1224 are the same as steps S804 to S820 in the sixth embodiment described above, and accordingly, will not be described again here.

At step S1226, feature clusterer 60 determines whether there is another candidate cluster of features to be tested. Steps S1204 to S1226 are repeated until each candidate cluster has been processed in the way described above. Accordingly, as a result of performing this processing, feature clusterer 60 has tested each candidate cluster and retained those clusters having features which satisfy the relationship that there are four features lying in a straight line, and the positions of the features are such that the cross-ratio is substantially the same as that of the cross-ratio for a cluster of features on the photographic mat 34.

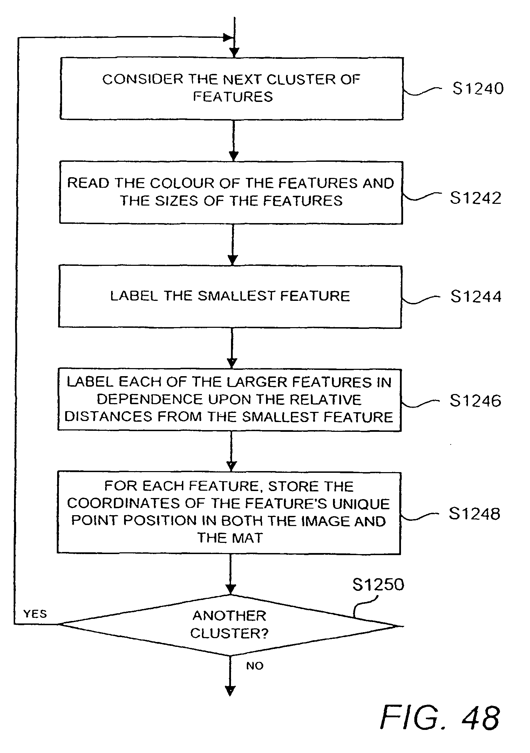

Figure 48 shows the processing operations performed in the eleventh embodiment by feature identifier 70 at step S36 in Figure 7.

Referring to Figure 48, at step S1240, feature identifier 70 considers the next cluster of features, and at step S1242, reads the sizes of the features and the colour of the features (previously stored at steps S56 and S60 respectively in Figure 8).

At step S1244, feature identifier 70 labels the feature having the smallest size as corresponding to the smallest feature on the photographic mat 34 having the colour read at step S1242. More particularly, by way of example, if the colour read at step S1242 is red, then at step S1244, feature identifier 70 labels the smallest feature in the cluster in the input image as feature 3562 on photographic mat 34.

At step S1246, feature identifier 70 labels each of the larger features in the cluster in dependence upon their relative distances from the smallest feature labelled at step S1244. More particularly, by way of example, if the smallest feature is labelled as feature 3562 at step S1244, then, at step S1246, feature identifier 70 labels the closest feature thereto in the cluster as feature 3564, the next closest feature thereto as feature 3566, and the furthest feature in the input image as feature 3568 on the photographic mat 34.

At step S1248, feature identifier 70 stores, for each feature in the cluster, the coordinates of the feature's unique point position in both the image and the mat. This processing corresponds to step S148 in Figure 12.

At step S1250, feature identifier 70 determines whether there is another cluster to be labelled. Steps S1240 to S1250 are repeated until each cluster has been processed in the way described above.

A number of modifications can be made to the embodiments described above within the scope of the claims.

For example, different features and/or clusters of features may be provided on photographic mat 34. In particular, the clusters can be made up of different numbers of features, and the features can have different colours, shapes and/or sizes to those described in the embodiments above.

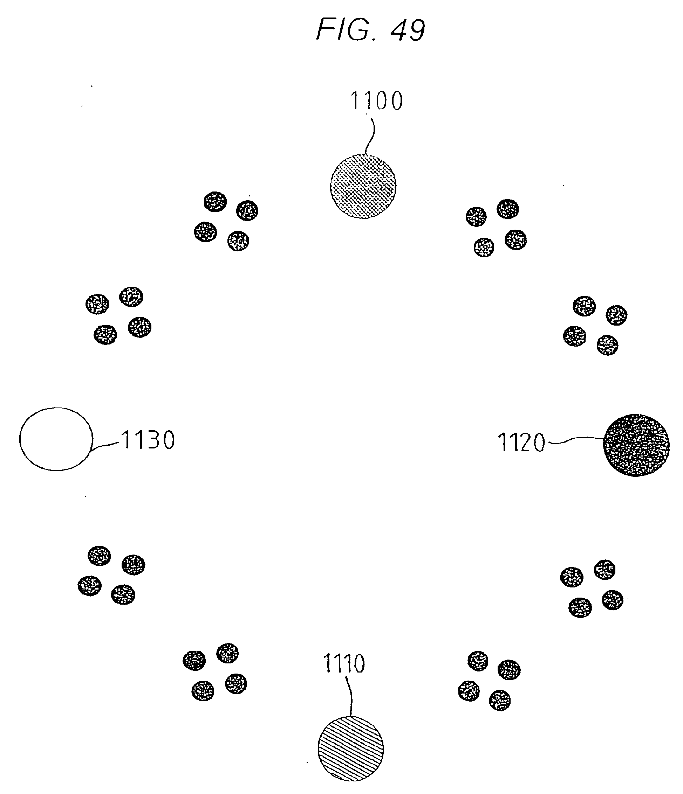

For example, features of a given colour, features of a given size and features of a given shape are interchangeable. For example, Figure 49 shows a photographic mat 34, which corresponds to the photographic mat in the third embodiment above (shown in Figure 23), but with the exception that a green circle 1100 is provided in place of red cross 800 and a blue circle 1110 is provided in place of black cross 804. The green circle 1100, blue circle 1110, black circle 1120 and red circle 1130 can be distinguished from each other on the basis of colour.

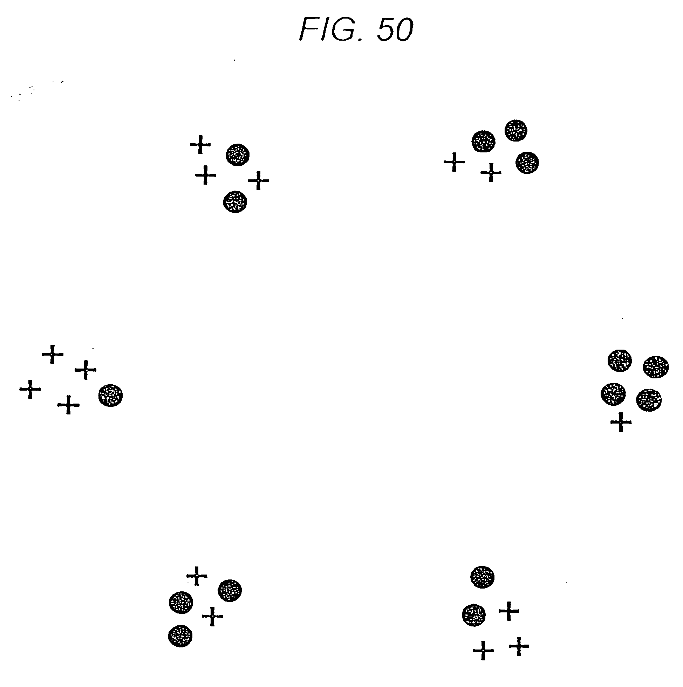

Similarly, Figure 50 shows an example of a photographic mat 34 which corresponds to the photographic mat 34 in the fourth embodiment above (shown in Figure 27), but in which each red circle in the photographic mat in the fourth embodiment is replaced by a black cross. In images of the photographic mat shown in Figure 50, the circle features and cross-features can be distinguished from each other on the basis of shape, as described above in the third embodiment.

Of course, features having shapes other than crosses and circles may be used on photographic mat 34.

In addition, rather than using different colours of features on the photographic mat 34, different shades of grey may be used. Accordingly, the term "colour" used herein encompasses black and different shades of grey.

Further, a feature on the photographic mat may comprise the intersection of two lines, and the feature may be detected in an image by first performing processing to detect lines, and then performing processing to detect the intersection of the lines.

Clusters may be provided on photographic mat 34 with relationships between the features therein which are different to the relationships described above, to detect candidate clusters of features in an image and to test a candidate cluster to determine whether or not it corresponds to a cluster on the photographic mat. These relationships between the features may be based on different positions, connectedness, colours, shapes and/or sizes of the features.

For example, in the ninth embodiment described above, the relationship used to detect candidate clusters of features in an image is the relationship that the features in a cluster on the photographic mat 34 all lie within an area of solid colour (the features being holes in this area in the ninth embodiment). However, instead, the pattern on photographic mat 34 may comprise features lying in any detectable area. For example, clusters may be provided each of which comprises a rectangle (or other shape) defined by black lines and features comprising circles corresponding to the holes in the ninth embodiment may be provided within the area defined by the black lines of the rectangle, such that each circle has a size which is the same as that of the corresponding hole in the ninth embodiment, but has a colour which corresponds to the colour of the area in which the hole lies in the ninth embodiment. Candidate clusters could then be detected by performing processing to detect lines and considering as a candidate cluster the features which lie within the area defined by connected lines.

In the embodiments described above, processing is carried out to detect candidate clusters of features, and subsequently processing is carried out to test each candidate cluster to determine whether or not it represents a cluster of features on the photographic mat 34. However, instead of detecting all candidate clusters first and subsequently testing them, a candidate cluster may be detected and tested before detecting and testing the next candidate cluster.

The number of features on a photographic mat 34 may be more or less than the numbers in the embodiments described above. The more features that are present on photographic mat 34, the more features that will be visible in each input image. Further, for each feature in an input image which is labelled (that is for which the corresponding feature on the photographic mat 34 is identified) the more correspondences there will be available to camera calculator 80 to calculate the position and orientation of the camera 410 for the input image, thereby improving the accuracy of the calculated position and orientation. However, as the number of features on the photographic mat 34 is increased, it must still remain possible to assign a unique label to each feature in an input image (and hence it may be necessary to increase the number of different colours, shapes, sizes etc of features) and the possibility that two or more features may blend together for certain positions and orientations of the photographic mat 34 relative to camera 410, and hence appear as a single feature in an input image so that the separate features can not be resolved, increases.

In the sixth embodiment above, at steps S872 to S892 (Figure 35), each feature in a cluster in an image which has been determined to correspond to a feature on the photographic mat is labelled in dependence upon the relative sizes of the features in the cluster. However, instead, the pattern on the photographic mat may be changed so that the distances between the centres of the features is different for each cluster so that each cluster has a different cross-ratio as defined by equation (8) above. In this way, each feature may be labelled on the basis of the different cross-ratios for each cluster.

In the embodiments described above, the one-to-one correspondence between the centre of a feature in the input image and the centre of a feature on photographic mat 34 is identified. However, the one-to-one correspondence between a point position other than the feature centre may be identified. For example, the features on the photographic mat 34 may not be circles and accordingly the unique point position of each group may not be the centre of the group of pixels. More particularly, if, for example, a feature on the photographic mat 34 is an isosceles triangle, the unique point position may be the vertex of the triangle where the two longest sides meet. All that is necessary is that each feature on the photographic mat 34 has associated therewith a unique point position on the mat, for which the position is defined and stored at step S6 (Figure 2) and each group of pixels (representing a mat feature) is processed at step S58 (Figure 8) (or the corresponding step) to determine the position in the image of the unique point position for the group.

In the embodiments described above, at step S36 (Figure 7) a one-to-one correspondence is defined for the unique point position of each feature in the input image which represents a feature on the photographic mat. However, instead, the features in a cluster detected in the input image may be used to define a further point in the image, and the point on the photographic mat corresponding to the further point may be determined. For example, referring to the first embodiment above, the four features in a cluster detected in an input image may be connected by diagonal lines (lines 630 and 632 in Figure 14a), with the intersection of the lines defining a further position in the input image. This further position may then be labelled to correspond to a position on the photographic mat 34. In this specific example, the number of further points determined for a cluster is less than the number of features in the cluster, which reduces the number of one-to-one correspondences available to calculate the position and orientation of camera 410. However, the features in a cluster may be used to calculate the position of more further points which can be labelled as corresponding to a point on the photographic mat.

In some of the embodiments above (for example the first to fifth embodiments), the clusters of features are typically arranged in a geometrical shape (a circle or triangle). Instead, the clusters can be arranged in "random" positions relative to each other. However, the point position of each feature on the photographic mat 34 needs to be known. In addition, in embodiments where a predetermined reference point needs to be identified in an input image in order to label clusters and/or features, then it is necessary that the clusters are arranged to allow this predetermined point to be found, or that some other means is provided to allow the predetermined point to be found (for example, the point itself may be marked on the photographic mat so that the mark can be found in the input image).

In the first and third embodiments described above, the predetermined point on the photographic mat 34 which is identified in an input image at step S140 (Figure 12) is the centre of the circle on which the clusters on the photographic mat lie. However, instead, any predetermined point which allows features and/or clusters as necessary to be labelled may be used. Similarly, the predetermined reference point in the sixth and tenth embodiments may be different to that described above.

In some of the embodiments described above, the features on the photographic mat 34 are arranged around an empty space in which the object 400 to be modelled is placed. However, the features may be provided over photographic mat 34 without a space for object 400, and object 400 may then be placed over some of the features. However, a minimum of 6 features should be visible in each input image.

In addition, if it is not necessary to generate a 3D computer model of the whole of an object 400, then it is unnecessary to provide features on photographic mat 34 which surround the object.

Further, the object 400 does not need to be placed on the photographic mat 34. For example, the object 400 may be placed along side the mat and images recorded so that at least part of the object and mat are visible in each image. Accordingly, the photographic mat 34 does not need to be in a horizontal plane (it could, for example, be hung in a vertical plane behind the object 400).

In addition, the calibration pattern may be attached to the subject object, and the camera 410 moved relative to the subject object with the calibration pattern thereon to record the images at different positions and/or orientations. For example, one or more calibration objects in the form of a flat photographic mat may be attached to different surfaces of the subject object.

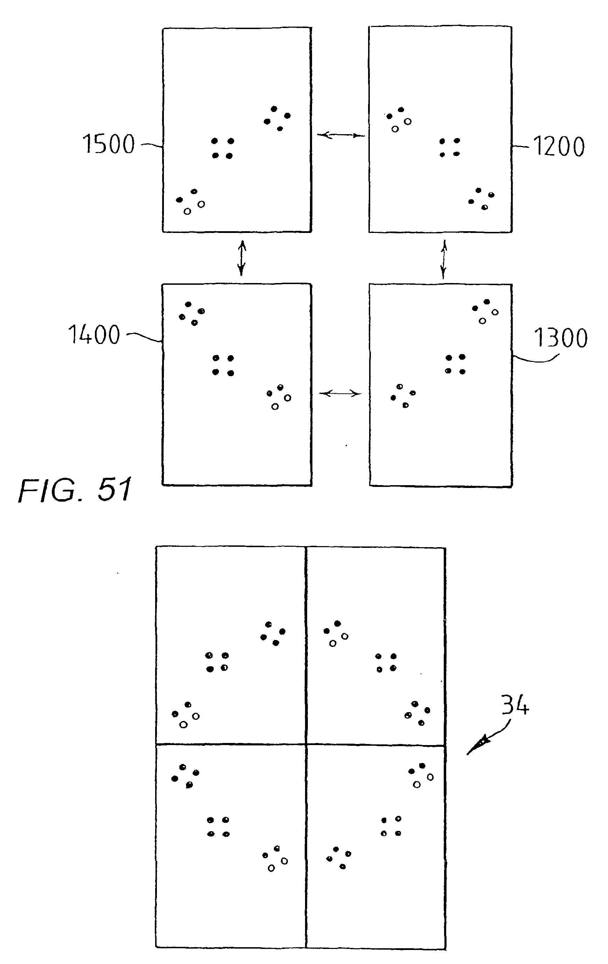

In the embodiments described above, printer 8 prints photographic mat 34 in accordance with the requested diameter input by a user and stored at step S4 (Figure 2). If the diameter is so large that a photographic mat 34 can not be printed on a single sheet of paper with the clusters of features spaced apart sufficiently to allow the object 400 to be placed within them, then mat generator 30 may control printer 8 to print the photographic mat on separate sheets of paper, which can then be placed together to form the photographic mat 34. Figure 51 shows an example in which clusters of features forming part of photographic mat 34 are printed on four separate sheets of paper 1200, 1300, 1400 and 1500, which are then placed together to form photographic mat 34.

In addition, clusters of features may be printed on separate sheets of paper but, instead of assembling the separate sheets of paper to form a photographic mat 34 so that the features in the pattern are at known predetermined positions stored in processing apparatus 2, the separate sheets of paper with the clusters of features thereon may be placed around the subject object at positions and orientations chosen by the user so that the positions of the clusters relative to each other are not known. In such an embodiment, the processing operations performed by mat generator 30 and camera calculator 80 are different to the processing operations in the embodiments described previously.

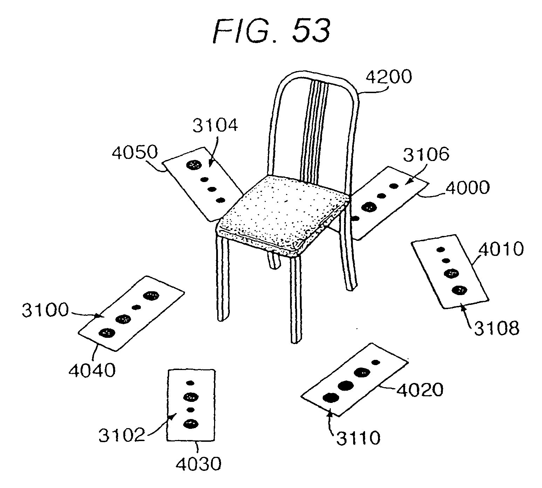

More particularly, referring to Figure 53, mat generator 30 causes printer 8 to print separate sheets of paper, each having thereon a different cluster of features from a calibration pattern. In the example shown in Figure 53, six sheets of paper 4000-4050 are printed and the clusters 3100-3110 from the seventh embodiment are printed on the sheets. The printed sheets are then placed at user-selected positions and orientations around a subject object 4200 for which a 3D computer model is to be generated. Accordingly, in this embodiment, the processing previously described at steps S2 and S4 in Figure 2 to request and store a diameter of the photographic mat is unnecessary.

Images of the subject object 4200 and the calibration pattern formed by the clusters of features 3100-3110 on sheets 4000-4050 are recorded at different positions and/or orientations by moving the imaging camera relative to the subject object 4200 and the sheets of paper 4000-4050.

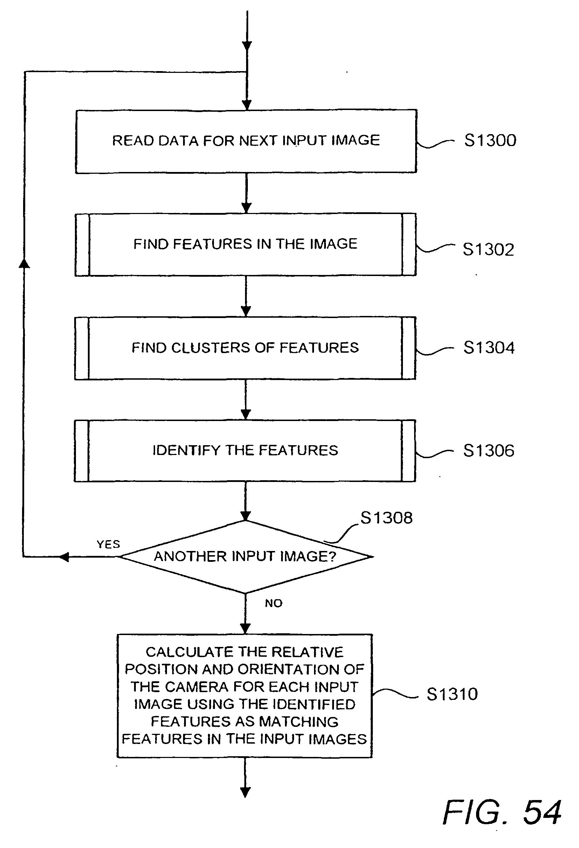

Figure 54 shows the processing operations performed at step S14 (Figure 6) to process the recorded images to calculate the imaging positions and orientations.

Referring to Figure 54, the processing performed at steps S1300, S1302, S1304 and S1306 is the same as the processing performed at steps S30, S32, S34 and S36 respectively in the seventh embodiment, and accordingly will not be described again here.

However, because the relative positions of the clusters 3100-3110 around the subject object 4200 are not known, unlike in the seventh embodiment, processing is not performed to calculate the position and orientation of the input image relative to a predetermined stored calibration pattern. Instead, as will be explained below, processing is performed to calculate the positions and orientations of the input images relative to each other.

More particularly, at step S1308, processing apparatus 2 determines whether there is another input image to process, and steps S1300 to S1306 are repeated until each input image has been processed. Accordingly, after this processing has been completed (that is, when it is determined at step S1308 that no further input images remain to be processed), each feature from a cluster 3100-3110 appearing in an input image has been labelled and its position in the input image has been determined. The labelled features therefore define features in different input images which correspond to each other, that is, features which match between the different input images. This is because, labelling a feature in an input image defines a one-to-one correspondence between the feature and a feature in the calibration pattern, so that features in different input images which have the same label are matching features because they correspond to the same feature in the calibration pattern.

At step S1310, camera calculator 80 performs processing to calculate the relative position and orientation of the camera for each input image using the features identified at step S1306 as matching features in the input images.

Many techniques are known for calculating relative imaging positions and orientations once matching features in input images have been detected. For example, suitable processing is described in EP-A-0898245 and EP-A-0901105.

In summary, therefore, the calibration object comprises a plurality of pieces, each piece having a cluster of features thereon. The clusters of features are provided around the subject object 4200, as in previous embodiments, and advantage is taken of the properties of the features in the cluster to distinguish features which are part of a cluster (and hence part of the calibration pattern) from features which are part of the subject object, and to enable the features to be uniquely identified. However, because the relative positions of the clusters are not known, processing is not performed as in previous embodiments to calculate the imaging positions and orientations for an input image relative to a known, stored calibration pattern, but instead the input images are processed to calculate the imaging positions and orientations relative to each other.

In the example shown in Figure 53 and described above, clusters of features from the calibration pattern in the seventh embodiment are described. However, clusters of features from calibration patterns in any of the other embodiments described above may be used. In embodiments where it is necessary to determine a predetermined point in order to label the features within a cluster, it is necessary for the user to arrange the separate sheets of paper on which the clusters are printed around the subject object so that each cluster has the required orientation relative to the predetermined point. More particularly, referring to the sixth embodiment by way of example, the calibration pattern for which is shown in Figure 31, fifteen sheets of paper would be printed, each with a respective one of the clusters 3000-3028 thereon, and the sheets of paper would be arranged around the subject object so that a straight line passing through the centres of the circles in each cluster passes through a predetermined point (3050 in Figure 31). The predetermined point could be marked on the surface on which the sheets are arranged thereby enabling the user to achieve the correct alignment of each cluster with the marked point. In embodiments in which processing is performed to predict the position of a cluster in an input image on the basis of a detected cluster (for example the first, second and third embodiments), the user must arrange the printed sheets so that they are at predetermined positions relative to each other within a given tolerance.

In the example described above with reference to Figure 53, a respective cluster of features is printed on each sheet of paper. However, each feature in the calibration pattern may be provided separately, and the separate features can then be positioned to form a calibration pattern. For example, each feature may be printed on a different sheet of paper or separate disks (or other shapes) of card, or other suitable material, may be provided, so that each disk can act as a feature in the calibration pattern.

In all of the embodiments above, rather than printing the photographic mat on a recording medium or displaying the photographic mat on display panel 10, the features of the photographic mat may be marked (for example painted), projected or otherwise represented on a surface such as a floor or field for the object to be placed therein.

The display panel 10 could comprise any form of display apparatus for displaying the pattern of the photographic mat. For example, the display panel 10 could comprise the display of monitor 4, which could be turned so that the display is horizontal if the object is to be placed on the photographic mat, or could be placed behind the object so that the display is in a substantially vertical plane.

In the embodiments described above, the calibration object which is imaged with the object 400 has the form of a two-dimensional photographic mat 34. However, instead of photographic mat 34, a three-dimensional calibration object may be used. For example, mat generator 30 may control printer 8 to print patterns of features on separate sheets, and the sheets may then be folded into, or attached to, a three-dimensional object, such as a cube.

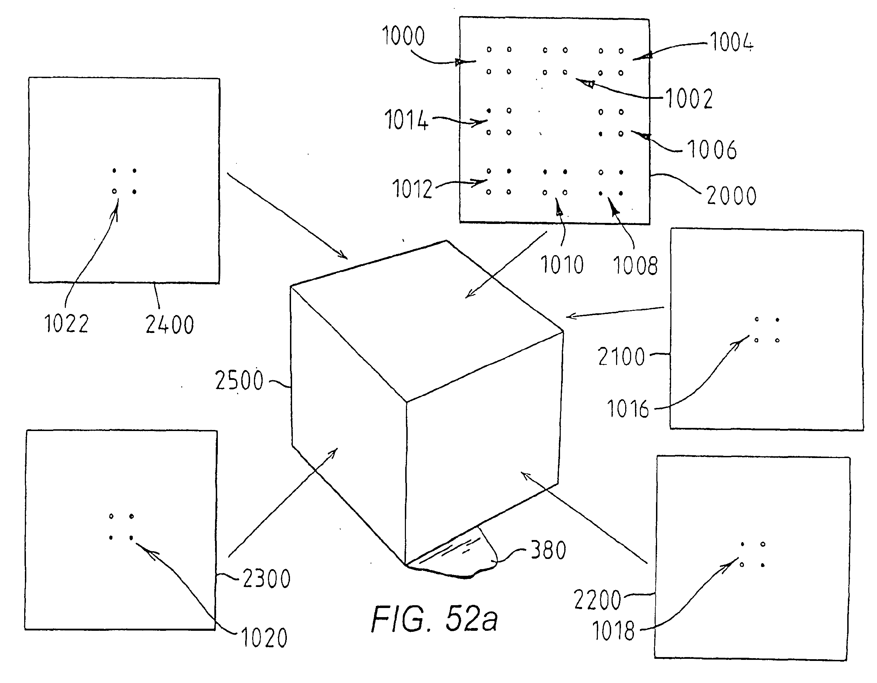

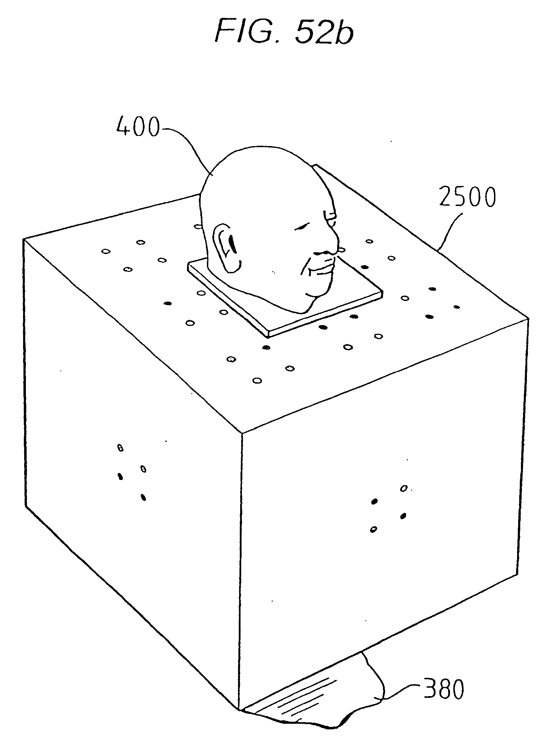

Figures 52a and 52b illustrate an example in which the pattern of features in the fifth embodiment described above is applied to a three-dimensional calibration object.

More particularly, referring to Figure 52a, mat generator 30 causes printer 8 to print a pattern of features comprising clusters 1000-1014 on a sheet of paper 2000, a pattern comprising cluster 1016 on a sheet 2100, a pattern comprising cluster 1018 on a sheet 2200, a pattern comprising cluster 1020 on a sheet 2300, and a pattern comprising cluster 1022 on a sheet 2400. Thus, five sheets are printed, with each sheet showing at least one cluster of features. Sheet 2000 is attached to the top surface of a cube 2500, and sheets 2100, 2200, 2300 and 2400 are attached to the side faces of the cube 2500. As the bottom face of cube 2500 rests on surface 380, it can not be seen in any images, and it is not therefore necessary to provide a pattern of features on this bottom surface.

The cube 2500 with the sheets 2000-2400 attached can therefore be used as a three-dimensional calibration object.

More particularly, referring to Figure 52b, object 400 is placed on the top surface of cube 2500 in the central, blank area of sheet 2000 which is surrounded by the clusters 1000-1014.

As in the embodiments described above, cube 2500 can be moved and rotated relative to the camera 410 to record images of the object 400 at different positions and orientations.

By using a three-dimensional calibration object, features can be provided in planes other than the plane on which the object 400 sits, and accordingly the visibility of the features in these planes may be increased, providing more one-to-one correspondences with which to calculate the imaging position and orientation, and hence increasing the accuracy of the calculated position and orientation.

The object 400 does not need to be placed on the calibration object, but instead, may be placed along side the object and images may be recorded so that at least part of the object 400 and calibration object are visible in each image.

In the embodiments above, the images input to processing apparatus 2 are recorded by moving the photographic mat 34 (or cube 2500) with object 400 thereon relative to camera 410. However, instead, camera 410 may be moved relative to the photographic mat 34 (or cube 2500) and object 400, or both the camera 410 and the photographic mat 34 (or cube 2500) with object 400 thereon may be moved.

In the embodiments described above, at step S12 (Figure 6) data input by a user defining the intrinsic parameters of camera 410 is stored. However, instead, default values may be assumed for some, or all, of the intrinsic camera parameters, or processing may be performed to calculate the intrinsic parameter values in a conventional manner, for example as described in "Euclidean Reconstruction from Uncalibrated views" by Hartley in Applications of Invariance in Computer Vision, Mundy, Zisserman and Forsyth eds, pages 237-256, Azores 1993.

At step S56 and step S58 (Figure 8) described above, feature detector 50 stores the number of pixels in each group of pixels and calculates and stores the centre of gravity of each group. However, this processing may be performed as part of step S52, by keeping a running total of the number of pixels in each group together with the "x" and "y" coordinates of the pixels.

At steps S82 to S98 (Figure 9) described above, features which lie in the input image within the largest span distance of each of three features in a set are processed to try to form a set of four features. However, rather than considering only features which lie within the largest span distance from each of the three features, step S82 may be omitted and at steps S86 to S98, every feature in the input image may be considered for addition to the three features in the set remaining after step S80 has been performed.

In the embodiments described above, image data from an input image relating to the object 400 is segmented from the image data related to the photographic mat 34 and background as described with reference to Figure 19. However, other conventional segmentation methods may be used instead. For example, a segmentation method may be used in which a single RGB value representative of the colour of the photographic mat 34 and background is stored and each pixel in an input image is processed to determine whether the Euclidean distance in RGB space between the RGB background value and the RGB pixel value is less than a specified threshold.

In the embodiment described above, after the position and orientation of the camera 410 has been determined for each input image, processing is performed to generate a 3D computer model of the object 400. However, the position and orientation of the camera may be used for different applications. For example, the calculated camera positions and orientations may be used to add synthetic objects to a video sequence, the positions and orientations of the cameras being needed to register the positions and orientations of the synthetic objects.

In the embodiments described above, processing apparatus 2 may be connected to printer 8 or display panel 10 via a communication link such as the Internet, and image data recorded by camera 410 may be sent to the processing apparatus 2 over the communication link.

In the embodiments described above, the components of processing apparatus 2 may be provided in camera 410 or printer 8.

In the embodiments described above, mat generator 30 may be provided as a separate apparatus from the other components of processing apparatus 2. For example, mat generator 30 may be provided in camera 410 or may be provided in printer 8. Data defining the mat which mat generator 30 caused to be printed or displayed would then be input to processing apparatus 2.

In the embodiments described above, images of the subject object 400 and calibration object 34 are recorded using visible light and processing is performed on the visible light data. However, light of other wardlengths may be used, for example, infrared or ultraviolet light.

In the embodiments above, data defining the calibration object 34 may be provided to a user as pixel data on a storage device or conveyed by a signal for printing.

In the embodiments described above, at steps S16 to S20 processing is performed to generate data defining a 3D computer model of the subject object, and at step S22 images of the 3D computer model are displayed. However, in addition, or instead, the imaging positions and orientations calculated at step S14 may be used to control manufacturing equipment to manufacture a physical model of the subject object. For example, data may be generated to control a cutting apparatus to cut material to the appropriate dimensions to model the subject object.

In the embodiments described above, processing is performed by a computer using processing routines defined by programming instructions. However, some, or all, of the processing could be performed using hardware.


**Claims**

1. An image processing apparatus (2) for processing image data recorded by imaging means (410) defining an image of at least part of a subject object (400,4200) and a calibration object (10,34,2500,4000-4050) having a pattern comprising a plurality of discrete features (Figs. 3,20,23,27,29,31,36,37,40,43,45,49 and 50) with each feature defining a respective position on the calibration object, at least some of the features being grouped into clusters such that the features in a given cluster satisfy at least first and second cluster relationships, each cluster relationship based on at least one of the colour, shape, size, position and connectedness of the features in the cluster, to calculate the position and orientation of the imaging means when the image was recorded, the apparatus (2) comprising:

   means (50,60) for processing image data defining an image to detect candidate clusters of features in the image which may represent clusters of features on the calibration object on the basis of at least the first cluster relationship;
   means (60) for processing candidate clusters to distinguish clusters in the image in which all of the features represent features on the calibration object from clusters containing at least one feature in the image representing a feature not on the calibration object by determining which candidate clusters contain features satisfying at least the second cluster relationship;
   means (70) for allocating a one-to-one correspondence between at least some points in the image and points on the calibration object itself; and
   means (80) for calculating the position and orientation at which the image was recorded on the basis of at least some of the one-to-one correspondences.

2. Apparatus according to claim 1, wherein the means (50,60) for processing image data to detect candidate clusters comprises:

   pixel detecting means (50) for processing the image data to detect groups of pixels defining features in the image which may represent features on the calibration object; and
   cluster detecting means (60) for grouping at least some of the features detected by the pixel detecting means into candidate clusters.

3. Apparatus according to claim 2, wherein the pixel detecting means (50) comprises:

   means for detecting pixels of predetermined colour; and
   means for detecting groups comprising detected pixels which are connected in the image.

4. Apparatus according to any preceding claim, wherein the means (70) for allocating one-to-one correspondences comprises means for allocating one-to-one correspondences between at least some features in the clusters in the image determined to represent a cluster on the calibration object and features on the calibration object itself.

5. Apparatus according to any preceding claim, wherein at least some of the features or clusters on the calibration object are visually distinguishable from the others, and wherein the means (70) for allocating one-to-one correspondences comprises means for performing processing using the features or clusters in the image possessing the distinguishing characteristics to allocate the one-to-one correspondences.

6. Apparatus according to claim 5, wherein all of the features in at least some of the clusters on the calibration object are substantially identical, and wherein the means (70) for allocating one-to-one correspondences is arranged to allocate the one-to-one correspondence for a said substantially identical feature in dependence upon a feature or cluster possessing distinguishing characteristics.

7. Apparatus according to any of claims 1 to 5, wherein the means (70) for allocating one-to-one correspondences is arranged to allocate at least some one-to-one correspondences in dependence upon positions of features in the image relative to the position in the image of a reference point on the calibration object.

8. Apparatus according to any preceding claim, wherein the means (70) for allocating one-to-one correspondences is arranged to allocate at least some one-to-one correspondences by:

   determining a one-to-one cluster correspondence between a given cluster in the image determined to represent a cluster on the calibration object and a cluster on the calibration object itself; and
   determining a one-to-one feature correspondence between features in the image in the given cluster and features on the calibration object using the one-to-one cluster correspondence

9. Apparatus according to claim 8, wherein the means (70) for allocating one-to-one correspondences is arranged to determine a one-to-one cluster correspondence in dependence upon the relative positions within the cluster of predetermined features.

10. Apparatus according to claim 9, wherein the means (70) for allocating one-to-one correspondences is arranged to determine a one-to-one cluster correspondence in dependence upon the positions within the cluster of the predetermined features relative to the position in the image of a reference point on the calibration object.

11. Apparatus according to any of claims 1 to 5, and 7 to 10, wherein the pattern on the calibration object comprises a plurality of clusters each containing the same predetermined number of features arranged in a respective straight line, and wherein the means (50,60) for detecting candidate clusters is arranged to process the image data to detect clusters comprising the predetermined number of features which lie on a straight line in the image.

12. Apparatus according to claim 11, wherein the features in the clusters on the calibration object are arranged at predetermined relative spacings along the respective straight lines, and wherein the means (60) for processing the candidate clusters is arranged to determine whether the features in a candidate cluster have the relative spacings in the image.

13. Apparatus according to claim 11 or claim 12, wherein the means (70) for allocating one-to-one correspondences is arranged to allocate the one-to-one correspondences in dependence upon the relative sizes of the features in a cluster.

14. Apparatus according to any preceding claim, wherein the calibration object comprises a plurality of parts (1200-1500, 2000-2400, 4000-4050), each part having thereon at least one feature of the pattern.

15. Apparatus according to claim 14, wherein each part of the calibration object has thereon at least one cluster of features.

**16.** Apparatus according to any preceding claim, wherein the means (80) for calculating the position and orientation at which the image was recorded is arranged to calculate the position and orientation relative to a predetermined configuration of the pattern on the calibration object.

**17.** Apparatus according to any of claims 1 to 15, wherein the means (80) for calculating the position and orientation at which the image was recorded is arranged to calculate the position and orientation relative to the position and orientation at which a further image of the subject object and calibration object was recorded.

**18.** Apparatus according to claim 17, wherein the means (80) for calculating the position and orientation at which the image was recorded is arranged to calculate the position and orientation relative to the position and orientation of the further image by using the one-to-one correspondences to determine matching features in the image and the further image and using the matching features to calculate the relative positions and orientations at which the image and the further image were recorded.

**19.** An image processing method of processing image data recorded by imaging means (410) defining an image of at least part of a subject object (400,4200) and a calibration pattern (Figs. 3,20,23,27,29,31,36,37,40, 43,45,49 and 50) comprising a plurality of discrete features with each feature defining a respective position in the pattern, at least some of the features being grouped into clusters such that the features in a given cluster satisfy at least first and second cluster relationships, each cluster relationship based on at least one of the colour, shape, size, position and connectedness of the features in the cluster, to calculate the position and orientation of the imaging means when the image was recorded, the method comprising:

processing image data defining the image to detect candidate clusters of features in the image which may represent clusters of features in the calibration pattern on the basis of at least the first cluster relationship;
processing candidate clusters to distinguish clusters in the image in which all of the features represent features in the calibration pattern from clusters containing at least one feature in the image representing a feature not in the calibration pattern by determining which candidate clusters contain features satisfying at least the second cluster relationship;
allocating a one-to-one correspondence between at least some points in the image and points in the calibration pattern itself; and
calculating the position and orientation at which the image was recorded on the basis of at least some of the one-to-one correspondences.

**20.** A method according to claim 19, wherein the step of processing the image data to detect candidate clusters comprises:

processing the image data to detect groups of pixels defining features in the image which may represent features in the calibration pattern; and
grouping at least some of the features detected in the step of detecting groups of pixels into candidate clusters.

**21.** A method according to claim 20, wherein the step of detecting groups of pixels comprises:

detecting pixels of predetermined colour; and
detecting groups comprising detected pixels which are connected in the image.

**22.** A method according to any of claims 19 to 21, wherein the step of allocating one-to-one correspondences comprises allocating one-to-one correspondences between at least some features in the clusters in the image determined to represent a cluster in the calibration pattern and features in the calibration pattern itself.

**23.** A method according to any of claims 19 to 22, wherein at least some of the features or clusters in the calibration pattern are visually distinguishable from the others, and wherein the step of allocating one-to-one correspondences comprises performing processing using the features or clusters in the image possessing the distinguishing characteristics to allocate the one-to-one correspondences.

**24.** A method according to claim 23, wherein all of the features in at least some of the clusters in the calibration pattern are substantially identical, and wherein, in the step of allocating one-to-one correspondences, the one-to-one correspondence for a said substantially identical feature is allocated in dependence upon a feature or cluster possessing distinguishing characteristics.

**25.** A method according to any of claims 19 to 23, wherein, in the step of allocating one-to-one correspondences, at least some one-to-one correspondences are allocated in dependence upon positions of features in the image relative to the position in the image of a reference point in the calibration pattern.

**26.** A method according to any of claims 19 to 25, wherein, in the step of allocating one-to-one correspondences at least some one-to-one correspondences are allocated by:

determining a one-to-one cluster correspondence between a given cluster in the image determined to represent a cluster in the calibration pattern and a cluster in the calibration pattern itself; and
determining a one-to-one feature correspondence between features in the image in the given cluster and features in the calibration pattern using the one-to-one cluster correspondence.

**27.** A method according to claim 26, wherein, in the step of allocating one-to-one correspondences, a one-to-one cluster correspondence is determined in dependence upon the relative positions within the cluster of predetermined features.

**28.** A method according to claim 27, wherein, in the step of allocating one-to-one correspondences, a one-to-one cluster correspondence is determined in dependence upon the positions within the cluster of the predetermined features relative to the position in the image of a reference point in the calibration pattern.

**29.** A method according to any of claims 19 to 23, and 25 to 28, wherein the calibration pattern comprises a plurality of clusters each containing the same predetermined number of features arranged in a respective straight line, and wherein, in the step of detecting candidate clusters, the image data is processed to detect clusters comprising the predetermined number of features which lie on a straight line in the image.

**30.** A method according to claim 29, wherein the features in the clusters in the calibration pattern are arranged at predetermined relative spacings along the respective straight lines, and wherein, in the step of processing the candidate clusters, processing is performed to determine whether the features in a candidate cluster have the relative spacings in the image.

**31.** A method according to claim 29 or claim 30, wherein, in the step of allocating one-to-one correspondences, one-to-one correspondences are allocated in dependence upon the relative sizes of the features in a cluster.

**32.** A method according to any of claims 19 to 31, wherein the calibration pattern is provided on a plurality of separate objects (1200-1500, 2000-2400, 4000-4050), each object having thereon at least one feature of the pattern.

**33.** A method according to claim 32, wherein each object has thereon at least one cluster of features.

**34.** A method according to any of claims 19 to 33, wherein, in the steps of calculating the position and orientation at which the image was recorded, the position and orientation is calculated relative to a predetermined configuration of the calibration pattern.

**35.** A method according to any of claims 19 to 33, wherein, in the step of calculating the position and orientation at which the image was recorded, the position and orientation is calculated relative to the position and orientation at which a further image of the subject object and calibration pattern was recorded.

**36.** A method according to claim 35, wherein, in the step of calculating the position and orientation at which the image was recorded, the position and orientation is calculated relative to the position and orientation of the further image by using the one-to-one correspondences to determine matching features in the image and the further image and using the matching features to calculate the relative positions and orientations at which the image and the further image were recorded.

**37.** A method according to any of claims 19 to 36, further comprising generating a signal conveying the calculated position and orientation of the imaging means.

**38.** A method according to claim 37, further comprising recording the signal either directly or indirectly.

**39.** A method according to any of claims 19 to 38, further comprising processing the image data to segment image data relating to the subject object from background image data.

**EP 1 232 480 B1**

40. A method according to any of claims 19 to 39, further comprising generating data defining a 3D computer model of the surface of the subject object using the calculated position and orientation of the imaging means.

41. A method according to claim 40, further comprising generating a signal conveying the 3D computer model.

42. A method according to claim 41, further comprising recording the signal either directly or indirectly.

43. A method according to any one of claims 19 to 42, further comprising the step of generating data for controlling an apparatus to create a physical model of the subject object.

44. A method according to any of claims 19 to 43, further comprising the step of generating a physical model of the subject object.

45. A storage device storing computer program instructions to program a programmable processing apparatus to become operable to perform a method as set out in at least one of claims 19 to 44.

46. A signal conveying computer program instructions to program a programmable processing apparatus to become operable to perform a method as set out in at least one of claims 19 to 44.

**Patentansprüche**

1. Bildverarbeitungsvorrichtung (2) zum Verarbeiten von durch eine Bilderstellungseinrichtung (410) aufgezeichneten Bilddaten, die ein Bild von zumindest einem Teil eines Untersuchungsobjekts (400; 4200) und eines Kalibrierungsobjekts (10, 34; 2500; 4000 bis 4050) definieren, das ein Muster aufweist, das eine Vielzahl von diskreten Merkmalen (Figuren 3, 20, 23, 27, 29, 31, 36, 37, 40, 43, 45, 49 und 50), wobei jedes Merkmal eine jeweilige Position auf dem Kalibrierungsobjekt definiert, umfasst, wobei zumindest einige der Merkmale derart in Cluster gruppiert sind, dass die Merkmale in einem gegebenen Cluster zumindest eine erste und zweite Cluster-Beziehung erfüllen, wobei jede Cluster-Beziehung auf zumindest einem Element: Farbe, Form, Größe, Position und Verbundenheitsgrad der Merkmale in dem Cluster basiert, um die Position und Orientierung der Bilderstellungseinrichtung zu berechnen, als das Bild aufgezeichnet wurde, wobei die Vorrichtung (2) umfasst:

   eine Einrichtung (50, 60) zum Verarbeiten von ein Bild definierenden Bilddaten, um Kandidaten-Cluster von Merkmalen in dem Bild, die Cluster von Merkmalen auf dem Kalibrierungsobjekt darstellen können, auf der Grundlage zumindest der ersten Cluster-Beziehung zu erfassen,
   eine Einrichtung (60) zum Verarbeiten von Kandidaten-Clustern, um Cluster in dem Bild, in denen alle Merkmale Merkmale auf dem Kalibrierungsobjekt darstellen, durch Bestimmen, welche Kandidaten-Cluster zumindest die zweite Cluster-Beziehung erfüllende Merkmale enthalten, von Clustern, die zumindest ein kein Merkmal auf dem Kalibrierungsobjekt darstellendes Merkmal in dem Bild enthalten, zu unterscheiden,
   eine Einrichtung (70) zum Zuweisen einer Eins-zu-Eins-Entsprechung zwischen zumindest einigen Punkten in dem Bild und Punkten auf dem Kalibrierungsobjekt selbst, und
   eine Einrichtung (80) zum Berechnen der Position und Orientierung, bei denen das Bild aufgezeichnet wurde, auf der Grundlage von zumindest einigen der Eins-zu-Eins-Entsprechungen.

2. Vorrichtung gemäß Anspruch 1, wobei die Einrichtung (50, 60) zum Verarbeiten von Bilddaten, um Kandidaten-Cluster zu erfassen, umfasst:

   eine Bildelementserfassungseinrichtung (50) zum Verarbeiten der Bilddaten, um Gruppen von Bildelementen zu erfassen, die Merkmale in dem Bild definieren, die Merkmale auf dem Kalibrierungsobjekt darstellen können, und
   eine Cluster-Erfassungseinrichtung (60) zum Gruppieren von zumindest einigen der durch die Bildelementserfassungseinrichtung erfassten Merkmale in Kandidaten-Cluster.

3. Vorrichtung gemäß Anspruch 2, wobei die Bildelementserfassungseinrichtung (50) umfasst:

   eine Einrichtung zum Erfassen von Bildelementen vorbestimmter Farbe, und
   eine Einrichtung zum Erfassen von Gruppen, die erfasste, in dem Bild verbundene Bildelemente umfassen.

49

**4.** Vorrichtung gemäß einem der vorstehenden Ansprüche, wobei die Einrichtung (70) zum Zuweisen von Eins-zu-Eins-Entsprechungen eine Einrichtung zum Zuweisen von Eins-zu-Eins-Entsprechungen zwischen zumindest einigen Merkmalen in den zum Darstellen eines Clusters auf dem Kalibrierungsobjekt bestimmten Clustern in dem Bild und Merkmalen auf dem Kalibrierungsobjekt selbst umfasst.

**5.** Vorrichtung gemäß einem der vorstehenden Ansprüche, wobei zumindest einige der Merkmale oder Cluster auf dem Kalibrierungsobjekt von den anderen visuell unterscheidbar sind, und wobei die Einrichtung (70) zum Zuweisen von Eins-zu-Eins-Entsprechungen eine Einrichtung zum Durchführen einer Verarbeitung unter Verwendung der Merkmale oder Cluster in dem Bild, die die Unterscheidungseigenschaften aufweisen, um die Eins-zu-Eins-Entsprechungen zuzuweisen, umfasst.

**6.** Vorrichtung gemäß Anspruch 5, wobei alle Merkmale in zumindest einigen der Cluster auf dem Kalibrierungsobjekt im Wesentlichen identisch sind, und wobei die Einrichtung (70) zum Zuweisen von Eins-zu-Eins-Entsprechungen zum Zuweisen der Eins-zu-Eins-Entsprechung für ein im Wesentlichen identisches Merkmal abhängig von einem Merkmal oder Cluster, die Unterscheidungseigenschaften aufweisen, eingerichtet ist.

**7.** Vorrichtung gemäß einem der Ansprüche 1 bis 5, wobei die Einrichtung (70) zum Zuweisen von Eins-zu-Eins-Entsprechungen zum Zuweisen von zumindest einigen Eins-zu-Eins-Entsprechungen abhängig von Positionen von Merkmalen in dem Bild relativ zu der Position eines Referenzpunktes in dem Bild auf dem Kalibrierungsobjekt eingerichtet ist.

**8.** Vorrichtung gemäß einem der vorstehenden Ansprüche, wobei die Einrichtung (70) zum Zuweisen von Eins-zu-Eins-Entsprechungen zum Zuweisen von zumindest einigen Eins-zu-Eins-Entsprechungen eingerichtet ist durch:

> Bestimmen einer Eins-zu-Eins-Cluster-Entprechung zwischen einem zum Darstellen eines Clusters auf dem Kalibrierungsobjekt bestimmten, gegebenen Cluster und einem Cluster auf dem Kalibrierungsobjekt selbst, und Bestimmen einer Eins-zu-Eins-Merkmalsentsprechung zwischen Merkmalen in dem Bild in dem gegebenen Cluster und Merkmalen auf dem Kalibrierungsobjekt unter Verwendung der Eins-zu-Eins-Cluster-Entsprechung.

**9.** Vorrichtung gemäß Anspruch 8, wobei die Einrichtung (70) zum Zuweisen von Eins-zu-Eins-Entsprechungen zum Bestimmen einer Eins-zu-Eins-Cluster-Entsprechung, abhängig von den relativen Positionen innerhalb des Clusters vorbestimmter Merkmale, eingerichtet ist.

**10.** Vorrichtung gemäß Anspruch 9, wobei die Einrichtung (70) zum Zuweisen von Eins-zu-Eins-Entsprechungen zum Bestimmen einer Eins-zu-Eins-Cluster-Entsprechung, abhängig von den Positionen vorbestimmter Merkmale innerhalb des Clusters relativ zu der Position eines Referenzpunktes in dem Bild auf dem Kalibrierungsobjekt, eingerichtet ist.

**11.** Vorrichtung gemäß einem der Ansprüche 1 bis 5 und 7 bis 10, wobei das Muster auf dem Kalibrierungsobjekt eine Vielzahl von Clustern, von denen jeder dieselbe vorbestimmte Anzahl von in einer jeweiligen geraden Linie angeordneten Merkmalen enthält, umfasst, und wobei die Einrichtung (50, 60) zum Erfassen von Kandidaten-Clustern zum Verarbeiten der Bilddaten, um Cluster, die die vorbestimmte Anzahl von auf einer geraden Linie liegenden Merkmalen in dem Bild umfassen, zu erfassen, eingerichtet ist.

**12.** Vorrichtung gemäß Anspruch 11, wobei die Merkmale in den Clustern auf dem Kalibrierungsobjekt bei vorbestimmten relativen Abständen entlang der jeweiligen geraden Linien angeordnet sind, und wobei die Einrichtung (60) zum Verarbeiten der Kandidaten-Cluster zum Bestimmen, ob die Merkmale in einem Kandidaten-Cluster die relativen Abstände in dem Bild aufweisen, eingerichtet ist.

**13.** Vorrichtung gemäß Anspruch 11 oder 12, wobei die Einrichtung (70) zum Zuweisen von Eins-zu-Eins-Entsprechungen zum Zuweisen der Eins-zu-Eins-Entsprechungen, abhängig von den relativen Größen der Merkmale in einem Cluster, eingerichtet ist.

**14.** Vorrichtung gemäß einem der vorstehenden Ansprüche, wobei das Kalibrierungsobjekt eine Vielzahl von Teilen (1200 bis 1500; 2000 bis 2400; 4000 bis 4050), wobei jedes Teil zumindest ein Merkmal des Musters darauf aufweist, umfasst.

**15.** Vorrichtung gemäß Anspruch 14, wobei jeder Teil des Kalibrierungsobjekts zumindest einen Merkmal-Cluster darauf aufweist.

16. Vorrichtung gemäß einem der vorstehenden Ansprüche, wobei die Einrichtung (80) zum Berechnen der Position und Orientierung, bei denen das Bild aufgezeichnet wurde, zum Berechnen der Position und Orientierung relativ zu einem vorbestimmten Aufbau des Musters auf dem Kalibrierungsobjekt eingerichtet ist.

17. Vorrichtung gemäß einem der Ansprüche 1 bis 15, wobei die Einrichtung (80) zum Berechnen der Position und Orientierung, bei denen das Bild aufgezeichnet wurde, zum Berechnen der Position und Orientierung relativ zu der Position und Orientierung, bei denen ein weiteres Bild des Untersuchungsobjekts und Kalibrierungsobjekts aufgezeichnet wurde, eingerichtet ist.

18. Vorrichtung gemäß Anspruch 17, wobei die Einrichtung (80) zum Berechnen der Position und Orientierung, bei denen das Bild aufgezeichnet wurde, zum Berechnen der Position und Orientierung relativ zu der Position und Orientierung des weiteren Bildes durch Verwenden der Eins-zu-Eins-Entsprechungen zum Bestimmen von übereinstimmenden Merkmalen in dem Bild und dem weiteren Bild und durch Verwenden der übereinstimmenden Merkmale zum Berechnen der relativen Positionen und Orientierungen, bei denen das Bild und das weitere Bild aufgezeichnet wurden, eingerichtet ist.

19. Bildverarbeitungsverfahren des Verarbeitens von durch eine Bilderstellungseinrichtung (410) aufgezeichneten Bilddaten, die ein Bild von zumindest einem Teil eines Untersuchungsobjekts (400; 4200) und eines Kalibrierungsmusters (Figuren 3, 20, 23, 27, 29, 31, 36, 37, 40, 43, 45, 49 und 50) definieren, das eine Vielzahl von diskreten Merkmalen, wobei jedes Merkmal eine jeweilige Position in dem Muster definiert, umfasst, wobei zumindest einige der Merkmale derart in Cluster gruppiert sind, dass die Merkmale in einem gegebenen Cluster zumindest eine erste und zweite Cluster-Beziehung erfüllen, wobei jede Cluster-Beziehung auf zumindest einem Element: Farbe, Form, Größe, Position und Verbundenheitsgrad der Merkmale in dem Cluster basiert, um die Position und Orientierung der Bilderstellungseinrichtung zu berechnen, als das Bild aufgezeichnet wurde, wobei das Verfahren umfasst:

Verarbeiten von ein Bild definierenden Bilddaten, um Kandidaten-Merkmal-Cluster in dem Bild, die Merkmal-Cluster in dem Kalibrierungsmuster darstellen können, auf der Grundlage zumindest der ersten Cluster-Beziehung zu erfassen,
Verarbeiten von Kandidaten-Clustern, um Cluster in dem Bild, in denen alle Merkmale Merkmale in dem Kalibrierungsmuster darstellen, durch Bestimmen, welche Kandidaten-Cluster zumindest die zweite Cluster-Beziehung erfüllende Merkmale enthalten, von Clustern, die zumindest ein kein Merkmal in dem Kalibrierungsmuster darstellendes Merkmal in dem Bild enthalten, zu unterscheiden
Zuweisen einer Eins-zu-Eins-Entsprechung zwischen zumindest einigen Punkten in dem Bild und Punkten in dem Kalibrierungsmuster selbst, und
Berechnen der Position und Orientierung, bei denen das Bild aufgezeichnet wurde, auf der Grundlage von zumindest einigen der Eins-zu-Eins-Entsprechungen.

20. Verfahren gemäß Anspruch 19, wobei der Schritt des Verarbeitens der Bilddaten, um Kandidaten-Cluster zu erfassen, umfasst:

Verarbeiten der Bilddaten, um Gruppen von Bildelementen zu erfassen, die Merkmale in dem Bild definieren, die Merkmale in dem Kalibrierungsmuster darstellen können, und
Gruppieren von zumindest einigen der in dem Schritt des Erfassens von Bildelementgruppen erfassten Merkmale in Kandidaten-Cluster.

21. Verfahren gemäß Anspruch 20, wobei der Schritt des Erfassens von Bildelementgruppen umfasst:

Erfassen von Bildelementen vorbestimmter Farbe, und
Erfassen von Gruppen, die erfasste, in dem Bild verbundene Bildelemente umfassen.

22. Verfahren gemäß einem der Ansprüche 19 bis 21, wobei der Schritt des Zuweisens von Eins-zu-Eins-Entsprechungen ein Zuweisen von Eins-zu-Eins-Entsprechungen zwischen zumindest einigen Merkmalen in den zum Darstellen eines Clusters in dem Kalibrierungsmuster bestimmten Clustern in dem Bild und Merkmalen in dem Kalibrierungsmuster selbst umfasst.

23. Verfahren gemäß einem der Ansprüche 19 bis 22, wobei zumindest einige der Merkmale oder Cluster in dem Kalibrierungsmuster von den anderen visuell unterscheidbar sind, und wobei der Schritt des Zuweisens von Eins-zu-Eins-Entsprechungen ein Durchführen einer Verarbeitung unter Verwendung der Merkmale oder Cluster in dem Bild, die die Unterscheidungseigenschaften aufweisen, um die Eins-zu-Eins-Entsprechungen zuzuweisen, umfasst.

24. Verfahren gemäß Anspruch 23, wobei alle Merkmale in zumindest einigen der Cluster in dem Kalibrierungsmuster im Wesentlichen identisch sind, und wobei in dem Schritt des Zuweisens von Eins-zu-Eins-Entsprechungen die Eins-zu-Eins-Entsprechung für ein im Wesentlichen identisches Merkmal abhängig von einem Merkmal oder Cluster, die Unterscheidungseigenschaften aufweisen, zugewiesen wird.

25. Verfahren gemäß einem der Ansprüche 19 bis 23, wobei in dem Schritt des Zuweisens von Eins-zu-Eins-Entsprechungen zumindest einige Eins-zu-Eins-Entsprechungen abhängig von Positionen von Merkmalen in dem Bild relativ zu der Position eines Referenzpunktes in dem Bild in dem Kalibrierungsmuster zugewiesen werden.

26. Verfahren gemäß einem der Ansprüche 19 bis 25, wobei in dem Schritt des Zuweisens von Eins-zu-Eins-Entsprechungen zumindest einige Eins-zu-Eins-Entsprechungen zugewiesen werden durch:

Bestimmen einer Eins-zu-Eins-Cluster-Entprechung zwischen einem zum Darstellen eines Clusters in dem Kalibrierungsmuster bestimmten, gegebenen Cluster und einem Cluster in dem Kalibrierungsmuster selbst, und Bestimmen einer Eins-zu-Eins-Merkmalsentsprechung zwischen Merkmalen in dem Bild in dem gegebenen Cluster und Merkmalen in dem Kalibrierungsmuster unter Verwendung der Eins-zu-Eins-Cluster-Entsprechung.

27. Verfahren gemäß Anspruch 26, wobei in dem Schritt des Zuweisens von Eins-zu-Eins-Entsprechungen eine Eins-zu-Eins-Cluster-Entsprechung, abhängig von den relativen Positionen innerhalb des Clusters vorbestimmter Merkmale, bestimmt wird.

28. Verfahren gemäß Anspruch 27, wobei in dem Schritt des Zuweisens von Eins-zu-Eins-Entsprechungen eine Eins-zu-Eins-Cluster-Entsprechung, abhängig von den Positionen vorbestimmter Merkmalen innerhalb des Clusters relativ zu der Position eines Referenzpunktes in dem Bild in dem Kalibrierungsmuster, bestimmt wird.

29. Verfahren gemäß einem der Ansprüche 19 bis 23 und 25 bis 28, wobei das Kalibrierungsmuster eine Vielzahl von Clustern, von denen jeder dieselbe vorbestimmte Anzahl von in einer jeweiligen geraden Linie angeordneten Merkmalen enthält, umfasst, und wobei in dem Schritt des Erfassens von Kandidaten-Clustern die Bilddaten zum Erfassen von Clustern, die die vorbestimmte Anzahl von auf einer geraden Linie liegenden Merkmalen in dem Bild umfassen, verarbeitet werden.

30. Verfahren gemäß Anspruch 29, wobei die Merkmale in den Clustern in dem Kalibrierungsmuster bei vorbestimmten relativen Abständen entlang der jeweiligen geraden Linien angeordnet werden, und wobei in dem Schritt des Verarbeitens der Kandidaten-Cluster eine Verarbeitung durchgeführt wird, um zu bestimmen, ob die Merkmale in einem Kandidaten-Cluster die relativen Abstände in dem Bild aufweisen.

31. Verfahren gemäß Anspruch 29 oder 30, wobei in dem Schritt des Zuweisens von Eins-zu-Eins-Entsprechungen Eins-zu-Eins-Entsprechungen, abhängig von den relativen Größen der Merkmale in einem Cluster, zugewiesen werden.

32. Verfahren gemäß einem der Ansprüche 19 bis 31, wobei das Kalibrierungsmuster auf einer Vielzahl von separaten Objekten (1200 bis 1500; 2000 bis 2400; 4000 bis 4050) bereitgestellt wird, wobei jedes Objekt zumindest ein Merkmal des Musters darauf aufweist.

33. Verfahren gemäß Anspruch 32, wobei jedes Objekt zumindest einen Merkmal-Cluster darauf aufweist.

34. Verfahren gemäß einem der Ansprüche 19 bis 33, wobei in dem Schritt des Berechnens der Position und Orientierung, bei denen das Bild aufgezeichnet wurde, die Position und Orientierung relativ zu einem vorbestimmten Aufbau des Kalibrierungsmusters berechnet werden.

35. Verfahren gemäß einem der Ansprüche 19 bis 33, wobei in dem Schritt des Berechnens der Position und Orientierung, bei denen das Bild aufgezeichnet wurde, die Position und Orientierung relativ zu der Position und Orientierung, bei denen ein weiteres Bild des Untersuchungsobjekts und Kalibrierungsmusters aufgezeichnet wurde, berechnet werden.

**36.** Verfahren gemäß Anspruch 35, wobei in dem Schritt des Berechnens der Position und Orientierung, bei denen das Bild aufgezeichnet wurde, die Position und Orientierung relativ zu der Position und Orientierung des weiteren Bildes durch Verwenden der Eins-zu-Eins-Entsprechungen zum Bestimmen von übereinstimmenden Merkmalen in dem Bild und dem weiteren Bild und durch Verwenden der übereinstimmenden Merkmale zum Berechnen der relativen Positionen und Orientierungen, bei denen das Bild und das weitere Bild aufgezeichnet wurden, berechnet werden.

**37.** Verfahren gemäß einem der Ansprüche 19 bis 36, das ferner ein Erzeugen eines Signals, das die berechnete Position und Orientierung der Bilderstellungseinrichtung führt, umfasst.

**38.** Verfahren gemäß Anspruch 37, das ferner entweder ein direktes oder indirektes Aufzeichnen des Signals umfasst.

**39.** Verfahren gemäß einem der Ansprüche 19 bis 38, das ferner ein Verarbeiten der Bilddaten zum Segmentieren von auf das Untersuchungsobjekt bezogene Bilddaten von Hintergrundbilddaten umfasst.

**40.** Verfahren gemäß einem der Ansprüche 19 bis 38, das ferner ein Erzeugen von Daten, die ein 3D-Computermodell der Oberfläche des Untersuchungsobjekts unter Verwendung der berechneten Position und Orientierung der Bilderstellungseinrichtung definieren, umfasst.

**41.** Verfahren gemäß Anspruch 40, das ferner ein Erzeugen eines das 3D-Computermodell führenden Signals umfasst.

**42.** Verfahren gemäß Anspruch 41, das ferner entweder ein direktes oder indirektes Aufzeichnen des Signals umfasst.

**43.** Verfahren gemäß einem der Ansprüche 19 bis 42, das ferner den Schritt des Erzeugens von Daten zum Steuern einer Vorrichtung, um ein physikalisches Modell des Untersuchungsobjekts zu erstellen, umfasst.

**44.** Verfahren gemäß einem der Ansprüche 19 bis 43, das ferner den Schritt des Erzeugens eines physikalischen Modells des Untersuchungsobjekts umfasst.

**45.** Speichervorrichtung, die Computerprogrammanweisungen zum Programmieren einer programmierbaren Verarbeitungsvorrichtung, um zum Durchführen eines Verfahrens gemäß zumindest einem der Ansprüche 19 bis 44 betreibbar zu werden, speichert.

**46.** Signalführende Computerprogrammanweisungen zum Programmieren einer programmierbaren Verarbeitungsvorrichtung, um zum Durchführen eines Verfahrens gemäß zumindest einem der Ansprüche 19 bis 44 betreibbar zu werden.

**Revendications**

**1.** Appareil (2) de traitement d'image destiné à traiter des données d'image enregistrées par un moyen (410) de formation d'image définissant une image d'au moins une partie d'un objet sujet (400, 4200) et d'un objet d'étalonnage (10, 34, 2500, 4000-4050) ayant un motif comportant plusieurs détails discrets (figures 3, 20, 17, 29, 31, 36, 37, 40, 43, 45, 49 et 50), chaque détail définissant une position respective sur l'objet d'étalonnage, au moins certains des détails étant groupés en amas tels que les détails dans un amas donné satisfont au moins des première et seconde relations d'amas, chaque relation d'amas étant basée sur l'une de la couleur, de la forme, de la taille, de la position et de la cohérence des détails dans l'amas, pour calculer la position et l'orientation du moyen de formation d'image lorsque l'image a été enregistrée, l'appareil (2) comportant :

un moyen (50, 60) pour le traitement de données d'image définissant une image pour détecter des amas candidats de détails dans l'image pouvant représenter des amas de détails sur l'objet d'étalonnage sur la base d'au moins la première relation d'amas ;
un moyen (60) pour le traitement d'amas candidats afin de distinguer les amas dans l'image dans lesquels tous les détails représentent des détails sur l'objet d'étalonnage à partir d'amas contenant au moins un détail dans l'image représentant un détail ne se trouvant pas sur l'objet d'étalonnage en déterminant quels amas candidats contiennent des détails satisfaisant à au moins la seconde relation d'amas ;
un moyen (70) destiné à affecter une correspondance biunivoque entre au moins certains points dans l'image et des points sur l'objet d'étalonnage lui-même ; et
un moyen (80) destiné à calculer la position et l'orientation dans lesquelles l'image a été enregistrée sur la base d'au moins certaines des correspondances biunivoques.

2. Appareil selon la revendication 1, dans lequel le moyen (50, 60) destiné à traiter des données d'image pour détecter des amas candidats comporte :

un moyen (50) de détection de pixels destiné à traiter les données d'image pour détecter des groupes de pixels définissant des détails dans l'image qui peuvent représenter des détails sur l'objet d'étalonnage ; et
un moyen (60) de détection d'amas destiné à grouper au moins certains des détails détectés par le moyen de détection de pixels en amas candidats.

3. Appareil selon la revendication 2, dans lequel le moyen (50) de détection de pixels comporte :

un moyen destiné à détecter des pixels d'une couleur prédéterminée ; et
un moyen destiné à détecter des groupes comprenant des pixels détectés qui sont reliés dans l'image.

4. Appareil selon l'une quelconque des revendications précédentes, dans lequel le moyen (70) destiné à affecter des correspondances biunivoques comporte un moyen destiné à affecter des correspondances biunivoques entre au moins certains détails dans les amas dans l'image déterminés comme représentant un amas sur l'objet d'étalonnage et des détails sur l'objet d'étalonnage lui-même.

5. Appareil selon l'une quelconque des revendications précédentes, dans lequel au moins certains des détails ou amas sur l'objet d'étalonnage peuvent être distingués visuellement des autres, et dans lequel le moyen (70) destiné à affecter des correspondances biunivoques comprend un moyen destiné à effectuer un traitement utilisant les détails ou amas dans l'image possédant les caractéristiques distinctives pour affecter les correspondances biunivoques.

6. Appareil selon la revendication 5, dans lequel tous les détails dans au moins certains des amas sur l'objet d'étalonnage sont sensiblement identiques, et dans lequel le moyen (70) destiné à affecter des correspondances biunivoques est agencé pour affecter la correspondance biunivoque pour un détail sensiblement identique en fonction d'un détail ou d'un amas possédant des caractéristiques distinctives.

7. Appareil selon l'une quelconque des revendications 1 à 5, dans lequel le moyen (70) destiné à affecter des correspondances biunivoques est agencé pour affecter au moins certaines correspondances biunivoques en dépendance des positions de détails dans l'image par rapport à la position dans l'image d'un point de référence sur l'objet d'étalonnage.

8. Appareil selon l'une quelconque des revendications précédentes, dans lequel le moyen (70) destiné à affecter des correspondances biunivoques est agencé de façon à affecter certaines correspondances biunivoques en :

déterminant une correspondance d'amas biunivoque entre un amas donné dans l'image déterminée comme représentant un amas sur l'objet d'étalonnage et un amas sur l'objet d'étalonnage lui-même ; et
déterminant une correspondance de détails biunivoques entre des détails dans l'image dans l'amas donné et des détails sur l'objet d'étalonnage en utilisant la correspondance d'amas biunivoque.

9. Appareil selon la revendication 8, dans lequel le moyen (70) destiné à affecter des correspondances biunivoques est agencé pour déterminer une correspondance d'amas biunivoque en dépendance des positions relatives dans l'amas de détails prédéterminés.

10. Appareil selon la revendication 9, dans lequel le moyen (70) destiné à affecter des correspondances biunivoques est agencé de façon à déterminer une correspondance d'amas biunivoque en fonction des positions dans l'amas des détails prédéterminés par rapport à la position dans l'image d'un point de référence sur l'objet d'étalonnage.

11. Appareil selon l'une quelconque des revendications 1 à 5, et 7 à 10, dans lequel le motif sur l'objet d'étalonnage comprend plusieurs amas contenant chacun le même nombre prédéterminé de détails agencés en une ligne droite respective, et dans lequel le moyen (50, 60) destiné à détecter des amas candidats est agencé de façon à traiter les données d'image pour détecter des amas comprenant le nombre prédéterminé de détails qui sont situés sur une ligne droite dans l'image.

**12.** Appareil selon la revendication 11, dans lequel les détails dans les amas sur l'objet d'étalonnage sont agencés à des espacements relatifs prédéterminés le long des lignes droites respectives, et dans lequel le moyen (60) destiné à traiter les amas candidats est agencé de façon à déterminer si les détails dans un amas candidat ont les espacements relatifs dans l'image.

**13.** Appareil selon la revendication 11 ou la revendication 12, dans lequel le moyen (70) destiné à affecter des correspondances biunivoques est agencé de façon à affecter les correspondances biunivoques en fonction des tailles relatives des détails dans un amas.

**14.** Appareil selon l'une quelconque des revendications précédentes, dans lequel l'objet d'étalonnage comprend plusieurs parties (1200-1500, 2000-2400, 4000-4050), chaque partie portant au moins un détail du motif.

**15.** Appareil selon la revendication 14, dans lequel chaque partie de l'objet d'étalonnage porte au moins un amas de détails.

**16.** Appareil selon l'une quelconque des revendications précédentes, dans lequel le moyen (80) destiné à calculer la position et l'orientation dans lesquelles l'image a été enregistrée est agencé de façon à calculer la position et l'orientation par rapport à une configuration prédéterminée du motif sur l'objet d'étalonnage.

**17.** Appareil selon l'une quelconque des revendications 1 à 15, dans lequel le moyen (80) destiné à calculer la position et l'orientation dans lesquelles l'image a été enregistrée est agencé de façon à calculer la position et l'orientation par rapport à la position et l'orientation dans lesquelles une autre image de l'objet sujet et de l'objet d'étalonnage a été enregistrée.

**18.** Appareil selon la revendication 17, dans lequel le moyen (80) destiné à calculer la position et l'orientation dans lesquelles l'image a été enregistrée est agencé de façon à calculer la position et l'orientation par rapport à la position et l'orientation de l'autre image en utilisant les correspondances biunivoques pour déterminer des détails conjugués dans l'image et l'autre image et en utilisant les détails conjugués pour calculer les position et orientation relatives dans lesquelles l'image et l'autre image ont été enregistrées.

**19.** Procédé de traitement d'image pour le traitement de données d'image enregistrées par un moyen (410) de formation d'image définissant une image d'au moins une partie d'un objet sujet (400, 4200) et d'un motif d'étalonnage (figures 3, 20, 23, 27, 29, 31, 36, 37, 40, 43, 45, 49 et 50) comprenant plusieurs détails discrets, chaque détail définissant une position respective dans le motif, au moins certains des détails étant groupés en amas tels que les détails dans un amas donné satisfont à au moins des première et seconde relations d'amas, chaque relation d'amas étant basée sur au moins l'une de la couleur, de la forme, de la taille, de la position et de la cohérence des détails dans l'amas, pour calculer la position et l'orientation du moyen de formation d'image lorsque l'image a été enregistrée, le procédé comprenant :

le traitement de données d'image définissant l'image pour détecter des amas candidats de détails dans l'image qui peuvent représenter des amas de détails dans le motif d'étalonnage sur la base d'au moins la première relation d'amas ;
le traitement d'amas candidats pour distinguer des amas dans l'image dans lesquels tous les détails représentent des détails dans le motif d'étalonnage, par rapport à des amas contenant au moins un détail dans l'image représentant un détail ne se trouvant pas dans le motif d'étalonnage, en déterminant quels amas candidats contiennent des détails satisfaisant à au moins la seconde relation d'amas ;
à affecter une correspondance biunivoque entre au moins certains points dans l'image et des points dans le motif d'étalonnage lui-même ; et
à calculer la position et l'orientation dans lesquelles l'image a été enregistrée sur la base d'au moins certaines des correspondances biunivoques.

**20.** Procédé selon la revendication 19, dans lequel l'étape de traitement des données d'image pour détecter des amas candidats comprend :

le traitement des données d'image pour détecter des groupes de pixels définissant des détails dans l'image qui peuvent représenter des détails du motif d'étalonnage ; et
le groupement d'au moins certains des détails détectés dans l'étape de détection de groupes de pixels en amas candidats.

**21.** Appareil selon la revendication 20, dans lequel l'étape de détection de groupes de pixels comprend :

la détection de pixels d'une couleur prédéterminée ; et
la détection de groupes comprenant des pixels détectés qui sont reliés dans l'image.

**22.** Procédé selon l'une quelconque des revendications 19 à 21, dans lequel l'étape d'affectation de correspondances biunivoques comprend l'affectation de correspondances biunivoques entre au moins certains détails dans les amas situés dans l'image et déterminés comme représentant un amas dans le motif d'étalonnage et des détails dans le motif d'étalonnage lui-même.

**23.** Procédé selon l'une quelconque des revendications 19 à 22, dans lequel au moins certains des détails ou amas dans le motif d'étalonnage peuvent être distingués visuellement des autres, et dans lequel l'étape d'affectation de correspondances biunivoques comprend l'exécution d'un traitement utilisant les détails ou amas dans l'image possédant les caractéristiques distinctives pour affecter les correspondances biunivoques.

**24.** Procédé selon la revendication 23, dans lequel tous les détails dans au moins certains des amas dans le motif d'étalonnage sont sensiblement identiques et dans lequel, dans l'étape d'affectation de correspondances biunivoques, la correspondance biunivoque pour un détail sensiblement identique est affectée en fonction d'un détail ou d'un amas possédant des caractéristiques distinctives.

**25.** Procédé selon l'une quelconque des revendications 19 à 23, dans lequel, dans l'étape d'affectation de correspondances biunivoques, au moins certaines des correspondances biunivoques sont affectées en fonction de positions de détails dans l'image par rapport à la position dans l'image d'un point de référence dans le motif d'étalonnage.

**26.** Procédé selon l'une quelconque des revendications 19 à 25, dans lequel, dans l'étape d'affectation de correspondances biunivoques, au moins certaines correspondances biunivoques sont affectées par :

la détermination d'une correspondance d'amas biunivoques entre un amas donné dans l'image déterminé comme représentant un amas dans le motif d'étalonnage et un amas dans le motif d'étalonnage lui-même ; et déterminant une correspondance de détails biunivoques entre des détails dans l'image dans l'amas donné et des détails dans le motif d'étalonnage en utilisant la correspondance d'amas biunivoques.

**27.** Procédé selon la revendication 26, dans lequel, dans l'étape d'affectation de correspondances biunivoques, une correspondance d'amas biunivoques est déterminée en fonction des positions relatives dans l'amas de détails prédéterminés.

**28.** Procédé selon la revendication 27, dans lequel, dans l'étape d'affectation de correspondances biunivoques, une correspondance d'amas biunivoques est déterminée en fonction des positions dans l'amas des détails prédéterminés par rapport à la position dans l'image d'un point de référence dans le motif d'étalonnage.

**29.** Procédé selon l'une quelconque des revendications 19 à 23, et 25 à 28, dans lequel le motif d'étalonnage comprend plusieurs amas contenant chacun le même nombre prédéterminé de détails agencés en une ligne droite respective et dans lequel, dans l'étape de détection d'amas candidats, les données d'image sont traitées pour détecter des amas comprenant le nombre prédéterminé de détails qui sont situés sur une ligne droite dans l'image.

**30.** Procédé selon la revendication 29, dans lequel les détails dans les amas dans le motif d'étalonnage sont agencés à des espacements relatifs prédéterminés le long des lignes droites respectives, et dans lequel, dans l'étape de traitement des amas candidats, un traitement est effectué pour déterminer si les détails dans un amas candidat ont les espacements relatifs dans l'image.

**31.** Procédé selon la revendication 29 ou la revendication 30, dans lequel, dans l'étape d'affectation de correspondances biunivoques, des correspondances biunivoques sont affectées en fonction des tailles relatives des détails dans un amas.

**32.** Procédé selon l'une quelconque des revendications 19 à 31, dans lequel le motif d'étalonnage est situé sur plusieurs objets séparés (1200-1500, 2000-2400, 4000-4050), chaque objet portant au moins un détail du motif.

**33.** Procédé selon la revendication 32, dans lequel chaque objet porte au moins un amas de détails.

**34.** Procédé selon l'une quelconque des revendications 19 à 33, dans lequel, dans l'étape de calcul de la position et de l'orientation dans lesquelles l'image a été enregistrée, la position et l'orientation sont calculées par rapport à une configuration prédéterminée du motif d'étalonnage.

**35.** Procédé selon l'une quelconque des revendications 19 à 33, dans lequel, dans l'étape de calcul de la position et de l'orientation dans lesquelles l'image a été enregistrée, la position et l'orientation sont calculées par rapport à la position et l'orientation dans lesquelles une autre image de l'objet sujet et du motif d'étalonnage a été enregistrée.

**36.** Procédé selon la revendication 35, dans lequel, dans l'étape de calcul de la position et de l'orientation dans lesquelles l'image a été enregistrée, la position et l'orientation sont calculées par rapport à la position et l'orientation de l'autre image en utilisant les correspondances biunivoques pour déterminer des détails conjugués dans l'image et l'autre image, et en utilisant les détails conjugués pour calculer les positions et orientations relatives dans lesquelles l'image et l'autre image ont été enregistrées.

**37.** Procédé selon l'une quelconque des revendications 19 à 36, comprenant en outre la génération d'un signal transportant la position et l'orientation calculées du moyen de formation d'image.

**38.** Procédé selon la revendication 37, comprenant en outre l'enregistrement du signal, soit directement, soit indirectement.

**39.** Procédé selon l'une quelconque des revendications 19 à 38, comprenant en outre le traitement des données d'image pour séparer les données d'image concernant l'objet sujet des données d'image d'arrière-plan.

**40.** Procédé selon l'une quelconque des revendications 19 à 39, comprenant en outre la génération de données définissant un modèle informatique en 3 dimensions de la surface de l'objet sujet en utilisant la position et l'orientation calculées du moyen de formation d'image.

**41.** Procédé selon la revendication 40, comprenant en outre la génération d'un signal transportant le modèle informatique à 3 dimensions.

**42.** Procédé selon la revendication 41, comprenant en outre l'enregistrement du signal, directement ou indirectement.

**43.** Procédé selon l'une quelconque des revendications 19 à 42, comprenant en outre l'étape de génération de données pour commander un appareil afin de créer un modèle physique de l'objet sujet.

**44.** Procédé selon l'une quelconque des revendications 19 à 43, comprenant en outre l'étape de génération d'un modèle physique de l'objet sujet.

**45.** Dispositif de stockage stockant des instructions de programme d'ordinateur pour programmer un appareil de traitement programmable afin qu'il devienne apte à exécuter un procédé tel que défini dans au moins l'une des revendications 19 à 44.

**46.** Signal transportant des instructions de programme d'ordinateur afin de programmer un appareil de traitement programmable pour qu'il devienne apte à exécuter un procédé tel que défini dans au moins l'une des revendications 19 à 44.

FIG. 1

EP 1 232 480 B1

REQUEST USER TO INPUT DIAMETER FOR MAT PATTERN — S2

STORE INPUT DIAMETER — S4

PRINT/DISPLAY MAT WITH REQUIRED DIAMETER AND STORE MAT PARAMETERS FOR SUBSEQUENT PROCESSING — S6

*FIG. 2*

FIG. 3

FIG. 4a

FIG. 4b

FIG. 5a — 420

FIG. 5b — 422

FIG. 5c — 424

FIG. 5d — 426

REQUEST USER TO INPUT DATA — S10

STORE INPUT DATA — S12

DETERMINE THE POSITION AND ORIENTATION OF THE CAMERA RELATIVE TO THE MAT FOR EACH INPUT IMAGE — S14

SEGMENT IMAGE DATA OF OBJECT FROM IMAGE DATA OF MAT AND BACKGROUND — S16

GENERATE DATA DEFINING A 3D SURFACE MODEL OF THE OBJECT — S18

GENERATE TEXTURE DATA FOR THE SURFACE MODEL — S20

OUTPUT DATA AND/OR DISPLAY IMAGE(S) OF THE 3D MODEL — S22

*FIG. 6*

READ DATA FOR NEXT INPUT IMAGE — S30

FIND FEATURES IN THE IMAGE — S32

FIND CLUSTERS OF FEATURES — S34

IDENTIFY THE FEATURES — S36

CALCULATE THE POSITION AND ORIENTATION OF THE CAMERA USING THE POSITIONS OF THE IDENTIFIED FEATURES IN THE IMAGE AND THE KNOWN POSITIONS OF THE FEATURES ON THE MAT — S38

S40

YES — ANOTHER INPUT IMAGE?

NO

*FIG. 7*

GENERATE BINARY IMAGE — S50

FIND GROUPS COMPRISING CONNECTED PIXELS HAVING VALUE "1" IN THE IMAGE — S52

DISCARD EACH GROUP CONTAINING LESS THAN THRESHOLD NUMBER OF PIXELS — S54

FOR EACH GROUP OF PIXELS WHICH REMAINS, STORE THE NUMBER OF PIXELS IN THE GROUP — S56

FOR EACH GROUP OF PIXELS, CALCULATE AND STORE THE UNIQUE POINT POSITION IN THE IMAGE DEFINED BY THE GROUP — S58

FOR EACH GROUP OF PIXELS, DETERMINE AND STORE THE COLOUR OF THE PIXEL IN THE IMAGE CLOSEST TO THE UNIQUE POINT POSITION DEFINED BY THE GROUP — S60

*FIG. 8*

## FIG. 9

```
              │
              ▼
┌─────────────────────────────┐
│  CALCULATE THE DISTANCE     │
│  BETWEEN EACH RESPECTIVE    │──  S70
│  PAIR OF FEATURES           │
└─────────────────────────────┘
              │
              ▼
┌─────────────────────────────┐
│  CONSIDER THE NEXT          │
│  UNPROCESSED FEATURE IN THE │──  S72
│  IMAGE                      │
└─────────────────────────────┘
              │
              ▼
┌─────────────────────────────┐
│  DETERMINE THE THREE        │
│  NEAREST NEIGHBOUR          │
│  FEATURES TO FORM A SET OF  │──  S74
│  FOUR FEATURES              │
└─────────────────────────────┘
              │
              ▼
┌─────────────────────────────┐
│  CONSIDER EACH FEATURE IN   │
│  THE SET IN TURN, AND ADD THE │
│  DISTANCES BETWEEN THE      │
│  FEATURE AND EACH OF THE    │──  S76
│  OTHER FEATURES IN THE SET  │
│  TO GIVE A SPAN DISTANCE FOR │
│  THE FEATURE                │
└─────────────────────────────┘
              │
              ▼
┌─────────────────────────────┐
│  ADD THE SPAN DISTANCES FOR │
│  THE FEATURES IN THE SET TO │
│  GIVE A SET SPAN DISTANCE AND │──  S78
│  STORE THE CALCULATED SET   │
│  SPAN DISTANCE              │
└─────────────────────────────┘
              │
              ▼
┌─────────────────────────────┐
│  DETERMINE THE NEIGHBOUR    │
│  FEATURE HAVING THE LARGEST │
│  SPAN DISTANCE AND REMOVE   │──  S80
│  THE NEIGHBOUR FEATURE      │
│  FROM THE SET               │
└─────────────────────────────┘
              │
              ▼
┌─────────────────────────────┐
│  DETERMINE WHICH FEATURES   │
│  OUTSIDE THE SET LIE WITHIN │
│  THE LARGEST SPAN DISTANCE  │──  S82
│  FROM EACH OF THE THREE     │
│  FEATURES REMAINING IN THE  │
│  SET                        │
└─────────────────────────────┘
              │
              ▼
             (A)              (B)   (C)
```

(A)   (B)   (C)

RESET "IMPROVED" FLAG — S84

ADD THE NEXT DETERMINED
FEATURE TO THE SET AND
CALCULATE A SPAN DISTANCE — S86
FOR THE FEATURE

CALCULATE A SET SPAN
DISTANCE — S88

S90

IS THE
SET SPAN DISTANCE
NO ← LESS THAN THE STORED
SET SPAN
DISTANCE?

YES

STORE THE SET FEATURES AND — S92
THE SET SPAN DISTANCE

SET "IMPROVED" FLAG — S94

FLAG THE DETERMINED — S96
FEATURES AS PROCESSED

S98

YES ← ANOTHER
DETERMINED
FEATURE?

NO

(D)   (E)   (F)

*FIG. 9 (cont)*

D

S100

IS THE "IMPROVED" FLAG SET?

YES → E

NO

FLAG THE FEATURE AS PROCESSED — S102

S104

ANOTHER UNPROCESSED FEATURE IN THE IMAGE?

YES → F

NO

CONSIDER NEXT STORED SET — S106

CALCULATE THE RATIO OF THE LARGEST AREA OF A FEATURE IN THE SET TO THE SMALLEST AREA OF A FEATURE IN THE SET — S108

S110

IS RATIO < 1.5?

YES

NO

DISCARD SET — S112

G

H

FIG. 9 (cont)

Ⓖ                    Ⓗ

                                                    S114

YES          ANOTHER
                 SET?

                   NO

ASSIGN A PRIORITY TO EACH
REMAINING SET BASED ON THE          S116
SET SPAN DISTANCES

COMPARE THE STORED SETS TO
FIND CONFLICTING SETS WHICH
CONTAIN AT LEAST ONE                S118
FEATURE WHICH IS THE SAME

FOR CONFLICTING SETS, RETAIN
THE SET OF HIGHEST PRIORITY
AND DISCARD THE CONFLICTING         S120
SET(S)

CALCULATE AND STORE THE
POSITION IN THE IMAGE OF THE
CENTRE OF EACH REMAINING            S122
SET

*FIG. 9 (cont)*

FIG. 10a

FIG. 10b

FIG. 10c

FIG. 10d

FIG. 10e

FIG. 10f

| PRIORITY | MAIN FEATURE | NEIGHBOUR FEATURES IN SET |
|:---:|:---:|:---:|
| 1 | 1 | 2, 3, 4 |
| 2 | 2 | 1, 3, 4 |
| 3 | 48 | 45, 46, 47 |
| ⋮ | ⋮ | ⋮ |
| n | 47 | 1, 46, 48 |

620     622     624

*FIG. 11*

DETERMINE THE POSITION IN THE IMAGE OF THE PREDETERMINED REFERENCE POINT ON THE MAT — S140

LABEL THE FEATURES IN EACH CLUSTER IN DEPENDENCE UPON THE POSITIONS OF THE FEATURES RELATIVE TO THE REFERENCE POINT — S142

LABEL EACH CLUSTER CONTAINING A RED FEATURE — S144

LABEL EACH CLUSTER FOR WHICH ALL OF THE FEATURES ARE BLACK — S146

FOR EACH FEATURE, STORE THE COORDINATES OF THE FEATURE'S UNIQUE POINT POSITION IN BOTH THE IMAGE AND THE MAT — S148

*FIG. 12*

CREATE AN EMPTY IMAGE
ARRAY COMPRISING N/20 BY
M/20 PIXELS — S160

CONSIDER THE NEXT CLUSTER
OF FEATURES IN THE INPUT
IMAGE — S162

PLOT DIAGONAL LINES FOR THE
CLUSTER — S164

INCREMENT THE PIXEL
COUNTER FOR EACH PIXEL
INTERSECTED BY A LINE — S166

S168

ANOTHER
CLUSTER OF
FEAURES?

SELECT THE PIXEL HAVING THE
HIGHEST PIXEL COUNTER VALUE
AS THE PREDETERMINED
REFERENCE POINT — S170

FIG. 13

FIG. 14a

FIG. 14b

```
CONSIDER THE NEXT CLUSTER
OF FEATURES                    S180

DETERMINE THE CLOSEST
FEATURE TO THE CALCULATED
REFERENCE POINT AND LABEL      S182
THIS AS FEATURE 1 OF THE
CLUSTER

DETERMINE THE FEATURE IN
THE CLUSTER WHICH IS
ADJACENT FEATURE 1 IN A        S184
CLOCKWISE DIRECTION AND
LABEL THIS AS FEATURE 2

DETERMINE THE FEATURE IN
THE CLUSTER WHICH IS
ADJACENT FEATURE 2 IN A        S186
CLOCKWISE DIRECTION AND
LABEL THIS AS FEATURE 3

DETERMINE THE FEATURE IN
THE CLUSTER WHICH IS
ADJACENT FEATURE 3 IN A        S188
CLOCKWISE DIRECTION AND
LABEL THIS AS FEATURE 4
```

S190

ANOTHER CLUSTER OF FEATURES?

YES / NO

*FIG. 15*

## FIG. 16

```
                    ↓
        ┌─────────────────────────┐
        │ FOR EACH LABELLED CLUSTER, │
        │ CALCULATE THE MAPPING      │ ⌐ S200
        │ BETWEEN THE IMAGE AND THE  │
        │ MAT                        │
        └─────────────────────────┘
                    ↓
        ┌─────────────────────────┐
        │ CONSIDER THE NEXT LABELLED │ ⌐ S202
        │ CLUSTER                    │
        └─────────────────────────┘
                    ↓
        ┌─────────────────────────┐
        │ USE THE INVERSE MAPPING AND │
        │ THE KNOWN CONFIGURATION     │
        │ OF THE MAT TO CALCULATE A   │
        │ PREDICTION OF THE POSITION  │ ⌐ S204
        │ IN THE IMAGE OF THE CENTRE  │
        │ OF EACH CLUSTER ADJACENT    │
        │ THE LABELLED CLUSTER        │
        └─────────────────────────┘
                    ↓
        ┌─────────────────────────┐
        │ CONSIDER THE NEXT          │ ⌐ S206
        │ PREDICTED POSITION IN THE  │
        │ IMAGE                      │
        └─────────────────────────┘
                    ↓
                                S208
             IS THE
         PREDICTED POSITION
NO       WITHIN A THRESHOLD
         DISTANCE OF THE
         NEAREST CLUSTER
         CENTRE?
                    ↓ YES
        ┌─────────────────────────┐
        │ LABEL THE NEAREST CLUSTER │ ⌐ S210
        └─────────────────────────┘
                    ↓
                                S212
              ANOTHER
YES          PREDICTED
             POSITION?
                    ↓ NO
                   (A)                      (B)
```

# FIG. 16 (cont)

Ⓒ  Ⓓ                              Ⓔ                                    Ⓕ

```
                              S226
                    IS THE
         NO     PREDICTED POSITION
              WITHIN A THRESHOLD
               DISTANCE OF THE
               NEAREST CLUSTER
                   CENTRE?

                        YES

              LABEL THE NEAREST CLUSTER          S228

                              S230
                     ANY
                 REMAINING
              UNLABELLED CLUSTERS       YES
               WHICH HAVE NOT
                   BEEN
                CONSIDERED?

                        NO
```

*FIG. 16 (cont)*

*FIG. 17*

FOR EACH FEATURE IN THE IMAGE, READ THE COORDINATES OF THE FEATURE'S UNIQUE POINT POSITION IN THE IMAGE AND THE MAT — S250

SET COUNTER = COUNTER + 1 — S252

SELECT THREE IMAGE-MAT CORRESPONDENCES AT RANDOM — S254

CALCULATE CAMERA TRANSFORMATIONS FOR THE IMAGE USING THE SELECTED CORRESPONDENCES — S256

TEST THE CALCULATED TRANSFORMATIONS AGAINST EACH CORRESPONDENCE — S258

S260 — ARE THE TRANSFORMATIONS MORE ACCURATE THAN ANY PREVIOUSLY CALCULATED FOR THE IMAGE? — NO

YES

STORE THE CALCULATED TRANSFORMATIONS AND ASSOCIATED ACCURACY — S262

A

B

*FIG. 18*

Ⓐ        Ⓑ

S264

COUNTER < THRESHOLD
NUMBER?

NO

YES

S266

HAS ACCURACY
OF CALCULATED
TRANSFORMATIONS
INCREASED IN THE PREVIOUS
PREDETERMINED NUMBER
OF ITERATIONS?

YES

NO

FIG. 18 (cont)

*FIG. 19*

READ RGB DATA FOR NEXT PIXEL IN THE BACKGROUND IMAGE — S280

CALCULATE QUANTISED R, G AND B VALUES FOR THE PIXEL — S282

DEFINE A "TRIPLE" VALUE FROM THE QUANTISED VALUES — S284

APPLY HASHING FUNCTION TO THE QUANTISED VALUES TO DEFINE A BIN IN A HASH TABLE AND ADD THE "TRIPLE" VALUE TO THE BIN — S286

S288 — ANOTHER PIXEL IN THE BACKGROUND IMAGE?

YES

NO

CONSIDER NEXT INPUT IMAGE — S290

READ RGB DATA FOR NEXT PIXEL IN THE INPUT IMAGE — S292

CALCULATE QUANTISED R, G AND B VALUES FOR THE PIXEL — S294

(A)  (B)  (C)

Ⓐ      Ⓑ      Ⓒ

DEFINE A "TRIPLE" VALUE FROM THE QUANTISED VALUES — S296

APPLY HASHING FUNCTION TO THE QUANTISED VALUES TO GIVE AN INDEX TO A HASH TABLE BIN — S298

READ THE "TRIPLE" VALUES IN THE INDEXED BIN — S300

IS THE "TRIPLE" VALUE OF THE PIXEL THE SAME AS ANY OF THE "TRIPLE" VALUES IN THE BIN? — S302

YES      NO

PIXEL IS A BACKGROUND PIXEL. SET THE VALUE OF THE PIXEL TO BLACK — S304

PIXEL IS PART OF AN OBJECT. SET THE VALUE OF THE PIXEL TO WHITE — S306

ANOTHER PIXEL IN THE INPUT IMAGE? — S308

YES

NO

DEFINE CIRCULAR MASK — S310

Ⓓ      Ⓕ

*FIG. 19 (cont)*

(D)            (F)

PLACE CENTRE OF MASK ON NEXT PIXEL IN THE BINARY IMAGE  — S312

COUNT THE NUMBER OF BLACK PIXELS AND THE NUMBER OF WHITE PIXELS WITHIN THE MASK  — S314

IS THE NUMBER OF WHITE PIXELS GREATER THAN OR EQUAL TO THE NUMBER OF BLACK PIXELS?  S316

YES      NO

SET THE VALUE OF THE PIXEL TO WHITE  — S318

SET THE VALUE OF THE PIXEL TO BLACK  — S320

ANOTHER PIXEL IN THE BINARY IMAGE?  S322

YES

NO

ANOTHER INPUT IMAGE?  S324

YES

NO

*FIG. 19 (cont)*

FIG. 20

```
              ┌─────────────────────────┐
              │   LABEL EACH CLUSTER    │ ⌐ S400
              │ CONTAINING A RED FEATURE │
              └─────────────────────────┘
                          │
                          ▼
              ┌─────────────────────────┐
              │  LABEL THE FEATURES IN EACH │
              │    IDENTIFIED CLUSTER    │ ⌐ S402
              │  CONTAINING A RED FEATURE │
              └─────────────────────────┘
                          │
                          ▼
              ┌─────────────────────────┐
              │  LABEL EACH CLUSTER FOR │
              │     WHICH ALL OF THE    │ ⌐ S404
              │    FEATURES ARE BLACK   │
              └─────────────────────────┘
                          │
                          ▼
              ┌─────────────────────────┐
              │   LABEL THE FEATURES IN │
              │  EACH LABELLED CLUSTER  │ ⌐ S406
              │   FOR WHICH ALL OF THE  │
              │    FEATURES ARE BLACK   │
              └─────────────────────────┘
                          │
                          ▼
              ┌─────────────────────────┐
              │ FOR EACH FEATURE, STORE THE │
              │    COORDINATES OF THE   │
              │  FEATURE'S UNIQUE POINT │ ⌐ S408
              │ POSITION IN BOTH THE IMAGE │
              │       AND THE MAT       │
              └─────────────────────────┘
                          │
                          ▼
```

*FIG. 21*

## FIG. 22

READ THE MAPPING BETWEEN THE IMAGE AND THE MAT FOR THE NEXT LABELLED CLUSTER CONTAINING A RED FEATURE — S420

USE THE INVERSE MAPPING AND THE KNOWN CONFIGURATION OF THE MAT TO CALCULATE A PREDICTION OF THE POSITION IN THE IMAGE OF THE CENTRE OF EACH FEATURE IN THE CLUSTERS ADJACENT THE LABELLED CLUSTER — S422

CONSIDER THE NEXT PREDICTED POSITION IN THE IMAGE — S424

S426
IS THE PREDICTED POSITION WITHIN A THRESHOLD DISTANCE OF THE NEAREST FEATURE CENTRE?

NO

YES

LABEL THE NEAREST FEATURE — S428

S430
ANOTHER PREDICTED POSITION?

YES

NO

(A)

(B)

# FIG. 22 (cont)

Ⓐ → Ⓑ

**S432** — ANOTHER LABELLED CLUSTER CONTAINING A RED FEATURE? — YES → Ⓑ

NO ↓

**S434** — ANY FEATURES WHICH REMAIN UNLABELLED? — NO → Ⓒ

YES ↓

CONSIDER THE NEXT UNLABELLED FEATURE — **S436**

↓

**S438** — HAS AN ADJACENT CLUSTER BEEN LABELLED BY PREDICTION FROM ANOTHER CLUSTER? — NO → Ⓓ

YES ↓

CALCULATE A MAPPING FOR THE LABELLED ADJACENT CLUSTER BETWEEN THE IMAGE AND THE MAT — **S440**

↓

USE THE INVERSE MAPPING AND THE KNOWN CONFIGURATION OF THE MAT TO CALCULATE A PREDICTION OF THE POSITION IN THE IMAGE OF THE CENTRE OF THE UNLABELLED FEATURE — **S442**

↓

Ⓔ        Ⓕ

C · D · E · F

S444

IS THE PREDICTED POSITION WITHIN A THRESHOLD DISTANCE OF THE NEAREST FEATURE CENTRE?

NO

YES

LABEL THE NEAREST FEATURE — S446

S448

ANY REMAINING UNLABELLED FEATURES WHICH HAVE NOT BEEN CONSIDERED?

YES

NO

*FIG. 22 (cont)*

FIG. 23

```
                    ┌─────────────────────────┐
                    │  GENERATE BINARY IMAGE   │────── S500
                    └─────────────────────────┘
                                 │
                                 ▼
                    ┌─────────────────────────┐
                    │    FIND GROUPS COMPRISING │
                    │  CONNECTED PIXELS HAVING  │────── S502
                    │   VALUE "1" IN THE IMAGE  │
                    └─────────────────────────┘
                                 │
                                 ▼
                    ┌─────────────────────────┐
                    │    DISCARD EACH GROUP    │
                    │   CONTAINING LESS THAN   │────── S504
                    │ THRESHOLD NUMBER OF PIXELS│
                    └─────────────────────────┘
                                 │
                                 ▼
                    ┌─────────────────────────┐
                    │  FOR EACH GROUP OF PIXELS │
                    │  WHICH REMAINS, STORE THE │
                    │    NUMBER OF PIXELS IN THE │────── S506
                    │          GROUPS          │
                    └─────────────────────────┘
                                 │
                                 ▼
                    ┌─────────────────────────┐
                    │   FOR EACH GROUP OF PIXELS,│
                    │   CALCULATE AND STORE THE │
                    │ UNIQUE POINT POSITION IN THE│────── S508
                    │  IMAGE DEFINED BY THE GROUP │
                    └─────────────────────────┘
                                 │
                                 ▼
                    ┌─────────────────────────┐
                    │   FOR EACH GROUP OF PIXELS,│
                    │  DETERMINE AND STORE THE  │────── S510
                    │    COLOUR OF THE GROUP    │
                    └─────────────────────────┘
                                 │
                                 ▼
                    ┌─────────────────────────┐
                    │   FOR EACH GROUP OF PIXELS,│
                    │  DETERMINE THE NUMBER OF  │────── S512
                    │     PERIMETER PIXELS      │
                    └─────────────────────────┘
                                 │
                                 ▼
```

*FIG. 24*

## FIG. 25

DETERMINE THE POSITION IN THE IMAGE OF THE PREDETERMINED REFERENCE POINT ON THE MAT — S520

LABEL THE FEATURES IN EACH CLUSTER IN DEPENDENCE UPON THE POSITIONS OF THE FEATURES RELATIVE TO THE REFERENCE POINT — S522

SELECT NEXT UNLABELLED CLUSTER OF FEATURES IN THE IMAGE AND ANY CLUSTER OF FEATURES ON THE MAT — S524

CALCULATE THE MAPPING BETWEEN THE IMAGE AND THE MAT — S526

USE THE INVERSE MAPPING AND THE KNOWN CONFIGURATION OF THE MAT TO CALCULATE A PREDICTION OF THE POSITIONS IN THE IMAGE OF THE CENTRE OF THE ADJACENT CLUSTER AND THE CENTRE OF THE ADJACENT FEATURE — S528

DETERMINE WHICH FEATURE IS NEAREST TO THE FIRST PREDICTED CENTRE AND WHICH FEATURE IS NEAREST TO THE SECOND PREDICTED CENTRE IN THE INPUT IMAGE — S530

CONSIDER THE NEXT DETERMINED FEATURE — S532

(A)　　　　(B)　　　　(C)

Ⓐ          Ⓑ          Ⓒ

S534

**IS IT PART OF A CLUSTER OF FEATURES?**

NO      YES

NO → **LABEL THE FEATURE BECAUSE IT IS UNIQUE** — S536

**CONNECT THE CENTRE OF THE UNLABELLED CLUSTER IN THE IMAGE WITH THE PREDETERMINED REFERENCE POINT IN THE IMAGE** — S538

**LABEL THE SELECTED UNLABELLED CLUSTER OF FEATURES** — S540

S542

**IS IT PART OF A LABELLED CLUSTER OF FEATURES?**

YES      NO

S544

**LABEL THE SELECTED UNLABELLED CLUSTER OF FEATURES**

S546

**ANOTHER DETERMINED FEATURE?**

NO      YES

S548

YES → **ANOTHER UNLABELLED CLUSTER?**

NO

**FOR EACH FEATURE, STORE THE COORDINATES OF THE FEATURE'S UNIQUE POINT POSITION IN BOTH THE IMAGE AND THE MAT** — S550

*FIG. 25 (cont)*

READ THE COLOUR OF THE FEATURE — S560

IS $\frac{(PERIMETER)^2}{AREA} > 24?$ — S562

YES

NO

FEATURE IS A CROSS — S564

FEATURE IS A CIRCLE — S566

LABEL FEATURE — S568

*FIG. 26*

FIG. 27

920

*FIG. 28*

CONSIDER THE NEXT
UNLABELLED CLUSTER OF
FEATURES IN THE INPUT IMAGE — S600

DETERMINE THE NUMBER OF
RED FEATURES IN THE CLUSTER — S602

S604

IS THE
NUMBER OF RED
FEATURES
1 OR 4?

YES NO

LABEL THE CLUSTER — S606

S608

IS THE
NUMBER OF RED
FEATURES
2?

YES NO

CONNECT THE TWO RED
FEATURES WITH A
STRAIGHT LINE — S610

CONNECT THE TWO BLACK
FEATURES WITH A
STRAIGHT LINE

S614

LABEL THE CLUSTER IN
DEPENDENCE UPON THE
NUMBER OF BLACK
FEATURES IN THE
CLUSTER ON EACH SIDE
OF THE LINE — S612

LABEL THE CLUSTER IN
DEPENDENCE UPON THE
NUMBER OF RED
FEATURES IN THE
CLUSTER ON EACH SIDE
OF THE LINE

S616

Ⓐ Ⓑ

Ⓐ  Ⓑ

S618

YES ← ANOTHER UNLABELLED CLUSTER OF FEATURES?

NO

LABEL THE FEATURES IN EACH LABELLED CLUSTER — S620

FOR EACH FEATURE, STORE THE COORDINATES OF THE FEATURE'S UNIQUE POINT POSITION IN BOTH THE IMAGE AND THE MAT — S622

*FIG. 28 (cont)*

# FIG. 29

CONSIDER THE NEXT UNLABELLED CLUSTER OF FEATURES IN THE INPUT IMAGE — S700

DETERMINE THE NUMBER OF RED FEATURES, THE NUMBER OF GREEN FEATURES AND THE NUMBER OF BLACK FEATURES IN THE CLUSTER — S702

LABEL THE CLUSTER — S704

ANOTHER UNLABELLED CLUSTER OF FEATURES? — S706

YES

NO

LABEL THE FEATURES IN EACH LABELLED CLUSTER — S708

FOR EACH FEATURE, STORE THE COORDINATES OF THE FEATURE'S UNIQUE POINT POSITION IN BOTH THE IMAGE AND THE MAT — S710

*FIG. 30*

FIG. 31

*FIG. 32*

```
┌─────────────────────────────────┐
│  CONSIDER THE NEXT UNPROCESSED   │——— S800
│     FEATURE "i" IN THE IMAGE     │
└─────────────────────────────────┘
                 │
                 ▼
┌─────────────────────────────────┐
│  CONSIDER THE NEXT FEATURE "j" (j ≠ i) IN │——— S802
│            THE IMAGE             │
└─────────────────────────────────┘
                 │
                 ▼
┌─────────────────────────────────┐
│  DETERMINE THE NUMBER OF FEATURES │
│    LYING IN THE IMAGE BETWEEN     │
│  FEATURES i AND j AND LYING WITHIN A │——— S804
│     PREDETERMINED TOLERANCE      │
│  DISTANCE FROM THE STRAIGHT LINE │
│     CONNECTING THE CENTRES OF    │
│          FEATURES i AND j        │
└─────────────────────────────────┘
                 │
                 ▼
              ╱╲  S806
            ╱    ╲
    NO    ╱  IS THE ╲
◄─────────  NUMBER OF  ───
          ╲ FEATURES 2? ╱
            ╲        ╱
              ╲    ╱
                ╲╱
                 │ YES
                 ▼
┌─────────────────────────────────┐
│  CALCULATE THE CROSS-RATIO OF THE │——— S808
│          FOUR FEATURES           │
└─────────────────────────────────┘
                 │
                 ▼
┌─────────────────────────────────┐
│  DETERMINE THE ERROR BETWEEN THE │
│  CALCULATED CROSS-RATIO AND THE  │——— S810
│     THEORETICAL CROSS-RATIO      │
└─────────────────────────────────┘
                 │
                 ▼
              ╱╲  S812
            ╱    ╲
          ╱ IS THE ╲
   NO   ╱ ERROR LESS THAN A ╲
◄─────  PREDETERMINED  ───
        ╲   THRESHOLD   ╱
          ╲ TOLERANCE? ╱
            ╲        ╱
              ╲    ╱
                ╲╱
                 │ YES
                 ▼
     (A)        (B)        (C)    (D)
```

Ⓐ      Ⓑ      Ⓒ   Ⓓ

S814

ARE ANY
OF THE FOUR FEATURES
ALREADY STORED
AS PART OF ANOTHER
CLUSTER?

NO

YES

S816

IS THE
ERROR FOR THE CURRENT
CLUSTER LESS THAN THE ERROR
FOR THE STORED
CLUSTER?

NO

YES

DISCARD THE STORED CLUSTER — S818

STORE THE CURRENT CLUSTER AND
ASSOCIATED ERROR — S820

S822

ANOTHER
FEATURE j IN THE
IMAGE?

YES

NO

S824

ANOTHER
FEATURE i IN THE
IMAGE?

YES

NO

*FIG. 32 (cont)*

FIG. 33a

FIG. 33b

*FIG. 34*

DETERMINE THE DISTANCE IN THE IMAGE
BETWEEN THE CENTRE OF FEATURE i AND
THE CENTRE OF FEATURE j — S840

CALCULATE A RADIUS FOR CIRCLES TO
PASS THROUGH THE CENTRES OF
FEATURES i AND j IN DEPENDENCE UPON
THE CALCULATE DISTANCE — S842

DETERMINE THE MID-POINT OF THE
STRAIGHT LINE CONNECTING THE CENTRES
OF FEATURES i AND j — S844

DETERMINE THE POSITION OF THE CENTRE
OF EACH CIRCLE — S846

SET COUNTER TO ZERO — S848

CONSIDER THE NEXT FEATURE "k"
(k ≠ i and k ≠ j) IN THE IMAGE — S850

S852

IS THE
DISTANCE BETWEEN THE
CENTRE OF FEATURE k AND THE
CENTRE OF THE FIRST CIRCLE
LESS THAN THE RADIUS OF
THE CIRCLE?

NO

YES

Ⓐ   Ⓑ   Ⓒ

Ⓐ          Ⓑ                     Ⓒ

S854

IS THE DISTANCE BETWEEN THE CENTRE OF FEATURE k AND THE CENTRE OF THE SECOND CIRCLE LESS THAN THE RADIUS OF THE CIRCLE?

NO

YES

S856

IS THE SHORTEST DISTANCE FROM THE CENTRE OF FEATURE k TO THE STRAIGHT LINE JOINING THE CENTRES OF FEATURES i AND j LESS THAN A PREDETERMINED TOLERANCE DISTANCE?

NO

YES

INCREMENT THE COUNTER BY ONE — S858

S860

ANOTHER FEATURE k IN THE IMAGE?

YES

NO

READ COUNTER VALUE — S862

*FIG. 34 (cont)*

## FIG. 35

DETERMINE THE POSITION IN THE IMAGE OF THE PREDETERMINED REFERENCE POINT ON THE MAT — S870

DETERMINE THE RADIAL ORDER OF THE FEATURES IN EACH CLUSTER FROM THE PREDETERMINED REFERENCE POINT — S872

CONSIDER THE NEXT CLUSTER OF FEATURES — S874

CONSIDER THE NEXT ADJACENT PAIR OF FEATURES — S876

S878

IS AREA OF ONE FEATURE GREATER THAN 1.5 TIMES THE AREA OF THE OTHER FEATURE?

NO

YES

FLAG THE FEATURES AS BEING OF THE SAME SIZE — S880

S882 — CLASSIFY THE FEATURES AS LARGE AND SMALL

S884 — CLASSIFY ANY PREVIOUS FEATURES IN THE CLUSTER NOT ALREADY CLASSIFIED AS LARGE OR SMALL

Ⓐ

Ⓑ   Ⓒ

Ⓐ       Ⓑ   Ⓒ

S886

ANOTHER
ADJACENT PAIR OF
FEATURES?

YES

NO

LABEL THE CLUSTER — S888

S890

ANOTHER
CLUSTER?

YES

NO

FOR EACH FEATURE, STORE THE
COORDINATES OF THE FEATURE'S UNIQUE
POINT POSITION IN BOTH THE IMAGE AND
THE MAT — S892

*FIG. 35 (cont)*

FIG. 36

FIG. 37

*FIG. 38*

```
                    ┌─────────────────────────────────┐
                    │     GENERATE BINARY IMAGE       │──── S900
                    └─────────────────────────────────┘
                                    │
                                    ▼
                    ┌─────────────────────────────────┐
                    │  FIND GROUPS COMPRISING CONNECTED│
                    │  PIXELS HAVING VALUE 1 IN THE IMAGE │──── S902
                    └─────────────────────────────────┘
                                    │
                                    ▼
                    ┌─────────────────────────────────┐
                    │  DISCARD EACH GROUP CONTAINING LESS │
                    │  THAN THRESHOLD NUMBER OF PIXELS │──── S904
                    └─────────────────────────────────┘
                                    │
                                    ▼
                    ┌─────────────────────────────────┐
                    │  ERODE EACH REMAINING GROUP OF PIXELS │
                    │    TO GIVE CANDIDATE CLUSTERS OF │──── S906
                    │        SEPARATE FEATURES        │
                    └─────────────────────────────────┘
                                    │
                                    ▼
                    ┌─────────────────────────────────┐
                    │  FOR EACH GROUP OF PIXELS WHICH MAKE │
                    │  UP A FEATURE, DETERMINE AND STORE │
                    │   THE NUMBER OF PIXELS IN THE GROUP, │
                    │  THE UNIQUE POINT POSITION IN THE IMAGE │──── S908
                    │  DEFINED BY THE GROUP, AND THE COLOUR │
                    │  OF THE PIXEL IN THE IMAGE CLOSEST TO │
                    │       THE UNIQUE POINT POSITION  │
                    └─────────────────────────────────┘
                                    │
                                    ▼
                    ┌─────────────────────────────────┐
                    │  CONSIDER THE NEXT CANDIDATE CLUSTER │
                    │          OF FEATURES            │──── S910
                    └─────────────────────────────────┘
                                    │
                                    ▼
                              ◇ S912
                        ARE
                   THERE 3, AND ONLY 3,    ──NO──►
                     FEATURES IN THE
                         CLUSTER?
                              │
                            YES
                              │
                              ▼
                             (A)        (B)    (C)
```

112

(A)   (B)   (C)

S914

YES   IS THE
COLOUR OF EACH FEATURE
IN THE CLUSTER
THE SAME?

NO

DISCARD THE CLUSTER   S916

S918

ANOTHER
CANDIDATE   YES
CLUSTER?

NO

FIG. 38 (cont)

```
┌─────────────────────────────────┐
│   CONSIDER NEXT CLUSTER OF       │─── S930
│   FEATURES                       │
└─────────────────────────────────┘
              │
              ▼
┌─────────────────────────────────┐
│   DETERMINE DISTANCE BETWEEN     │─── S932
│   EACH PAIR OF FEATURES          │
└─────────────────────────────────┘
              │
              ▼
┌─────────────────────────────────┐
│   READ THE COLOUR AND SIZE OF    │─── S934
│   THE END FEATURES               │
└─────────────────────────────────┘
              │
              ▼
┌─────────────────────────────────┐
│   READ THE COLOUR AND SIZE OF    │─── S936
│   THE CENTRE FEATURE             │
└─────────────────────────────────┘
              │
              ▼
┌─────────────────────────────────┐
│   LABEL THE CLUSTER AND THE      │─── S938
│   FEATURES THEREIN               │
└─────────────────────────────────┘
              │
              ▼
┌─────────────────────────────────┐
│   FOR EACH FEATURE, STORE THE    │─── S940
│   COORDINATES OF THE FEATURE'S   │
│   UNIQUE POINT POSITION IN BOTH  │
│   THE IMAGE AND THE MAT          │
└─────────────────────────────────┘
              │
              ▼
          S942
        ANOTHER          YES
        CLUSTER?  ──────────►
              │
              │ NO
              ▼
```

## FIG. 39

FIG. 40

*FIG. 41*

GENERATE BINARY IMAGE — S960

FIND GROUPS COMPRISING CONNECTED PIXELS HAVING VALUE 1 IN THE IMAGE — S962

DISCARD EACH GROUP CONTAINING LESS THAN THRESHOLD NUMBER OF PIXELS — S964

CONSIDER NEXT GROUP OF PIXELS REPRESENTING A COLOURED AREA — S966

CONSIDER THE PORTION OF THE BINARY IMAGE ENCLOSED BY THE BOUNDARY OF THE GROUP — S968

FIND GROUPS COMPRISING CONNECTED PIXELS IN THE IMAGE PORTION HAVING VALUE 0 — S970

DISCARD EACH GROUP CONTAINING LESS THAN THRESHOLD NUMBER OF PIXELS — S972

FOR EACH GROUP OF PIXELS WHICH REMAINS, DETERMINE AND STORE THE NUMBER OF PIXELS IN THE GROUP AND THE UNIQUE POINT POSITION IN THE IMAGE DEFINED BY THE GROUP — S974

(A)

(B)

Ⓐ                                                    Ⓑ

S976

ARE
THERE 3, AND ONLY 3,          NO
FEATURES?

YES

S978

ARE
YES          THERE 2, AND ONLY 2,
SIZES OF
FEATURE?

NO

DISCARD THE CLUSTER          S980

RETAIN CLUSTER AND STORE THE COLOUR
OF THE IMAGE PORTION IN WHICH THE          S982
FEATURES LIE

S984

ANOTHER
GROUP OF PIXELS
REPRESENTING A          YES
COLOURED
AREA?

NO

*FIG. 41 (cont)*

## FIG. 42

CONSIDER NEXT CLUSTER OF FEATURES — S1000

READ THE COLOUR OF THE IMAGE PORTION IN WHICH THE FEATURES LIE — S1002

DETERMINE THE DISTANCE BETWEEN EACH PAIR OF FEATURES — S1004

READ THE SIZE OF THE END FEATURES — S1006

READ THE SIZE OF THE CENTRE FEATURE — S1008

LABEL THE CLUSTER AND THE FEATURE'S THEREIN — S1010

FOR EACH FEATURE, STORE THE COORDINATES OF THE FEATURE'S UNIQUE POINT POSITION IN BOTH THE IMAGE AND THE MAT — S1012

S1014

ANOTHER CLUSTER? — YES

NO

FIG. 43

DETERMINE THE POSITION IN THE IMAGE OF THE PREDETERMINED REFERENCE POINT ON THE MAT — S1100

LABEL THE FEATURES IN EACH CLUSTER IN DEPENDENCE UPON THE POSITIONS OF THE FEATURES RELATIVE TO THE REFERENCE POINT — S1102

DETERMINE THE RELATIVE ORDER OF THE CLUSTERS — S1104

SELECT NEXT CLUSTER ON THE MAT TO BE THE REFERENCE CLUSTER — S1106

LABEL EACH FEATURE — S1108

RESET COUNTER TO ZERO — S1110

SET COUNTER = COUNTER + 1 — S1112

SELECT THREE IMAGE-MAT CORRESPONDENCES AT RANDOM — S1114

(A)          (B)          (C)

*FIG. 44*

Ⓐ        Ⓑ        Ⓒ

CALCULATE CAMERA TRANSFORMATIONS FOR THE IMAGE USING THE SELECTED CORRESPONDENCES — S1116

TEST THE CALCULATED TRANSFORMATIONS AGAINST EACH CORRESPONDENCE — S1118

S1120
ARE THE TRANSFORMATIONS MORE ACCURATE THAN ANY PREVIOUSLY CALCULATED FOR THE IMAGE? — NO

YES

STORE THE CALCULATED TRANSFORMATIONS AND ASSOCIATED ACCURACY — S1122

S1124
COUNTER < THRESHOLD NUMBER? — NO

YES

S1126
HAS ACCURACY OF CALCULATED TRANSFORMATIONS INCREASED IN THE PREVIOUS PREDETERMINED NUMBER OF ITERATIONS? — YES

NO

S1128
ANOTHER CLUSTER ON THE MAT? — YES

NO

*FIG. 44 (cont)*

FIG. 45

# FIG. 46

PLOT EACH FEATURE AS A POINT IN R-G-B COLOUR SPACE — S1200

FORM CANDIDATE CLUSTERS OF FEATURES IN DEPENDENCE UPON THE FEATURE POSITIONS IN R-G-B COLOUR SPACE — S1202

CONSIDER THE NEXT CANDIDATE CLUSTER — S1204

CONSIDER THE TWO FEATURES IN THE CLUSTER HAVING THE GREATEST DISTANCE IN THE IMAGE THEREBETWEEN — S1206

DETERMINE THE NUMBER OF FEATURES LYING IN THE IMAGE BETWEEN THE TWO FEATURES AND LYING WITHIN A PREDETERMINED TOLERANCE DISTANCE FROM THE STRAIGHT LINE CONNECTING THE CENTRES OF THE TWO FEATURES — S1208

S1210

IS THE NUMBER OF FEATURES 2?

NO

YES

CALCULATE THE CROSS-RATIO OF THE FOUR FEATURES — S1212

DETERMINE THE ERROR BETWEEN THE CALCULATED CROSS-RATIO AND THE THEORETICAL CROSS-RATIO — S1214

(A)   (B)   (C)

Ⓐ          Ⓑ                                                    Ⓒ

S1216

IS THE
ERROR LESS THAN A
NO ← PREDETERMINED THRESHOLD
TOLERANCE?

YES

S1218

ARE ANY
OF THE FOUR FEATURES
ALREADY STORED AS                    NO
PART OF ANOTHER
CLUSTER?

YES

S1220

IS THE
ERROR FOR THE
NO ← CURRENT CLUSTER LESS
THAN THE ERROR FOR THE
STORED
CLUSTER?

YES

DISCARD THE STORED CLUSTER          S1222

STORE THE CURRENT CLUSTER AND        S1224
ASSOCIATED ERROR

S1226

ANOTHER                    YES
CANDIDATE CLUSTER?

NO

*FIG. 46 (cont)*

FIG. 47a

FIG. 47b

```
       ┌─────────────────────────────┐
       │  CONSIDER THE NEXT CLUSTER OF │ ─── S1240
       │         FEATURES              │
       └─────────────────────────────┘
                      │
       ┌─────────────────────────────┐
       │ READ THE COLOUR OF THE FEATURES AND │ ─── S1242
       │    THE SIZES OF THE FEATURES  │
       └─────────────────────────────┘
                      │
       ┌─────────────────────────────┐
       │   LABEL THE SMALLEST FEATURE  │ ─── S1244
       └─────────────────────────────┘
                      │
       ┌─────────────────────────────┐
       │ LABEL EACH OF THE LARGER FEATURES IN │ ─── S1246
       │   DEPENDENCE UPON THE RELATIVE │
       │ DISTANCES FROM THE SMALLEST FEATURE │
       └─────────────────────────────┘
                      │
       ┌─────────────────────────────┐
       │    FOR EACH FEATURE, STORE THE │
       │ COORDINATES OF THE FEATURE'S UNIQUE │ ─── S1248
       │ POINT POSITION IN BOTH THE IMAGE AND │
       │           THE MAT              │
       └─────────────────────────────┘
                      │
                                     S1250
       ┌─────────────────────────────┐
  YES  <        ANOTHER               >
       <        CLUSTER?               >
       └─────────────────────────────┘
                      │ NO
```

*FIG. 48*

FIG. 49

FIG. 50

FIG. 51

FIG. 52a

## FIG. 52b

FIG. 53

READ DATA FOR NEXT INPUT IMAGE — S1300

FIND FEATURES IN THE IMAGE — S1302

FIND CLUSTERS OF FEATURES — S1304

IDENTIFY THE FEATURES — S1306

S1308

YES — ANOTHER INPUT IMAGE?

NO

CALCULATE THE RELATIVE POSITION AND ORIENTATION OF THE CAMERA FOR EACH INPUT IMAGE USING THE IDENTIFIED FEATURES AS MATCHING FEATURES IN THE INPUT IMAGES — S1310

*FIG. 54*